(19) **Europäisches Patentamt**
**European Patent Office**
**Office européen des brevets**

(11) **EP 2 763 024 A2**

(12) **EUROPEAN PATENT APPLICATION**

(43) Date of publication:
06.08.2014 Bulletin 2014/32

(51) Int Cl.:
*G06F 3/06* (2006.01)  *G11B 15/68* (2006.01)

(21) Application number: **14150834.1**

(22) Date of filing: **10.01.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.01.2013 JP 2013017840**

(71) Applicant: **Kabushiki Kaisha Toshiba
Tokyo 105-8001 (JP)**

(72) Inventors:
• **Kuroda, Sumio
Tokyo, 105-8001 (JP)**

• **Shimomura, Kazuhito
Tokyo, 105-8001 (JP)**
• **Suzuki, Kenichiro
Tokyo, 105-8001 (JP)**
• **Sakai, Yuji
Tokyo, 105-8001 (JP)**
• **Ohsawa, Hideaki
Tokyo, 105-8001 (JP)**
• **Ogi, Kouichi
Tokyo, 105-8001 (JP)**

(74) Representative: **Henkel, Breuer & Partner
Patentanwälte
Maximiliansplatz 21
80333 München (DE)**

(54) **Method for processing information, information processing apparatus, and storage medium**

(57)     According to one embodiment, an information processing method executed on an information processing apparatus configured to process recording data, the method characterized by including dividing the recording data into a plurality of recording data blocks, recording management information on corresponding first management regions in n storage media, the n storage media comprising a first storage medium to an nth storage medium, wherein n comprises an integer equal to or larger than 2, and recording the recording data blocks on corresponding second management regions of the n storage media by a controller configured to control the information processing apparatus, wherein the management information recorded on the n first management regions of the n storage media comprises medium peculiar information of the n storage media and cartridge peculiar information of a cartridge configured to store the n storage media.

F I G. 29

**EP 2 763 024 A2**

## Description

Embodiments described herein relates generally to a method for processing information, an information processing apparatus and a non-transitory computer readable medium.

There are known recording systems which divide recording data to generate a plurality of divided recording data items, and separately record the divided recording data items in a plurality of information storage media. There are also known recording systems which generate parity data from a plurality of divided recording data items, separately record the divided recording data items in a plurality of information storage media, and record the parity data in another information storage medium.

As described above, although there are known recording systems which hold recording data in a plurality of information storage media, the information storage media should be dealt with as a set in these cases.

The object of the present invention is to provide a method for processing information, an information processing apparatus, and a storage medium, to deal with a plurality of information storage media as a set.

A general architecture that implements the various features of the embodiments will now be described with reference to the drawings. The drawings and the associated descriptions are provided to illustrate the embodiments and not to limit the scope of the invention.

FIG. 1A is an exemplary diagram showing an example of a data format of a parity-applied disk, according to an embodiment;

FIG. 1B is an exemplary diagram showing an example of a data format of a non-parity-applied disk, according to an embodiment;

FIG. 1C is an exemplary diagram showing an example of a data format of a parity-applied disk, according to an embodiment;

FIG. 1D is an exemplary diagram showing an example of a data format of a parity-applied disk, according to an embodiment;

FIG. 1E is an exemplary diagram showing an example of a data format of a non-parity-applied disk, according to an embodiment;

FIG. 1F is an exemplary diagram showing an example of a data format system of a parity-applied disk for transmitting and receiving, according to an embodiment;

FIG. 1G is an exemplary diagram showing an example of a data format system of a parity-applied disk for transmitting and receiving, according to an embodiment;

FIG. 1H is an exemplary diagram showing an example of a data format system of a parity-applied disk for transmitting and receiving, according to an embodiment;

FIG. 1I is an exemplary diagram showing an example of a data format system of a parity-applied disk for transmitting and receiving, according to an embodiment;

FIG. 1J is an exemplary diagram showing an example of a data format system of a non-parity-applied disk for transmitting and receiving, according to an embodiment;

FIG. 1K is an exemplary diagram showing an example of a data format system of a parity-applied disk for transmitting and receiving, according to an embodiment;

FIG. 1L is an exemplary diagram showing an example of a data format system of a non-parity-applied disk for transmitting and receiving, according to an embodiment;

FIG. 1M is an exemplary diagram showing an example of a data format system of a parity-applied disk for transmitting and receiving, according to an embodiment;

FIG. 2 is an exemplary diagram showing an example of a data format of a header, according to an embodiment;

FIG. 3A is an exemplary diagram showing an example of a recording order of non-parity-applied data, according to an embodiment;

FIG. 3B is an exemplary diagram showing an example of a recording order of non-parity-applied data, according to an embodiment;

FIG. 4 is an exemplary diagram showing an example of a position of recording for Info data, according to an embodiment;

FIG. 5 is an exemplary diagram showing an example of a format for Info data, according to an embodiment;

FIG. 6 is an exemplary diagram showing an example of a schematic configuration of an information processing system including a host and a system, according to an embodiment;

FIG. 7 is an exemplary diagram showing an example of a method for processing information, according to an embodiment;

FIG. 8 is an exemplary diagram showing an example of a position of recording divided recording data items, according to an embodiment;

FIG. 9 is an exemplary diagram showing an example of a position of recording divided recording data items, according to an embodiment;

FIG. 10 is an exemplary diagram showing an example of a playback data, according to an embodiment;

FIG. 11 is an exemplary diagram showing an example of a method for processing information, according to an embodiment;

FIG. 12 is an exemplary diagram showing an example of a parity calculation processing, according to an embodiment;

FIG. 13 is an exemplary diagram showing an example of recording of parity and temporal parity, according to an embodiment;

FIG. 14 is an exemplary diagram showing an example of an eject processing, according to an embodiment;

FIG. 15 is an exemplary diagram showing an example of playback processing, according to an embodiment;

FIG. 16 is an exemplary diagram showing an example of recording of parity in the case where disk 4 is recorded, according to an embodiment;

FIG. 17A is an exemplary diagram showing an example of a non-parity-applied data format, according to an embodiment;

FIG. 17B is an exemplary diagram showing an example of a parity-applied data format, according to an embodiment;

FIG. 18A is an exemplary diagram showing an example of a non-parity-applied data format, according to an embodiment;

FIG. 18B is an exemplary diagram showing an example of a parity-applied data format, according to an embodiment;

FIG. 19 is an exemplary diagram showing an example of a data format for a header, according to an embodiment;

FIG. 20 is an exemplary diagram showing an example of a cassette applied to a storage device, according to an embodiment;

FIG. 21 is an exemplary diagram showing an example of a state in which an upper cover of the cassette applied to the storage device is opened, according to an embodiment;

FIG. 22 is an exemplary diagram showing an example of a process for medium processing, according to an embodiment;

FIG. 23 is an exemplary diagram showing an example of a process for medium processing, according to an embodiment;

FIG. 24 is an exemplary diagram showing an example of a process for medium processing, according to an embodiment;

FIG. 25 is an exemplary diagram showing an example of a data format for an RFID, according to an embodiment;

FIG. 26 is an exemplary diagram showing an example (first example) of a cassette ID and a disc ID recorded in the RFID, according to an embodiment;

FIG. 27 is an exemplary diagram showing another example (second example) of the cassette ID and the disc ID stored in the RFID, according to an embodiment;

FIG. 28 is an exemplary diagram showing an example of recording processing in an information processing system, according to an embodiment;

FIG. 29 is an exemplary diagram showing an example of a schematic configuration of the information processing system, according to an embodiment;

FIG. 30 is an exemplary diagram showing an example of division recording performed by the information processing system, according to an embodiment;

FIG. 31 is an exemplary diagram showing an example of a data format, according to an embodiment;

FIG. 32 is an exemplary diagram showing an example of a format for Info data, according to an embodiment;

FIG. 33 is an exemplary diagram showing an example of a data format for an RFID, according to an embodiment;

FIG. 34 is an exemplary diagram showing an example of a data format for a medium ID (one of media IDs), according to an embodiment;

FIG. 35 is an exemplary diagram showing an example of a recording area structure for non-parity disk type, according to an embodiment;

FIG. 36 is an exemplary diagram showing an example of header structure, according to an embodiment;

FIG. 37 is an exemplary diagram showing an example of a media ID structure, according to an embodiment;

FIG. 38 is an exemplary diagram showing an example of an Info area structure for non-parity disk type, according to an embodiment;

FIG. 39 is an exemplary diagram showing an example of an Info data structure for non-parity disk type, according to an embodiment;

FIG. 40 is an exemplary diagram showing an example of a recording order of divided recording data for non-parity disk type, according to an embodiment;

FIGS. 41A and 41B are exemplary diagrams each showing an example of a recording area for parity disk type, according to an embodiment;

FIG. 42 is an exemplary diagram showing an example of a header structure, according to an embodiment;

FIG. 43 is an exemplary diagram showing an example of a media ID structure, according to an embodiment;

FIG. 44 is an exemplary diagram showing an example of an Info area structure for parity disk type, according to an embodiment;

FIG. 45 is an exemplary diagram showing an example of an Info data structure for parity disk type, according to an embodiment;

FIG. 46 is an exemplary diagram showing an example of a recording order of divided recording data for parity disk type, according to an embodiment;

FIG. 47 is an exemplary diagram showing an example of a block diagram of system configuration, according to an embodiment;

FIG. 48 is an exemplary diagram showing an example of data recording operations for non-parity disk type, according to an embodiment;

FIG. 49 is an exemplary diagram showing an example of an example of recording allocation on each of disks, according to an embodiment;

FIG. 50 is an exemplary diagram showing an example of an example of data composition, according to an embodiment;

FIG. 51 is an exemplary diagram showing an example of data recording operations for parity disk type, according to an embodiment;

FIG. 52 is an exemplary diagram showing an example of an example of recording allocation on each of disks, according to an embodiment;

FIG. 53 is an exemplary diagram showing an example of a parity recording process, according to an embodiment;

FIG. 54 is an exemplary diagram showing an example of a parity and temporal parity when the next logical cluster exists, according to an embodiment;

FIG. 55 is an exemplary diagram showing an example of a parity and temporal parity when the next logical cluster does not exist, according to an embodiment;

FIG. 56 is an exemplary diagram showing an example of a data reproduction process for the parity disk type, according to an embodiment;

FIG. 57 is an exemplary diagram showing an example of a parity statement when the last recorded disk is Disk4, according to an embodiment; and

FIG. 58 is an exemplary diagram showing an example of an example of data composition, according to an embodiment.

Various embodiments will be described hereinafter with reference to the accompanying drawings.

In general, according to one embodiment, an information processing method executed on an information processing apparatus configured to process recording data, the method characterized by comprising:

dividing the recording data into a plurality of recording data blocks;

recording management information on corresponding first management areas in n storage media, the n storage media comprising a first storage medium to an nth storage medium, wherein n comprises an integer equal to or larger than 2; and

recording the recording data blocks on corresponding second management areas of the n storage media by a controller configured to control the information processing apparatus,

wherein the management information recorded on the n first management areas of the n storage media comprises medium peculiar information of the n storage media and cartridge peculiar information of a cartridge configured to store the n storage media.

Embodiments will now be described hereinafter in detail with reference to the accompanying drawings.

Embodiments are specifies optical disk formats that provide parallel read/write methods with written data divided among 5 disks. Embodiments are two types of optical disk formats:

a) Non-parity disk type: This type allows for read/write operations on all user data divided among 5 disks; and

b) Parity disk type: This type allows for read/write operations on all user data divided among 4 disks and for read/write operations on parity data from/to 1 disk.

Embodiments following are indispensable for the application of this document. For dated references, only the edition cited applies. For undated references, the latest edition of the referenced document (including any amendments) applies.

ECAM-94 8-Bit Single Byte Coded Graphic Character Sets - Latin Alphabet No.1, (ISO/IEC 8859-1, -2, -3 and -4), 2nd edition (June 1986).

ECMA-167 Volume and File Structure for Write-Once and Rewritable Media using Non-Sequential Recording for Information Interchange, 3rd edition (June 1997).

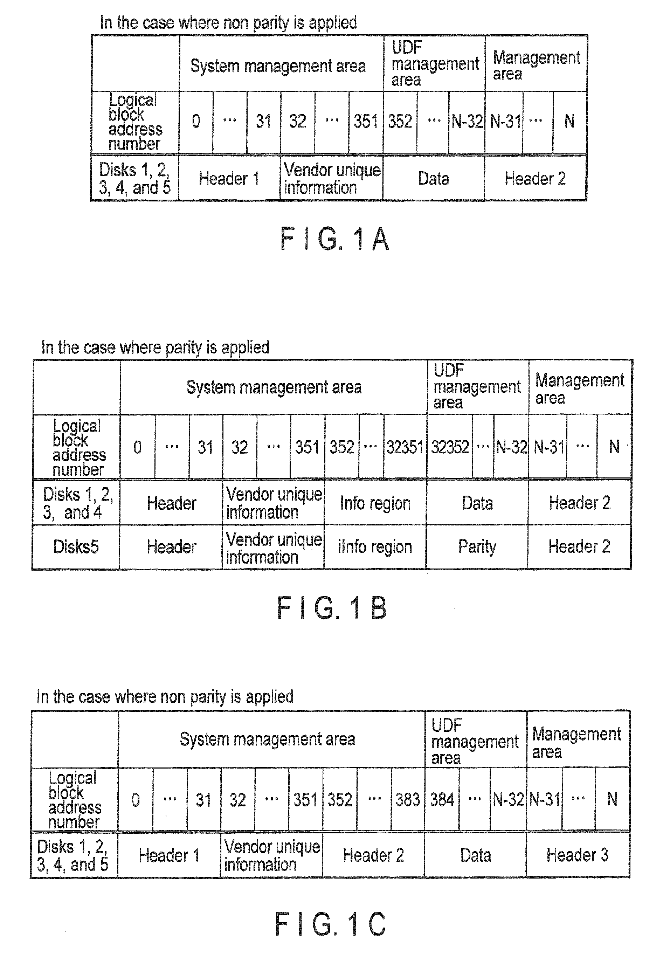

FIGS. 1A-1M illustrates an example of a transmission/reception system, each of, to which the embodiment is applicable. The constituent elements and structures described hereinafter may be achieved by software with a microcomputer (processor, CPU (Central Processing Unit)), or hardware. Although division recording on five optical discs will be explained in the embodiment, the embodiment is applicable to division recording using a plurality of media of various types.

1. Outline

1.1. Applicable range

The embodiment relates to division recording for five optical disks, and provides a format which is dividedly recorded on the optical disks. The embodiment provides two recording types, that is, a method of dividing and recording data in five disks (n (for example, n = 5) storage media from first to nth (n is integer equal to or larger than 2) disks), and a method of dividing and recording four disks (n storage media (for example, n = 4) among n+1 storage media from first to (n+1)th (n is an integer equal to or larger than 2) disks), and recording parity in a disk ((n+1)th storage medium). The former method is referred to as "non-parity-applied method", and the latter method is referred to as "parity-applied method". The present embodiment mainly provides the following:

Disk recording area; and
Data recording format.

1.2. Compatibility

The present embodiment provides a format of parallel recording on optical disks. The format is compatible with the present embodiment, when the requirements are satisfied.

2. Citation

UDF 1.5 (UDF: Universal Disk Format)

3. Definitions

Definitions of the terms of the present embodiment are as follows.

3.1. Media set

It means a set of five disks from Disk 1 to Disk 5. The order of the disks cannot be changed.

3.2. Data

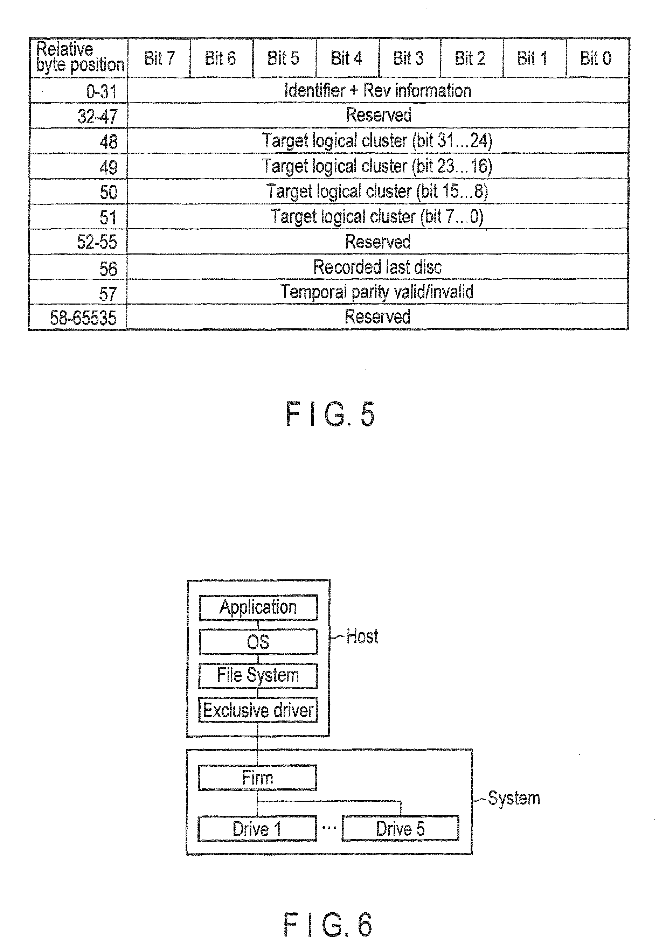

Data transmitted from host (host 200 illustrated in FIG. 6)

3.3. Parity disk

A disk assigned to parity among the five disks. Suppose that parity disk is Disk 5.

3.4. Host

A host computer connected to a parallel recording system (system 100 illustrated in FIG. 6)

3.5. Logical cluster

64 kB as minimum unit to be recorded on a disk
The same logical clusters of Disks 1 to 5 are referred to as "corresponding areas".

### 3.6. Logical block address

A logical address on a disk with 2kB
The same logical block addresses of Disks 1 to 5 are referred to as "corresponding addresses".

### 3.7. Recorded last logical cluster

Last logical cluster of data recorded in the media set

### 3.8. Recorded last disk

A disk to which data was lastly written when data is recorded on the disks in the order of Disk 1, Disk 2, Disk 3, Disk 4 (and Disk 5). No data are recorded on disks following the last disk.

### 3.9. Temporal parity

Parity that is used when parity is applied, and applied to a target logical cluster set when divided recording data is not written to the Disk 4. The temporal parity is used until all data is recorded on the target logical cluster set.
Specifically, when a (a is an integer equal to or larger than 1) divided recording data items, which is equal to or larger than one and less than four, is recorded, temporal parity is generated from the a divided recording data items. When a plurality of divided recording data items are recorded, four sets of divided recording data items are recorded on n corresponding cluster sets of the four storage media. When a divided recording data items less than four are left, the left a divided recording data items are recorded on a corresponding clusters of a storage media, temporal parity is generated from the a divided recording data items, and the temporal parity is recorded.
In addition, when divided recording data items less than 4-a are recorded on 4-a clusters in a state where the left a divided recording data items are recorded on a clusters among the corresponding four cluster sets of the four storage media, and no divided recording data items are recorded on 4-a clusters among the four cluster sets, temporal parity is generated from the left a divided recording data items and the divided recording data items less than 4-a, and the temporal parity is recorded.
Further, when divided recording data items greater than n-a are recorded on n-a clusters, n-a divided recording data items among the divided recording data items greater than n-a are recorded on the n-a clusters, and b left divided recording data items is recorded on b corresponding clusters of b storage media, when the number of the left divided recording data items is b (b is an integer equal to or larger than 1) which is less than n. Then, temporal parity is generated from the b divided recording data items, and the temporal parity is recorded.

### 3.10. Logical cluster set

Data recorded on the same logical clusters of the five disks

### 3.11. Logical cluster set number

### 3.12. Info data

Data that is used when parity is applied includes information of the cluster, for which temporal parity is used. The Info data is recorded simultaneously with the temporal parity.
Info data includes management information, such as the target logical cluster set number, and the recorded last disk.

### 3.10. Info area

An area is used when parity is applied
The area that stores Info data/temporal parity.

### 3.11. Divided recording data

Data divided into 64 kB groups

3.12. Start logical block address

The logical block address at the head of data to be accessed

3.13. Start disk

A disk including the head divided recording data block of data to be accessed

3.14. Last logical block address

Last logical block address of data to be accessed

3.15. Last disk

A disk including the last divided recording data block of data to be accessed

4. The custom and notational system

Notational system

The notational system in the present embodiment is as follows, unless specially described.
The numerical values are indicated with decimal numbers.
The hexadecimal numbers in the embodiment are denoted with mn (each of m and n is an integer of 0 to 9 or A, B, C, D, E, or F) hex.

5. Recording area

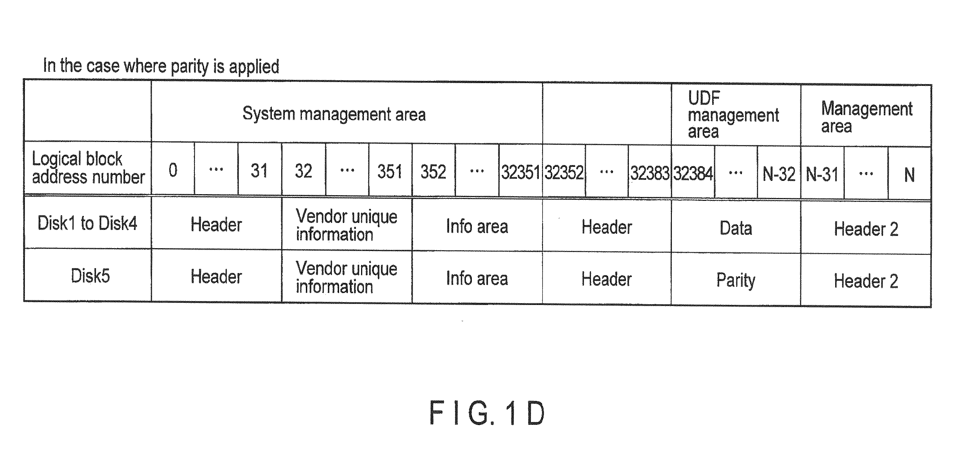

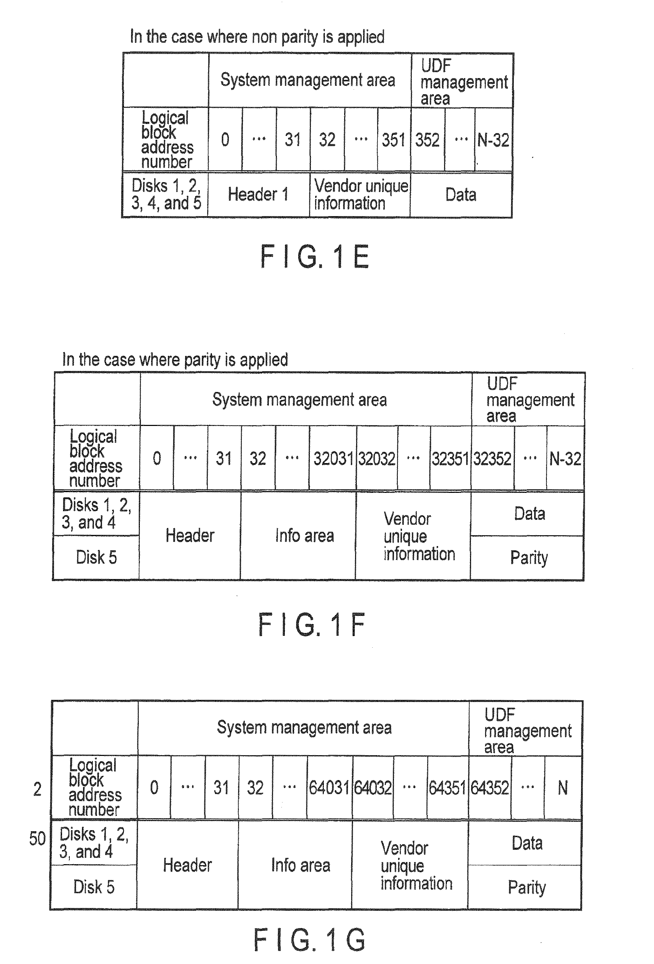

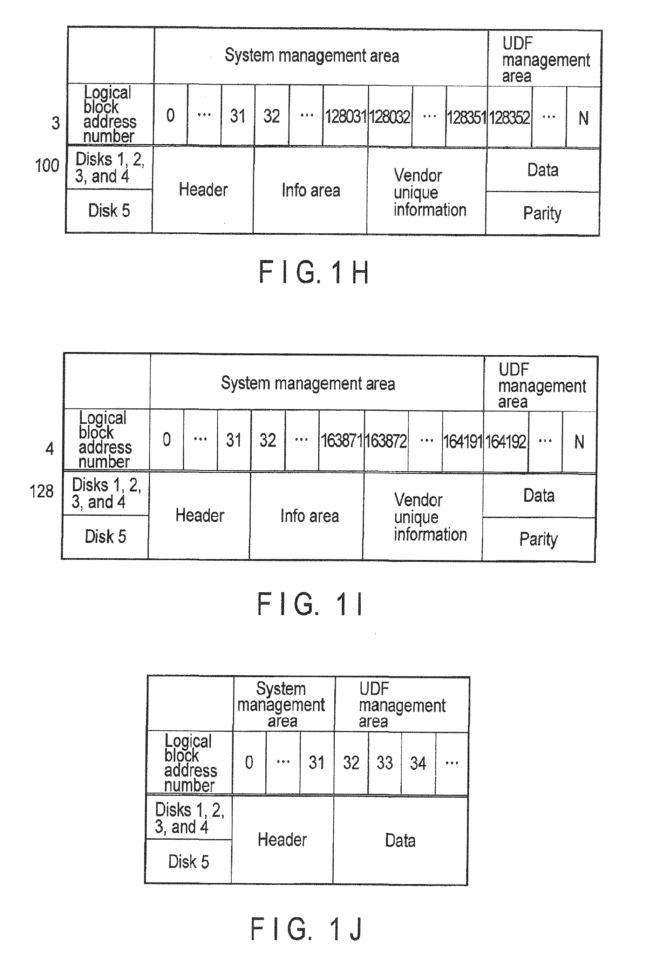

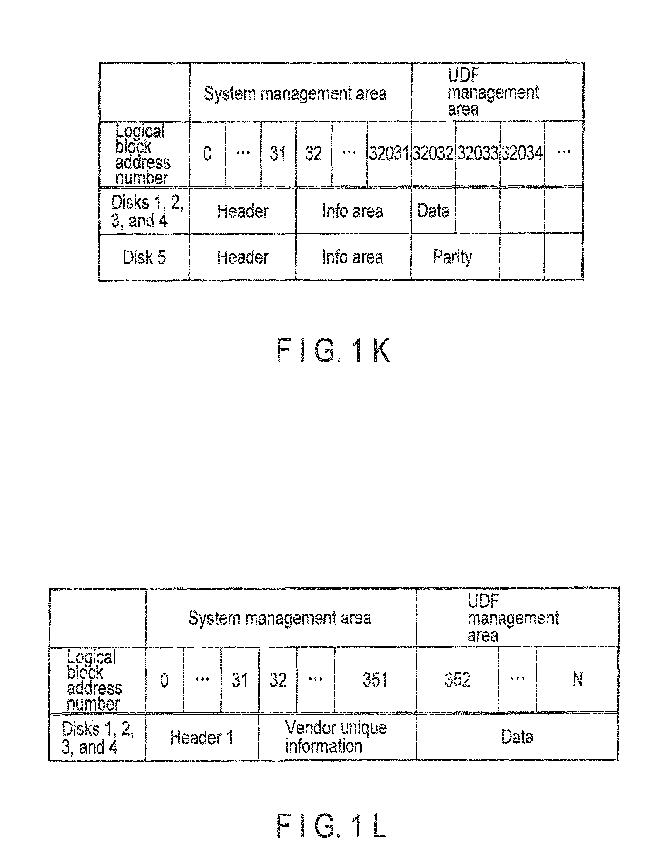

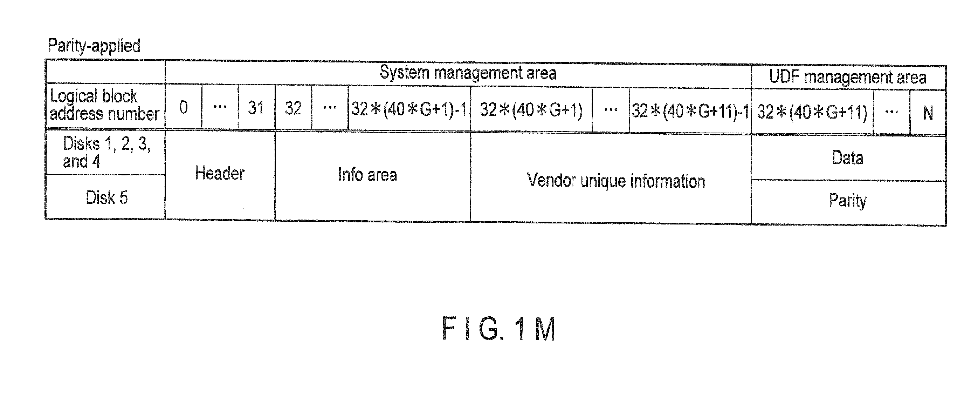

As illustrated in FIG. 1A and FIG. 1B, a recording area includes a system management area managed by a division recording system (system 100 illustrated in FIG. 6), and a UDF management area. The size of the system management area differs, according to whether parity is applied or not, as illustrated in FIG. 1A and FIG. 1B. The last address of the UDF management area is different according to the disk to be used.
Each of FIG. 1A and FIG. 1B illustrates an example of a format including a double header. Each of FIG. 1C and FIG. 1D illustrates an example of a format including a non-multiplexed header. Each of FIG. 1G, FIG. 1H, FIG. 1I, FIG. 1J, FIG. 1K, FIG. 1L, and FIG. 1M illustrates an example of a format of a header.

5.1. System management area:

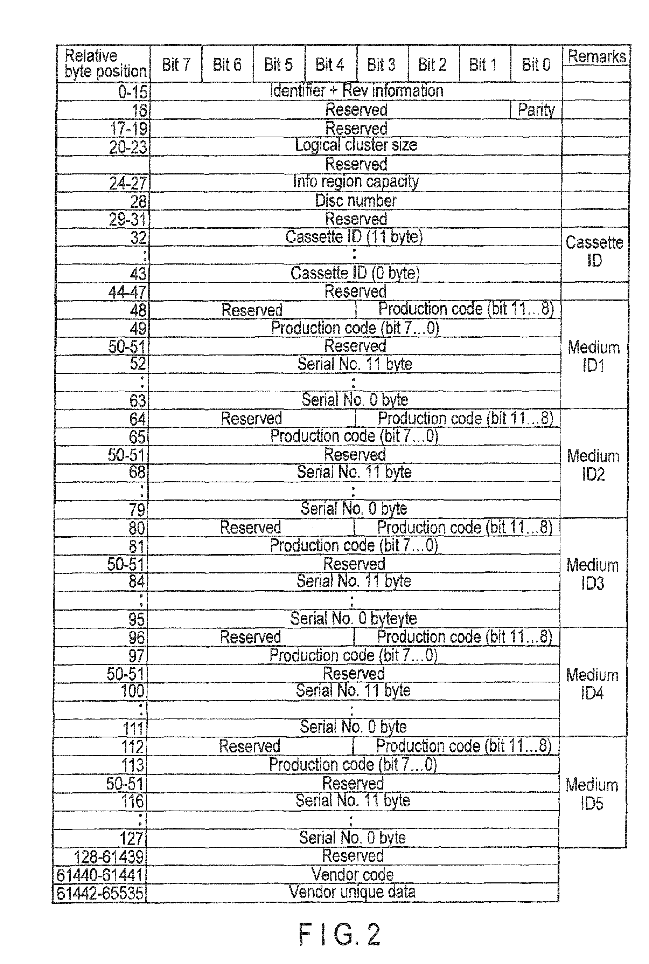

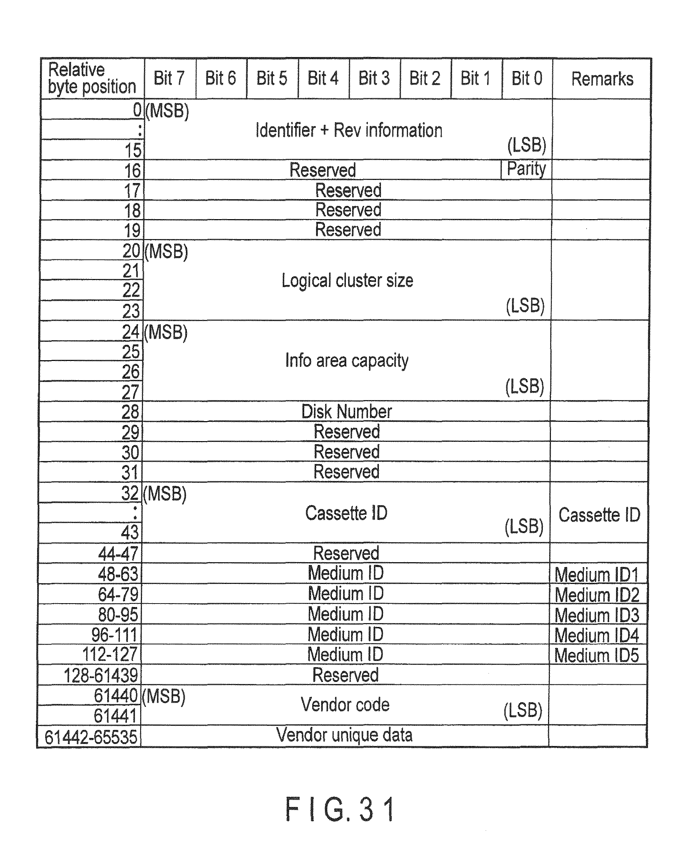

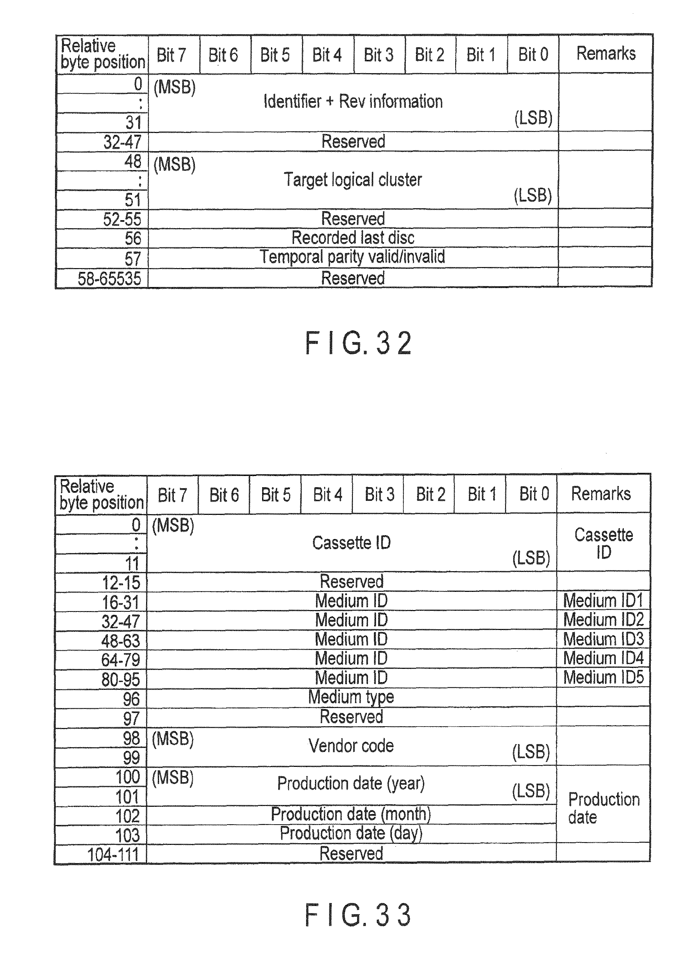

The system management area is a area that is managed by the division recording system and includes a header (FIG. 2 and FIG. 31) and an Info area (FIG. 5 and FIG. 32). No Info area exists when no parity is used. The following is a position of the management area.

<In the case where parity is not applied>

The area of logical block addresses 0 to 31 (Disks, 1, 2, 3, 4, and 5): Header 1
The area of logical block addresses 32 to 351 (Disks 1, 2, 3, 4, and 5): Vendor unique information
The reference symbol "N" denotes a last logical block address of the disk, and differs according to the type of the disk

<In the case where parity is applied>

The area of logical block addresses 0 to 31 (Disks, 1, 2, 3, 4, and 5): Header 1
The area of logical block addresses 32 to 32* (40*G+1)-1 (Disks 1, 2, 3, 4, and 5): Info area
The area of logical block addresses 32* (40*G+1) to 32*(40+G+11)-1 (Disks 1, 2, 3, 4, and 5): Vendor unique information
In the above expression, G is 1000 in the case of using a BD-R (SL), 2000 in the case of using a BD-R (DL), 4000 in the case of using a BD-R (TL), and 5120 in the case of using a BD-R (QL).

5.1.2. Header

The header stores the following information, in each of the five disks.

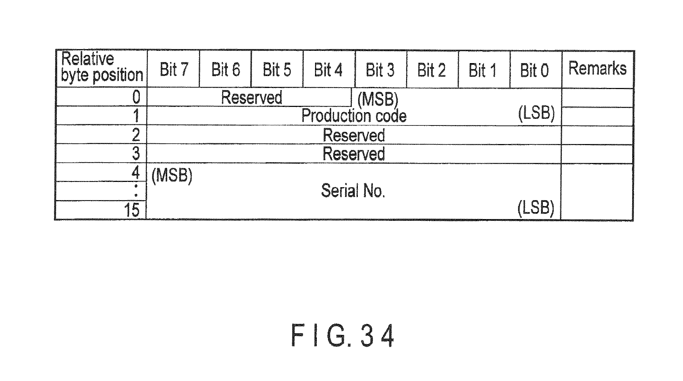

An identifier indicating parallel recording, a cassette ID (cartridge peculiar information), a medium ID (medium peculiar information, FIG. 34), a disk number in the cassette of the medium, an identifier indicating whether parity is applied or not, a cluster size in data writing, a vendor code, and vendor unique information.

Byte 0 to 15: Indicate an identifier indicating parallel recording and revision, and record them in R-format 1.0 and the text format. Other settings are prevented in the present embodiment.

Byte 16, bit 0: Recognize whether parity is used or not in the cassette. 1 is set when parity is used, and 0 is set when parity is not used.

Byte 20 to 23: Data size of the logical cluster is set with "00010000hex" (64 kB). Other settings are prevented in the present embodiment.

Byte 24 to 37: Capacity of the Info area is set when parity is applied. The numerical value 1000 is set in the case of using a BD-R (SL), 2000 is set in the case of using a BD-R (DL), 4000 is set in the case of using a BD-R (TL), and 5120 is set in the case of using BD-R (QL). Hexadecimal numbers are used for the setting.

Other settings are prevented in the present embodiment.

Byte 28: The disk number in the cassette is stored with a hexadecimal number (Disk 01 to 05 hex).

Byte 32 to 43: The ID number of the cassette is stored.

Byte 48 to 63: The medium ID of the Disk 1 is stored:

Byte 48, bit 3 to 0: Production code, bit 11 to 8
Byte 49 bit 7 to 0: Production code, bit 7 to 0
Byte 52 to 63: Serial No., 12 byte to 0 byte.

Byte 64 to 79: The medium ID of the Disk 2 is recorded:

Byte 64, bit 3 to 0: Production code, bit 11 to 8
Byte 65, bit 7 to 0: Production code, bit 7 to 0
Byte 68 to 79: Serial No., 12 byte to 0 byte.

Byte 80 to 95: The medium ID of the Disk 3 is recorded

Byte 80, bit 3 to 0: Production code, bit 11 to 8
Byte 81, bit 7 to 0: Production code, bit 7 to 0
Byte 84 to 95: Serial No., 12 byte to 0 byte.

Byte 96 to 111: The medium ID of the Disk 4 is recorded:

Byte 96, bit 3 to 0: Production code, bit 11 to 8
Byte 97, bit 7 to 0: Production code, bit 11 to 8
Byte 100 to 111: Serial No., 12 byte to 0 byte.

Byte 112 to 127: The medium ID of the Disk 5 is recorded:

Byte 112, bit 3 to 0: Production code, bit 11 to 8
Byte 113, bit 7 to 0: Production code, bit 7 to 0
Byte 116 to 127: Serial No., 12 byte to 0 byte.
Byte 128 to 61439: Reserved.
Byte 61440 to 61441: Vendor code.
Byte 61442 to 65535: Vendor unique data.

5.1.2. Info area:

The Info area is a area to store temporal parity and Info data. The temporal parity is used in the case where the last logical block address block is not located in the Disk 4, when data transmitted from the host is divided and recorded in the case of applying parity. The temporal parity is used until next data is recorded. information as to whether the temporal parity in the 57th byte of the Info data is valid or not is recorded, even in the case where no temporal parity is recorded when the media set is ejected after data is recorded.

<In the case where parity is not applied>

No corresponding area.

<In the case where parity is applied>

Areas of logical block address 32 to 32*(40*G+1)-1.
In the above description, G is 1000 in the case of using a BD-R (SL), 2000 in the case of using a BD-R (DL), 4000 in the case of using a BD-R (TL), and 5120 in the case of using a BD-R (QL).

5.2. UDF management area:

The area is formatted in the packet light format, and recording is performed in accordance with the UDF 1.5.

<In the case where parity is not applied>

Areas of logical block addresses 352 to (Disks 1, 2, 3, 4, and 5): Data

<In the case where parity is applied>

Areaa of logical block addresses 32* (40*G+11) to (Disks 1, 2, 3, and 4): Data
Areas of logical block addresses 32* (40*G+11) to (Disk 5): parity of data
In the above description, G is 1000 in the case of using a BD-R (SL), 2000 in the case of using a BD-R (DL), 4000 in the case of using a BD-R (TL), and 5120 in the case of using a BD-R (QL).

N: Last logical block address

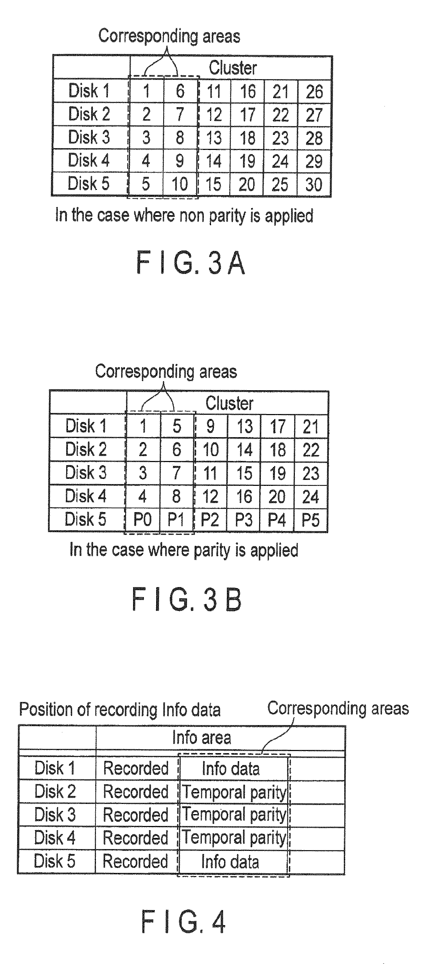

Divided recording data items are recorded in the following order, as illustrated in FIG. 3A and FIG. 3B.

<In the case where parity is not applied>

Data is stored in the order of logical cluster 0 of Disk 1, logical cluster 0 of Disk 2, logical cluster 0 of Disk 3, logical cluster 0 of Disk 4, logical cluster 0 of Disk 5, logical cluster 1 of Disk 1, logical cluster 1 of Disk 2, logical cluster 1 of Disk 3, logical cluster 1 of Disk 4, logical cluster 1 of Disk 5, ....

<In the case where parity is applied>

Data is stored in the order of logical cluster 0 of Disk 1, logical cluster 0 of Disk 2, logical cluster 0 of Disk 3, logical cluster 0 of Disk 4, logical cluster 1 of Disk 1, logical cluster 1 of Disk 2, logical cluster 1 of Disk 3, logical cluster 1 of Disk 4, ....

6. Parity

6.1. Parity disk

Among Disks 1 to 5, Disk 5 is used as the parity disk, and parity of the same cluster is recorded.
Parity is recorded on the parity disk when data is recorded on a logical cluster corresponding to Disk 4. No parity is recorded on the parity disk when no data is recorded on the logical cluster area corresponding to Disk 4, and a temporal parity is applied.

Parity generating expression

Bit x = (bit x of Disk 1) xor (bit x of Disk 2) xor (bit x of Disk 3) xor (bit x of Disk 4).

6.2. Temporal parity

A temporal parity is recorded, when the media set is ejected in the case where no data is recorded in the logical cluster area corresponding to Disk 4, or when a command to record the temporal parity is issued. The recording position is the next logical cluster of the recorded last logical cluster of the Info area of Disks 2, 3, and 4.

Temporal parity generating expression

Bit x = bit of Disk 1 x xor bit of Disk 2 x xor bit x of Disk 3 (in the case where the last disk is Disk 3)
Bit x = bit x of Disk 1 xor bit x of Disk 2 (in the case where the last disk is Disk 2)
Bit x = bit x of Disk 1 xor 0 (in the case where the last disk is Disk 1).

6.3. Info data

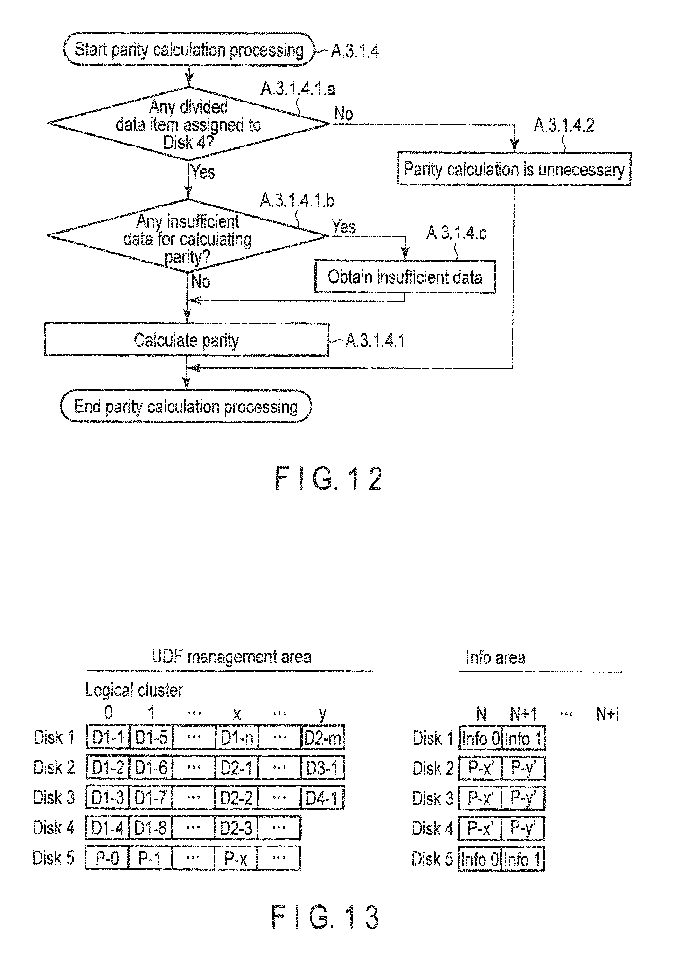

Info data is recorded on the next logical block address of the recorded last logical cluster of the Info areas of Disk 1 and Disk 5 simultaneously with the temporal parity. FIG. 4 illustrates an example of recording positions of the Info data. The recorded last logical cluster includes Info data which was recorded in the previous ejection, and the present Info data is recorded on eth next logical cluster. The Info data is formed of an identifier, a target logical cluster corresponding to the temporal parity, the recorded last disk number, and an identifier indicating whether the temporal parity is valid or invalid. When the media set is ejected, Info data is recorded regardless of recording of the temporal parity (FIG. 12 illustrates the process of recording Info data).

6.3.1. The identifier, the target logical cluster, the recorded last disk, and information whether the temporal parity is valid or invalid are recorded in the following format

Byte 0 to 31: An identifier and Rev information are recorded in the text format. The following is recorded:

R-Format-information Rev 1.0
Byte 48 to 51 the target logical cluster is recorded with a hexadecimal number
Byte 56: Recorded last disk is recorded with a hexadecimal number
Byte 57: information indicating whether the temporal parity is valid or invalid is recorded.

When the recorded last disk is Disk 4, the cluster is recorded on each disk, and thus the parity is recorded on Disk 5. Since no temporal parity is used in this case, the temporal parity is invalid, and thus "00hex" is recorded.
When the recorded last disk is not Disk 4, data is not recorded at least on the cluster of Disk 4, and thus the parity of the cluster is not recorded on Disk 5, but the temporal parity is recorded. Since the temporal parity is valid in this case, "FFhex" is recorded. When the temporal parity is set invalid, the information of the target logical cluster and the recorded last disk is not used.

Byte 58 to 65535: Reserved

An example of operation of the system 100 that achieves the division recording as described above will be explained hereinafter. A dedicated driver controls recording of divided recording data items, parity, temporal parity, management information, and identification information. Drives 1, 2, 3, 4, and 5 record divided recording data items, parity, temporal parity, management information, and identification information.

A. Explanation of operation

A.1. System configuration

FIG. 6 is a block diagram illustrating a schematic structure of an information processing system comprising a host 200 and the system 100. The host 200 includes application software, an operating system (OS), a file system, and a dedicated driver. The system 100 includes firm that controls the system, Drive 1, Drive 2, Drive 3, Drive 4, and Drive 5.
The dedicated driver causes the host 200 to recognize the five drives as a drive, and records management information when the disk is formatted from the application. The dedicated driver controls recording of the management information, and Drive 1, Drive 2, Drive 3, Drive 4, and Drive 5 record management information. Although the system 100 including five drives is explained in the embodiment, the system 100 may include a drive, and the drive may successively perform processing for the five optical disks.

A.2. The case where parity is not applied

A.2.1. Flow of record processing

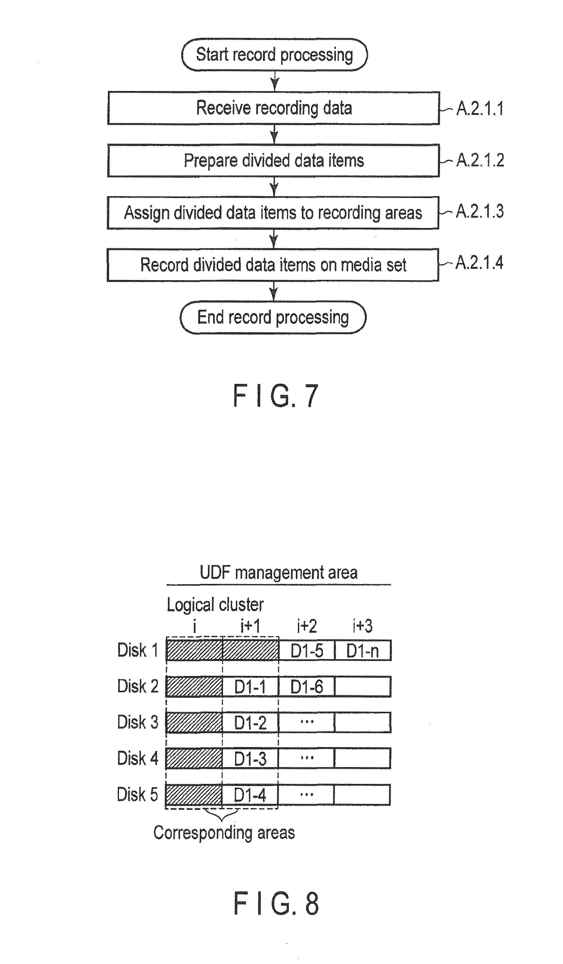

The operation of the dedicated driver of the system 100 and flow of record processing of the system 100 will be explained with reference to FIG. 7.

A.2.1.1. Receive recording data

The system 100 receives data (recording data) from the application software of the host 200. Specifically, the system 100 includes an interface that inputs data, and the interface inputs the data.

A.2.1.2. Prepare divided data items

The dedicated driver divides the data received from the file system to record the data on the disks, and prepare a plurality of divided recording data items (a plurality of divided recording data blocks). In other words, the dedicated driver controls division of the data received from the file system to record the data on the disks, and controls preparation of a plurality of divided recording data items (a plurality of divided recording data blocks). The dedicated driver divides the recording data into a plurality of 64 kB divided recording data blocks. The number of the divided recording data blocks is n, and the divided recording data blocks are D1-1, D1-2, ..., D1-n.

A.2.1.3. Assign the divided recording data blocks to recording areas

A.2.1.3.1. Obtain the head logical cluster of a recordable area and the start disk

The dedicated driver reads the five disks, obtains the recorded last logical cluster and the recorded last disk of the media set, and determines the start logical cluster of the recordable area and the start disk.
The file system obtains a recorded logical block address via the dedicated driver.
The dedicated driver converts the last recorded logical block addresses of the five disks and information of the last disk into the recorded logical block address, and returns it to the file system.
The file system transmits the recording start position to the dedicated driver. The dedicated driver converts the recording start position into the five disks and their logical clusters.

A.2.1.3.2. Assign the divided recording data blocks to recording areas

The dedicated driver successively assigns the divided recording data blocks prepared in A. 2. 1. 2. to the start cluster of the recordable area and the start disk obtained in A. 2. 1. 3. 1. In FIG. 8, the parts with diagonal lines indicate recorded data items. The recorded last logical cluster number is i+1, the recorded last disk is Disk 1, and the start disk is Disk 2. The data is assigned to a logical cluster i+1 of Disk 2, a logical cluster i+1 of Disk 3, a logical cluster i+1 of Disk 4, a logical cluster i+1 of Disk 5, a logical cluster i+2 of Disk 1, a logical cluster i+2 of Disk 1, a logical cluster i+2 of Disk 2, ..., and a logical cluster i+3 of Disk 1.

A.2.1.4. Record data on media set

The dedicated driver instructs the drives to record the assigned divided recording data blocks. Thereby, each drive records the assigned divided recording data blocks on the disk. The system 100 records data in parallel.

A.2.1.5. Eject processing

The system 100 performs processing of ejecting the media set.

A.2.2. Playback

When a media set is inserted into the system 100, the file system requests the recordable remaining capacity, and the last recording address. The system 100 calculates the remaining capacity of the whole disks and the last recording address from the remaining capacities and the last recording addresses of the five disks, and transmits them to the file system.

A.2.2.1. Calculate information of the target data

When the file system issues a playback request, the dedicated driver calculates the following information for the target data in the media set, based on the data address and data size requested by the file system, as described above:

(1) Start logical block address
(2) Start disk
(3) Last logical block address
(4) Last disk.

A.2.2.2. Data playback

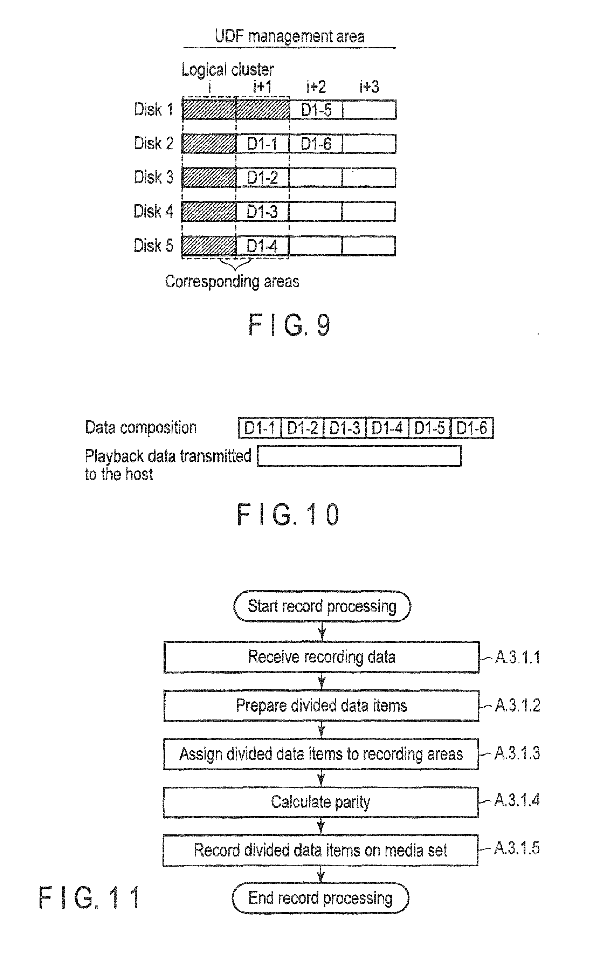

Data is played back in accordance with the address obtained in A. 2. 2. 1. Since data is recorded in logical clusters on the individual disks as illustrated in FIG. 9, clusters D1-1, D1-2, D1-3, D1-4, D1-5, and D1-6 are played back, and the data items are coupled as illustrated in FIG. 10. Next, the part of the last logical block address in D1-1 is extracted from the start logical block address in D1-1, and transmitted to the file system.

A.3. The case where parity is applied

A.3.1. Flow of record processing

Operation of the dedicated driver and flow of recording processing of the system 100 will be explained with reference to FIG. 11.

A.3.1.1. Receive recording data

The system 100 receives data from the application software of the host 200.

A.3.1.2. Prepare divided data items

The dedicated driver divides the data received from the file system to record the data on the disks, and prepare a plurality of divided recording data items. The dedicated driver divides the recording data into a plurality of 64 kB divided recording data blocks. The number of the divided recording data blocks is n, and the divided recording data blocks are D1-1, D1-2, ..., D1-n.

A.3.1.3. Assign the divided recording data blocks to recording areas

A.3.1.3.1. Obtain the head logical cluster of a recordable area and the start disk

The dedicated driver reads the five disks, obtains the recorded last logical cluster and the recorded last disk of the media set, and determines the start logical cluster of the recordable area and the start disk.
The file system obtains a recorded logical block address via the dedicated driver.
The dedicated driver converts the last recorded logical block addresses of the five disks and information of the last disk into the recorded logical block address, and returns it to the file system.
The file system transmits the recording start position to the dedicated driver. The dedicated driver converts the recording start position into the five disks and their logical clusters.

A.3.1.3.2. Assign the divided recording data blocks to recording areas

The dedicated driver successively assigns the divided recording data blocks prepared in A. 3. 1. 1. to the start cluster of the recordable area and the start disk obtained in A. 3. 1. 3. 1.

A.3.1.4. Flow of parity calculation

Details of parity calculation processing will be explained hereinafter with reference to FIG. 12.

A.3.1.4.1. Calculate parity

To successively record data, when there are any divided recording data block which can be assigned to the corresponding logical cluster area of Disk 4 among corresponding logical cluster areas of Disks 1 to 4, such as a logical cluster 0 of FIG. 13, (A. 3. 1. 4. 1. A [YES])/(A. 3. 1. 4. 1. B [NO]), the dedicated driver records parity P-0 in the corresponding logical cluster area of Disk 5.

When the start disk is not Disk 1 as in the logical cluster x of FIG. 13, the dedicated driver reads the previous recorded divided recording data block D1-n, and calculates parity P-x based on the block D1-n and divided recording data blocks to be additionally recorded.

A.3.1.4.2. Parity calculation is unnecessary

When no data is recorded on the corresponding logical cluster area of Disk 4, as in the logical cluster y of FIG. 13 (A. 3. 1. 4. 1. A [NO]), no parity calculation processing is necessary.

A.3.1.5. Record the data on the media set

The dedicated driver instructs the drives to record the assigned divided recording data blocks. Thereby, each drive records the assigned divided recording data blocks on the medium. Thereby, the system 100 records data in parallel.

Processing of ejecting the media set will now be explained.

A.3.1.6. Update Info area

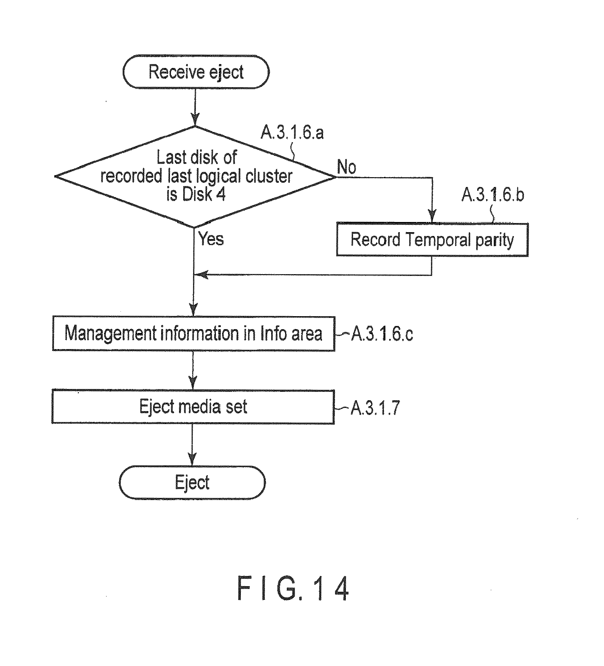

Processing of updating the Info area will now be explained with reference to FIG. 14.

The Info area is updated whenever the media set is ejected. When the last disk which records the divided recording data block is not Disk 4 (A. 3. 1. 6. A [NO]), no parity is recorded for the recorded last logical cluster. Thus, the dedicated driver calculates a temporal parity from the divided recording data block recorded on the recorded last logical cluster area, and records the temporal parity on the Info area together with the Info data (A. 3. 1. 6. b). When the last disk which records the divided recording data block is Disk 4 (A. 3. 1. 6. A [YES]), the parity for the recorded last logical cluster is recorded on Disk 5. Thus, no temporal parity is recorded, and an identifier of the Info data is recorded (A. 3. 1. 6. c).

A.3.1.7. Eject processin

The system 100 performs processing of ejecting the media set, after recording on the Info area is finished.

A.3.2. Playback

When a media set is inserted into the system 100, the dedicated driver requests a recordable remaining capacity and the last logical cluster, and transmits data to the file system.

When a media set is inserted into the system 100, the file system requests the recordable remaining capacity, and the last recording address. The dedicated driver calculates the remaining capacity of the whole disks and the last recording address from the remaining capacities and the last recording addresses of the five disks, and transmits them to the file system.

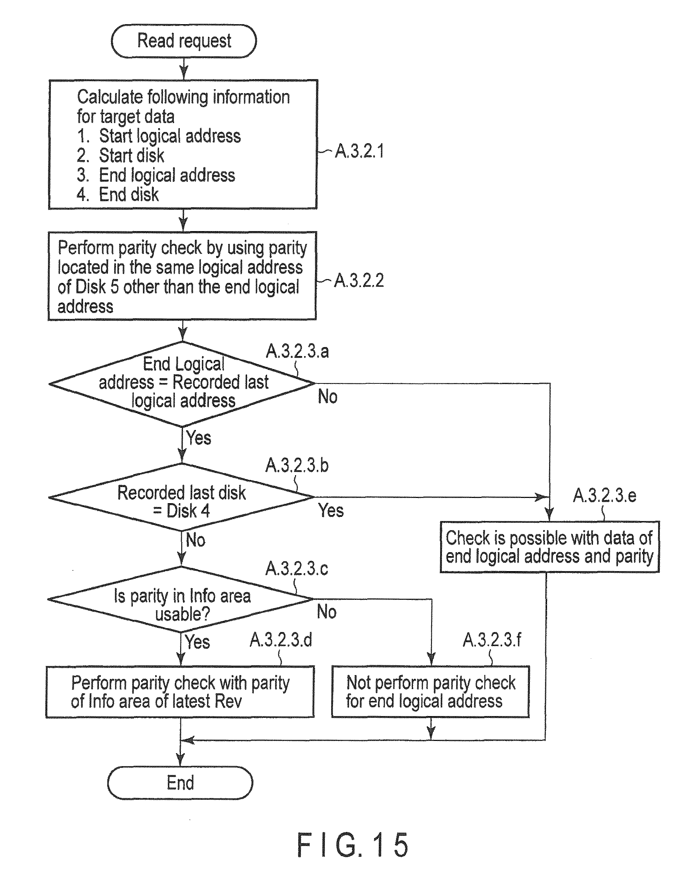

Details of parity check performed by the dedicated driver will now be described with reference to FIG. 15.

A.3.2.1. Calculate information of target data

When the dedicated driver receives a playback request from the file system, the dedicated driver calculates the following information for target data in the media set, based on the address and the size of data requested by the file system:

(1) Start logical block address
(2) Start disk
(3) Last logical address
(4) Last disk.

A.3.2.2. Parity check for data other than last logical cluster

The dedicated driver performs parity check for data other than the last logical cluster, by using the parity recorded on Disk 5.

A.3.2.3. Parity check for data of the last logical cluster

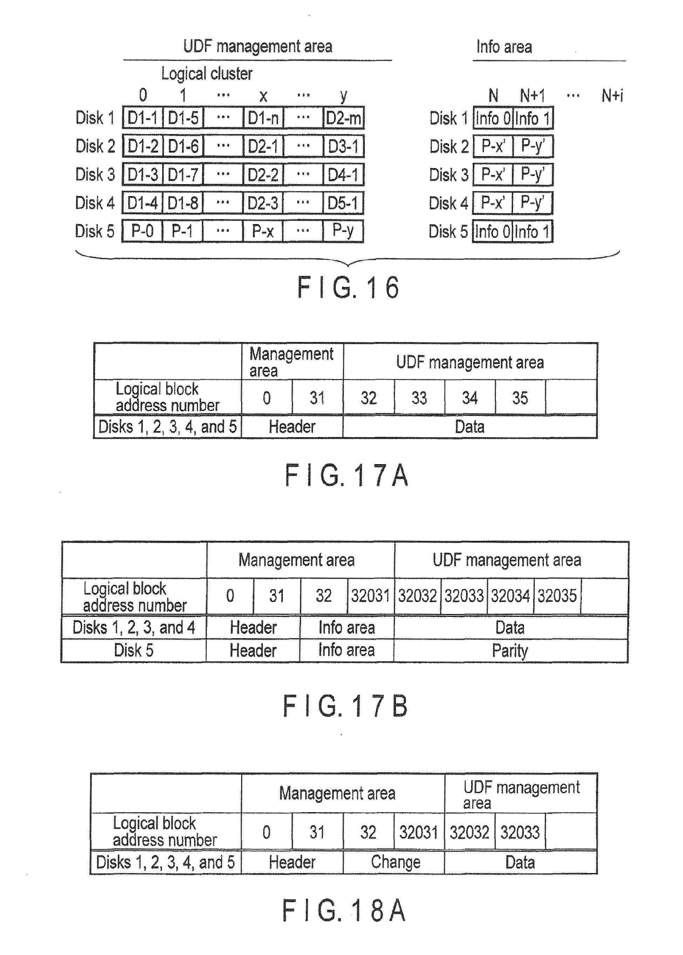

When the last logical cluster is smaller than the recorded last logical cluster of the media set (A. 3. 2. 3. a, NO), for example, data y is recorded after the last logical cluster x of the divided data, as illustrated in FIG. 16. Thus, parity P-x in Disk 5 is used for parity check (A. 3. 2. 3. e).

On the other hand, when the last logical cluster of the divided data items is the same as the recorded last cluster of the media set (A. 3. 2. 3. a [YES]) or when the recorded last disk (logical cluster y of FIG. 16) is Disk 4 (A. 3. 2. 3. B [YES]), the parity calculated from the data items recorded on Disks 1 to 4 is recorded on Disk 5. Thus, the dedicated driver performs parity check using the parity recorded on Disk 5 (A. 3. 2. 3. e).

In addition, when the recorded last disk is not Disk 4 as indicated by the logical cluster y of FIG. 13 (A. 3. 2. 3. b [NO]), the dedicated driver checks whether the parity recorded on the Info area can be used or not. When the parity can be used (A. 3. 2. 3. c [YES]), the dedicated driver performs parity check based on the temporal parity (P-y') stored in the Info area and the data used for the calculation (A. 3. 2. 3. d). When no parity recording command is issued or when the media set is not ejected after data is recorded, no temporal parity is recorded, and thus no parity check is performed ((A. 3. 2. 3. c [NO]) to (A. 3. 2. 3. f)).

A.3.3. Data playback

The data is played back in accordance with the address obtained in A. 3. 2. 1.

A.3.4. Abnormality processing

While the system is operated in a parity-applied manner, when data recording is ended without recording data in the corresponding logical cluster area of Disk 4 and the media set is not ejected, information to be recorded in the temporal parity only remains in the memory and is not recorded on the disk. When the power is unintentionally turned off in this state, the information to be recorded in the temporal parity is eliminated from the memory. When the power is turned on again and the system is restarted, the data recorded on the last logical cluster is read, and data of the temporal parity is prepared on the memory.

Next, following is explanation of address conversion.

B. Address conversion

B.1. Data address X is converted into the disk number, the logical cluster on the disk, and the logical block address in accordance with the following converting expressions

<With parity>

$$\text{Disk No.} = \text{Int } (\text{mod } (X, 4*32)/32) +1$$

$$\text{Logical cluster} = \text{Int } (X/(4*32)) +40*G+1$$

$$\text{Logical block address} = \text{MOD } (X, 32) +\text{INT } (X/(32*4))*32+32*(40*G+11)$$

G is 25 in the case of using a BD-R (SL), 50 in the case of using a BD-R (DL), 100 in the case of using a BD-R (TL), and 128 in the case of using a BD-R (QL).

<Non-parity (without parity)>

$$Disk\ No. = Int\ (mod\ (X,\ 5*32)/32)\ +1$$

$$Logical\ cluster = Int\ (X/(5x32))\ +1$$

$$Logical\ block\ address = MOD\ (X,\ 32)\ +INT$$
$$(X/(32*5))\ *32+352.$$

B.2. Conversion of logical block address on the disk into data address

Address conversion is performed in accordance with the following expressions.

With parity:

$$INT\ ((logical\ block\ address-352)/32)\ *32*5+\ (Disk$$
$$number-1)\ *32+MOD\ (logical\ block\ address,\ 32).$$

Non-parity (without parity) :

$$INT\ ((logical\ block\ address-352)/32)\ *32*5+\ (Disk$$
$$number-1)\ *32+MOD\ (logical\ block\ address,\ 32).$$

Next, an example of a modification of FIG. 1A, FIG. 1B, FIG. 1C, FIG. 1D, FIG. 1E, FIG. 1F, FIG. 1G, FIG. 1H, FIG. 1I, FIG. 1J, FIG. 1K, FIG. 1L, and FIG. 1M will now be explained with reference to FIG. 17A and FIG. 17B. In addition, common matters of the recording formats of FIG. 1A, FIG. 1B, FIG. 1C, FIG. 1D, FIG. 1E, FIG. 1F, FIG. 1G, FIG. 1H, FIG. 1I, FIG. 1J, FIG. 1K, FIG. 1L, FIG. 1M, FIG. 17A, and FIG. 17B will now be explained as supplement.

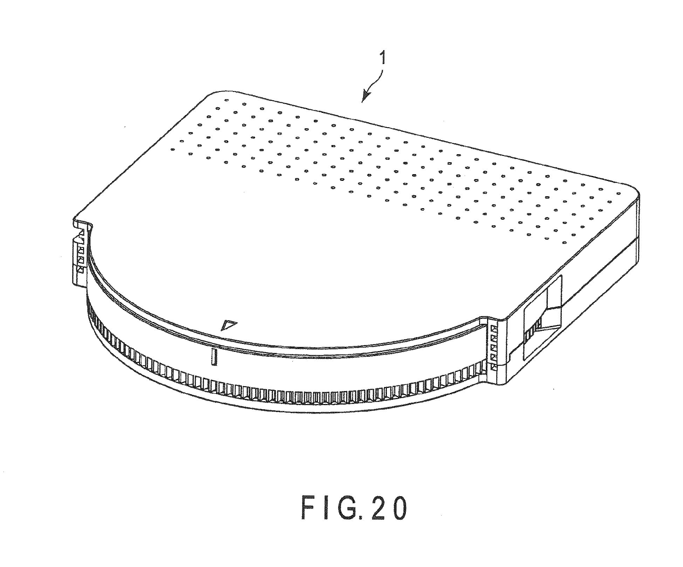

FIG. 20 illustrates a disk cassette that can be loaded with five disks. Recordable disks such as DVD-Rs and BD-Rs are contained in the disk cassette. Details of the disk cassette will be described below.

The five disks record management data in addition to user data transmitted from the host 200, to achieve parallel recording. Their recording areas and user data areas are as illustrated in FIG. 17A and FIG. 17B. When parity is not applied, logical block addresses 0 to 31 are used as a header of the system management area. When parity is applied, the area of the logical block addresses 0 to 31 is used as a header, and logical block addresses 32 to 32031 are used as Info area. The Info area is a area which stores Info data/temporal parity.

The header includes, for each of the five disks, an identifier indicating parallel recording, the cassette ID, the medium ID, the disk number of the disk in the cassette, a bit indicating whether parity is applied or not applied, the cluster size in data writing, the vendor code, and the vendor unique information. Details of the header are as illustrated in FIG. 2 and FIG. 32. The identifier indicates parallel recording of the format. For example, "R-format 1.0" is recorded in the text format, and thereby it can be easily recognized as the format according to recording of the present embodiment.

The cassette ID is an ID assigned to the cassette, and indicates uniqueness of the cassette. The cassette ID shows that the data is not a duplicate.

The medium ID is an ID assigned to the disk when the disk is manufactured. By referring to the medium IDs in combination with the cassette ID, the user can recognize whether the cassette is not changed from a state at the time of shipping, or the disks in the cassette are replaced, and can detect the possibility of falsification of data.

The disk numbers of the disks in the cassette are unnecessary in usual use, since the disks are not taken out of the cassette under normal conditions. However, when the disks are unintentionally moved out of the cassette due to a disaster or the like, the order of recording data can be recognized by referring to the disk numbers recorded on the disks, and the data can be recovered.

By providing a bit indicating whether parity is applied or not applied, the user can select in formatting whether to apply parity or not according to data to be archived. On the other hand, it is unnecessary for the manufacturer to have stock which does not match the users' demands.

By setting the cluster size in data writing, the format can be applied to disks used in the future. This is set to cause the system to be compatible with future disks having a larger capacity and a larger minimum recording cluster size. The cluster size is set to "64 kB" in the present embodiment.

The Info area is used to apply parity to the last logical block address in a direct read after write disk, not a rewritable disk.

The numerical values in FIG. 3A and FIG. 3B indicate the order of recording data in the five disks. The divided data items D1-1, D1-2, ..., D1-n in FIG. 13 are data items which are recorded first, and divided data items D2-1, D2-2, ..., D2-n are data items which are recorded next. When the first data items are recorded, parity data for P-x in Disk 5 is determined. However, when the next data items are recorded, P-x is changed to a different value. Although parity is rewritable in a rewritable disk such as an HDD and a DVD-RAM, the parity cannot be rewritten in a direct read after write disk. Thus, a temporal parity (temporal parity) is recorded on the system management area until data is recorded on Disk 4. Since data is recorded in the order illustrated in FIG. 3B, a temporal parity and Info data is recorded on the Info area, when the last logical block address is not Disk 4. For example, in the example illustrated in FIG. 17A and FIG. 17B, the Info area is logical block addresses 32 to 32031. The UDF management area is a area in which the user data is stored. The UDF management area is assigned to logical block address 32 and the following addresses when parity is not used, and the UDF management area is assigned to logical block address 32032 and the following addresses.

Next, the recording format of parity data will now be explained.

Data is recorded on the parity disk when data is recorded on the same logical block address of Disk 1 to Disk 4. Data recorded on the parity disk is an exclusive OR for each bit of each disk.

When temporal parity data is prepared, disks on which data is recorded are Disks 1 to 3. The temporal parity data is an exclusive or of Disk 1 and <0> when data is recorded only on Disk 1, an exclusive or of each bit of Disk 1 and Disk 2 when data is recorded on Disk 1 and Disk 2, and an exclusive or of each bit of Disk 1, Disk 2, and Disk 3 when data is recorded on Disk 1, Disk 2, and Disk 3.

The Info data will now be explained.

The Info data indicates where the data mainly serving as source of the temporal parity exists. The data includes an identifier, a target logical cluster corresponding to the temporal parity, the recorded last disk number, and a byte indicating whether the temporal parity is valid or invalid. The Info data is recorded as detailed in FIG. 5 and FIG. 32.

The identifier indicates that the data is the Info data. For example, the identifier is recorded as "R-format-information Rev 1.0" in the text format, by which it can be easily recognized that the position is Info data. The target logical cluster corresponding to the temporal parity indicates a logical cluster serving as a source of the temporal parity written in the same logical cluster as the Info data. The recorded last disk number indicates the number of disks, from data of which the temporal parity is made, and is used for selecting the calculation expression of the parity. The byte indicating whether the temporal parity is valid or invalid indicates whether temporal parity is used or not when the disks are ejected. For example, the byte is "FFhex" when the temporal parity is used, and "00hex" when no temporal parity is used. Thereby, when the cassette is inserted into the changer (system 100) next, it can be immediately determined whether to use temporal parity or not, by reading the byte.

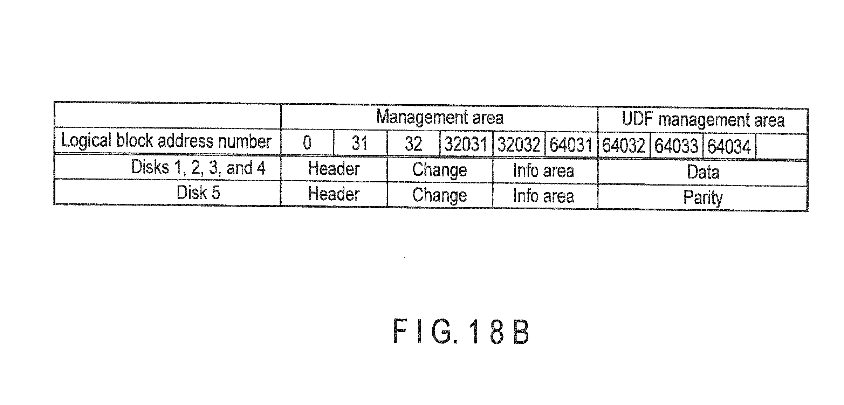

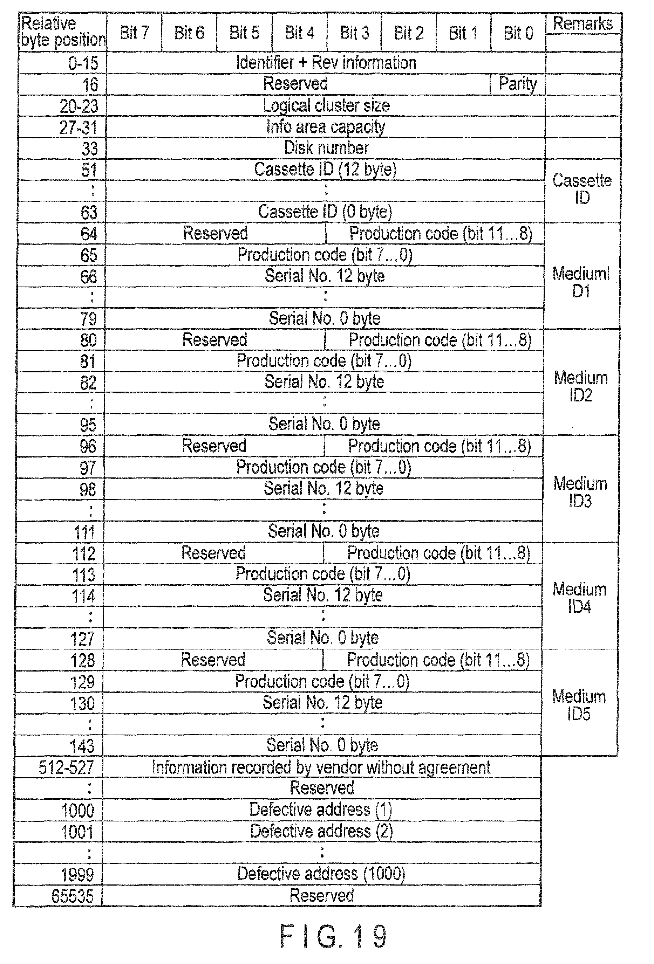

Next, an example of modification of FIG. 1A, FIG. 1B, FIG. 1C, FIG. 1D, FIG. 1E, and FIG. 1F will be explained with reference to FIG. 18A and FIG. 18B. As illustrated in FIG. 18A and FIG. 18B, the system management area includes an exchange area. The exchange area is used when there is an address error or the like in the storage media (disks) as shipped. The whole disk is played back when the disk is formatted, and a logical block address of an error is recorded in the header information of FIG. 19, when the disk includes an error such as an address error. In prior art, error processing is performed in data recording, verification requires much time, and the transmission rate deteriorates. By registering the logical block address of the error in formatting as described above, the logical block address of the error is registered without performing verification, which requires much time, in data recording. Thus, the transmission rate does not widely deteriorate. An error of the user data is corrected by using error correction such as ECC.

The following is a summary of the above processing.

(1) The system 100 formats the five disks (used in the archive cartridge). Thereby, each disk includes a system management area and a UDF management area. The system management area stores information peculiar to each disk. Data is divided between five disks and recorded on the five disks, and data is recorded for each cluster.

(2) The system 100 uses all the five disks for recording the user data, or uses four disks for recording the user data and uses the other one disk as a parity disk. Thus, the system 100 records an identifier of the parity in the header information area.

(3) In the above item (1), the system 100 generates and records 64kB divided recording data items.

(4) In the above item (2), the system 100 generates and records parity data of the parity disk from divided data items divided between the four disks and written in the same cluster of the four disks, when parity is applied.

(5) In the above item (2), when the divided recording data items cannot be recorded in the same cluster being corresponding areas of the four disks, the system 100 generates a temporal parity from the divided recording data item recorded in part of the same cluster being the corresponding area, and records the temporal parity on the disk, when parity is applied. Specifically, the system 100 records a temporal parity on the disk, when there are divided recording data items equal to or larger than one and less than four, or the number of the divided recording data items is not divisible by four without a remainder even when the number of divided recording data items exceeds four, or when the same cluster being corresponding areas of the four disks could not be filled with the divided recording data items in the previous recording.

(6) In the above item (4), the system 100 information of the logical cluster information serving as source of the temporal parity in the Info area as the Info data.

(7) In the above item (5), the system 100 records an identifier for recognizing whether to calculate a parity by using the temporal parity or without the temporal parity, in data recording.

As described above, according to the present embodiment, five optical disks for parallel recording are used in a cassette, and thus high-speed transmission and high reliability are achieved. In addition, the structure also achieves portability being an original characteristic of optical disks. The number of optical disks is not limited to five, as a matter of course. For example, in the case of using six optical disks formed of Disk 1, Disk 2, Disk 3, Disk 4, Disk 5, and Disk 6, the last disk is Disk 6. The recording disks are Disk 1 to Disk 5, with Disk 6 used as a parity disk.

The following is explanation of details of the cassette ID.

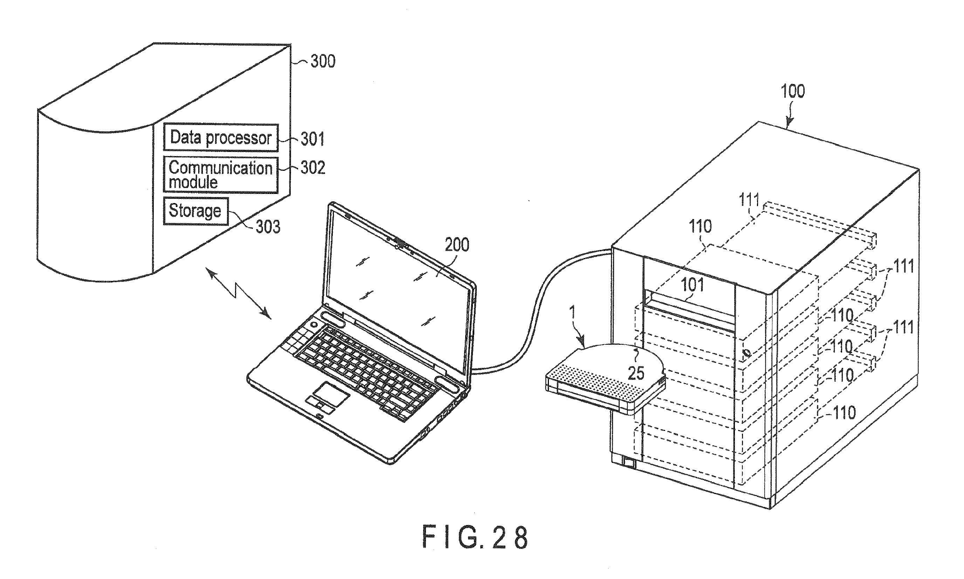

FIG. 28 is a diagram illustrating an example of an information processing system according to the embodiment.

As illustrated in FIG. 28, the information processing system comprises the system 100 and the host 200. The system 100 is formed of a plurality of optical disk drives connected in parallel. For example, the system 100 is formed of five drives (for example, BD-R drives) connected in parallel. Various media, such as optical disks, magnetic disks, and flash memories, can be used as recording media (information storage media). Although the system will be explained mainly with write-once media, the embodiment is not limited to write-once media. For example, the medium processing explained in the embodiment is also applicable to rewritable media.

When the system 100 is connected to the host 200, a dedicated driver is included in the five drives connected in parallel. Thereby, the system 100 makes the five drives (five disks) look like a large-capacity storage device, in the same manner as RAID (Redundant Arrays of Inexpensive Disks) used in an HDD (Hard Disk Drive). Thereby, the host 200 deals with the five drives of the system 100 as a large-capacity storage.

In the system 100, five disk drives 110 are arranged in a vertical direction. A slot 101 to insert the cassette 1 is opened in a position higher than the uppermost disk drive 110. A tray 111 of each disk drive 110 is pulled out in a direction opposite to the side on which the slot 101 is opened, that is, in the rear direction supposing that the side on which the slot 101 is opened is the front. When the cassette 1 is inserted through the slot 101, a plurality of optical disks taken out of the cassette 1 is loaded into the respective disk drives 110, by a carrying mechanism included in the system 100.

When the system 100 receives data outputted from the host 200 or the like together with a recording command, the system 100 divides the data, and performs recording processing in parallel for the optical disks by the disk drives. In the same manner, when the system 100 receives a read command from the host computer, the system 100 reads divided data items which are separately recorded on the optical disks by the disk drives 110, combines the divided data items into data, and outputs the combined data to the file system. When the cassette 1 is taken out of the system 100, post-processing for recording is performed, then the carrying mechanism returns the optical disks into the cassette 1, and the cassette 1 is ejected from the slot 101.

Next, flow of the recording processing of the information processing system according to the embodiment will be described as supplemental explanation. FIG. 6 is a block diagram illustrating a schematic configuration of the whole system including the host 200 and the system 100. The host 200 includes application software, an operating system (OS), the file system, and the dedicated driver. The system 100 includes a firm that controls the system, Drive 1, Drive 2, Drive 3, Drive 4, and Drive 5.

In the application software, recording data to be recorded and a recording destination are designated. Since the recording destination looks like a large-capacity storage from a layer upper than the dedicated driver, that is, from the application software, the OS, and the file system in FIG. 6. Thus, when the recording data is transmitted from the application software, the OS, and the file system to the dedicated driver, the recording destination shown is not recording destinations corresponding to the five drives 1-5, but a recording destination corresponding to the large-capacity storage. To actually record the data in Drives 1 to 5, it is necessary to convert the recording destination and recording data corresponding to the large-capacity storage into recording destinations and recording data items corresponding to the Drives 1 to 5. The dedicated driver performs the processing.

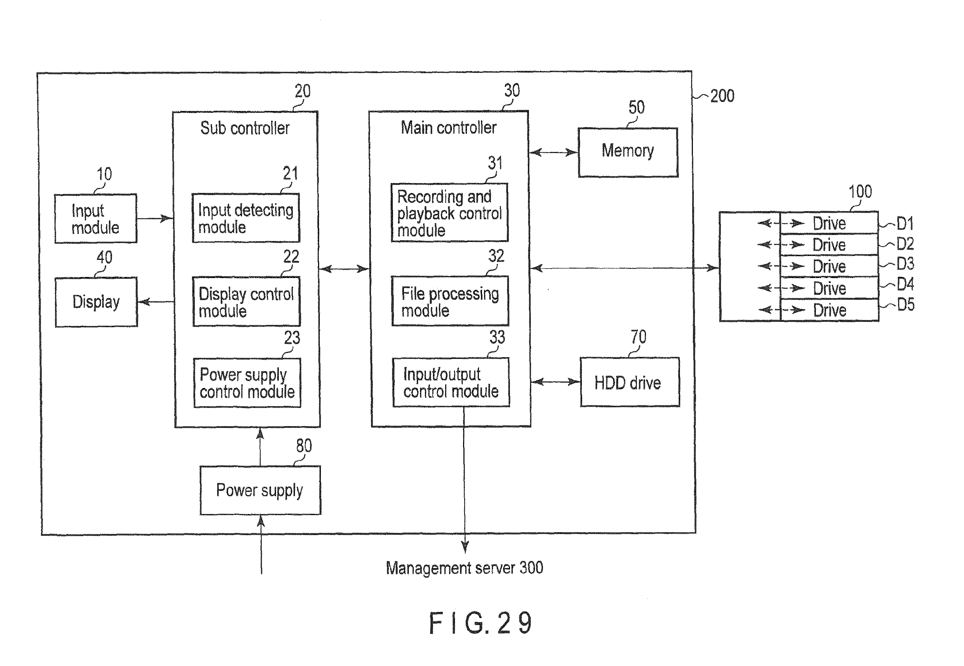

FIG. 29 is a block diagram illustrating a schematic configuration of the information processing system according to the embodiment. As illustrated in FIG. 29, the host 200 of the information processing system comprises an input module 10, a subsidiary control module 20, a main control module (controller) 30, a display 40, a memory 50, an HDD (Hard Disk Drive) drive 70, and a power supply 80.

The subsidiary control module 20 includes an input detecting module 21, a display control module 22, and a power control module 23. The main control module 30 (recording controller, playback controller, and determining module) includes a recording and playback processing module 31, a file processing module 32, and an input/output control module 33. The main control module 30 transmits display data to be displayed by the display 40 to the display control module 22. The display control module 22 controls the display 40 based on the display data. Thereby, the display 40 can displays display information corresponding to the display data.

For example, the input module 10 is provided with, for example, a power key, a recording key, and a playback key. The user can control operation of the information processing system by input operation using the input module 10.

The present embodiment shows the case in which the cassette 1 contains a plurality of (for example, five) optical disks, and a plurality of drives perform processing for the optical disks taken out of the cassette 1. However, the embodiment is not limited to the above case. For example, the embodiment also includes the case in which the cassette 1 contains an optical disk, and a drive performs processing for the optical disk taken out of the cassette 1.

The input/output control module 33 receives one or a plurality of files provided from the outside, and outputs the file(s) to, for example, the HDD drive 70. Thereby, the HDD drive 70 can record one or a plurality of files provided from the outside on the hard disk. The input/output control module 33 can also receive one or a plurality of files provided from the outside, and output the file(s) to the system 100. Thereby, the system 100 can record one or a plurality of files provided from the outside on one or a plurality of disks. The input/output control module 33 can also receive one or a plurality of files recorded on the hard disk, and output the file(s) to the system 100. Thereby, the system 100 can record one or a plurality of files recorded on the hard disk on one or a plurality of disks. The input/output control module 30 can also communicate with a server 300, and transmit and receive various information items.

The management server 300 includes a data processor 301, a communication module 302, and a storage module 303. Functions of the modules will be explained below in detail.

Next, an outline of information recording and playback performed by the information processing system will be explained hereinafter.

The information processing system divides an information data file into n (n is an integer larger than 1) divided information data files, each having almost the same size. The information processing system also generates a parity data file from the n divided information data files, and simultaneously records the n divided information data files and the parity data file on (n+1) WORM (Write Once Read Many) portable disks.

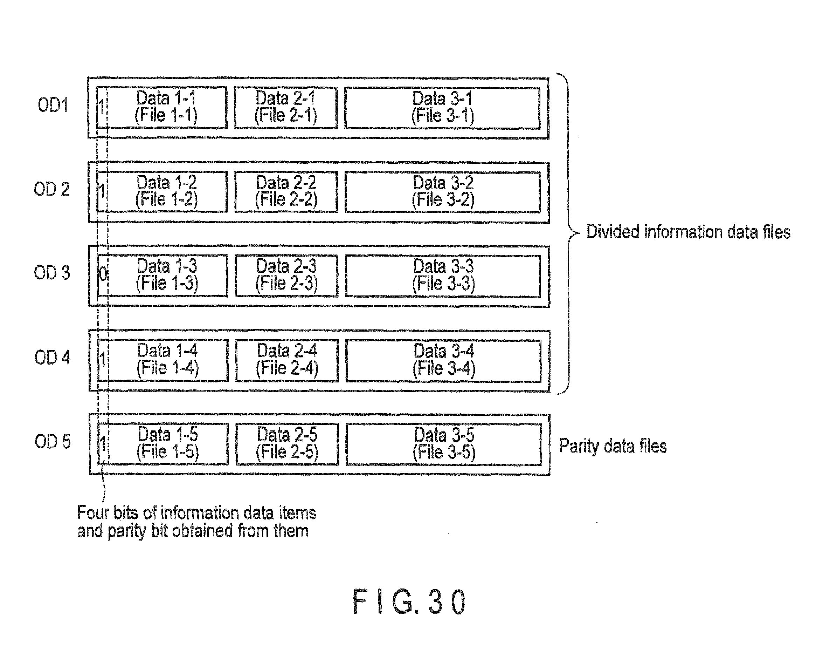

For example, as illustrated in FIG. 30, the information processing system (for example, system 100) divides Data 1 into Data 1-1, Data 1-2, Data 1-3, and Data 1-4, generates Data 1-5 (parity data file) from Data 1-1, Data 1-2, Data 1-3, and Data 1-4, and records Data 1-1, Data 1-2, Data 1-3, Data 1-4, and Data 1-5 in corresponding areas of optical disks OD1, OD2, OD3, OD4, and OD5. For example, a parity bit is obtained from a calculation result of an exclusive OR of bits of Data 1-1, Data 1-2, Data 1-3, and Data 1-4, and the parity bit (Data 1-5) is simultaneously recorded on the optical disk OD5.

In the same manner, the information processing system divides Data 2 into Data 2-1, Data 2-2, Data 2-3, and Data 2-4, generates Data 2-5 (parity data file) from Data 2-1, Data 2-2, Data 2-3, and Data 2-4, and simultaneously records Data 2-1, Data 2-2, Data 2-3, Data 2-4, and Data 2-5 in corresponding areas of optical disks OD1 to OD5.

In the same manner, the information processing system divides Data 3 into Data 3-1, Data 3-2, Data 3-3, and Data 3-4, generates Data 3-5 (parity data file) from Data 3-1, Data 3-2, Data 3-3, and Data 3-4, and simultaneously records Data 3-1, Data 3-2, Data 3-3, Data 3-4, and Data 3-5 in corresponding areas of the optical disks OD1 to OD5.

The following is explanation of an outline of medium processing (determination as to whether the medium is proper or improper, recognition of the cassette including an illegally-copied disk, determination of an improperly-prepared cassette).

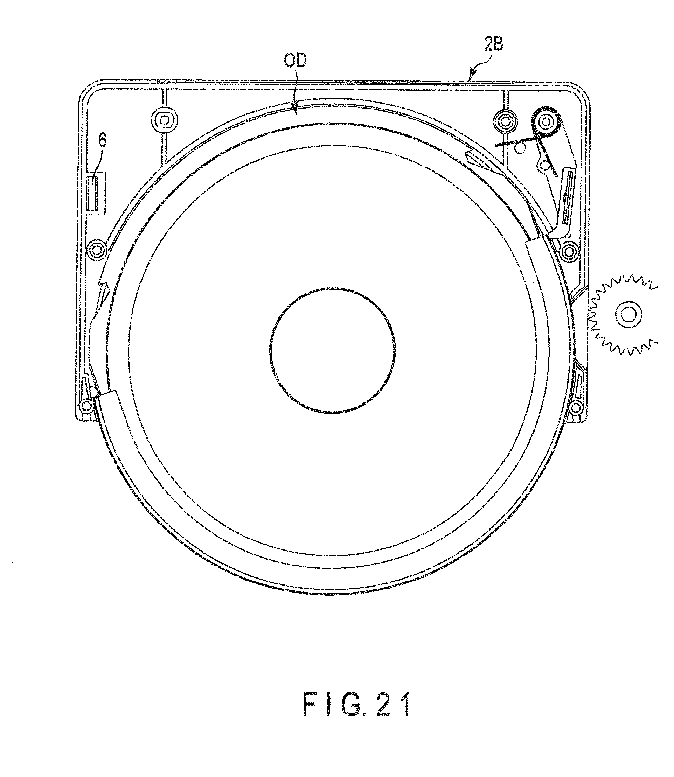

FIG. 20 is an outside drawing of the cassette containing, for example, the above optical disks 1 to 5. FIG. 21 illustrates an inside of the cassette with an upper cover thereof removed. There is a space between trays receiving the optical disks OD and an outer shell 2B, and an RFID (Radio Frequency IDentification) 6 is placed in a part of the space. An RFID reader included in the system reads data of the RFID. The RFID explained here corresponds to the cassette ID described above.

Supposing that a read-only or write-once RFID is used, the RFID of the cassette 1 includes a cassette ID 1 being identification information peculiar to the cassette 1, and medium ID1 to medium ID5 being identification information items of the five optical disks OD1 to OD5 contained in the cassette 1. The optical disk OD1 stores medium ID1 to medium ID5 and the cassette ID1, the optical disk OD2 stores medium ID1 to medium ID5 and the cassette ID1, the optical disk OD3 stores medium ID1 to medium ID5 and the cassette ID1, the optical disk OD4 stores medium ID1 to medium ID5 and the cassette ID1, and the optical disk OD5 stores medium ID1 to medium ID5 and the cassette ID1.

Then, the cassette 1 containing the optical disks OD1 to OD5 is shipped. Different cassette IDs are assigned to different cassettes, to guarantee uniqueness of the cassette. A management server of a cassette management center may manage the cassette information (cassette ID) in some cases.

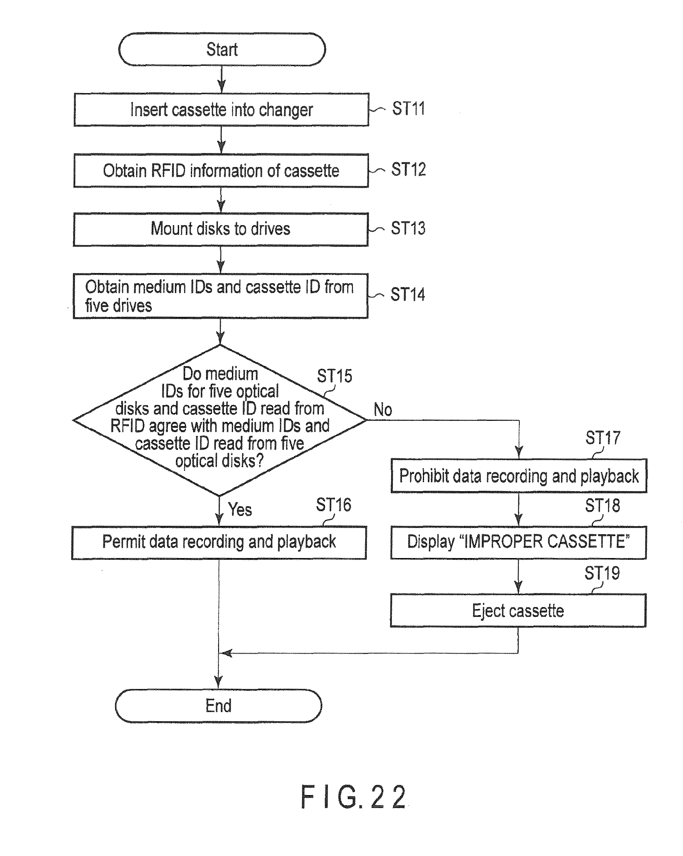

How to use the cassette will now be explained with reference to the flowchart of FIG. 22.

When the cassette is inserted into an insertion port of the changer (system 100) (ST11), the changer places the cassette in a cassette setting position. The changer (RFID reader) reads an RFID (cassette ID1 and medium ID1 to medium ID5) of the cassette (ST12). Then, the changer takes the five optical disks OD1 to OD5 from the cassette, moves the optical disks to the five drives D1 to D5 (ST13), and reads the medium ID1 to medium ID5 and the cassette ID1 recorded on each of the optical disks OD1 to OD5 (ST14).

Next, when the RFID serving as the cassette information includes the medium ID1 to medium ID5 read from the five disks and the cassette ID1 read from the five optical disks, the host 200 (main control module 30) determines that the cassette is a proper cassette containing the disks which were put into the cassette in shipping.

Specifically, the host 200 (main control module 30) compares the medium ID1 to medium ID5 for the five disks read from the RFID with the medium ID1 to medium ID5 read from the five optical disks, and compares the cassette ID1 read from the RFID with the cassette ID1 read from the five disks. When the medium ID1 to medium ID5 for the five disks read from the RFID agree with the medium ID1 to medium ID5 read from the five optical disks, and the cassette ID1 read from the RFID agrees with the cassette ID1 read from the five disks (ST15, YES), the host 200 determines that the cassette is a proper cassette containing the disks as shipped, and allows the system to play back information from the optical disks OD1 to OD5 contained in the cassette and record information on the optical disks OD1 to OD5. For example, the host may permit the system to perform only information playback, or both information playback and information recording (division recording of data on the five optical disks) (ST16).

The host 200, which has determined that the cassette is a proper cassette, instructs the changer to play back information based on input of an information playback command, and the changer plays back information from the optical disks OD1 to OD5 contained in the cassette. As another example, the host 200, which has determined that the cassette is a proper cassette, instructs the changer to play back information based on input of an information record command, and the changer plays back information from the optical disks OD1 to OD5 contained in the cassette.

When the RFID serving as the cassette information does not include the medium ID1 to medium ID5 read from the five disks or the cassette ID1 read from the five disks, the host 200 (main control module 30) determines that the cassette is an improper cassette.

Specifically, when the medium ID1 to medium ID5 for the five disks read from the RFID do not agree with the medium ID1 to medium ID5 read from the five optical disks or the cassette ID1 read from the RFID does not agree with the cassette ID1 read from the five disks (ST15, NO), the host 200 (main control module 30) determines that the cassette is an improper cassette, and prohibits at least one of information playback from the optical disks OD1 to OD5 contained in the cassette and information recording on the optical disks OD1 to OD5. For example, the host may prohibit only information playback, or both information playback and information recording (division recording of data on the five optical disks) (ST17).

The host 200 also prohibits recording and playback for the disks, and displays, on the display, a message that the cassette is an improper disk. The changer also displays a message that the cassette is an improper disk, on the display, and ejects the cassette.

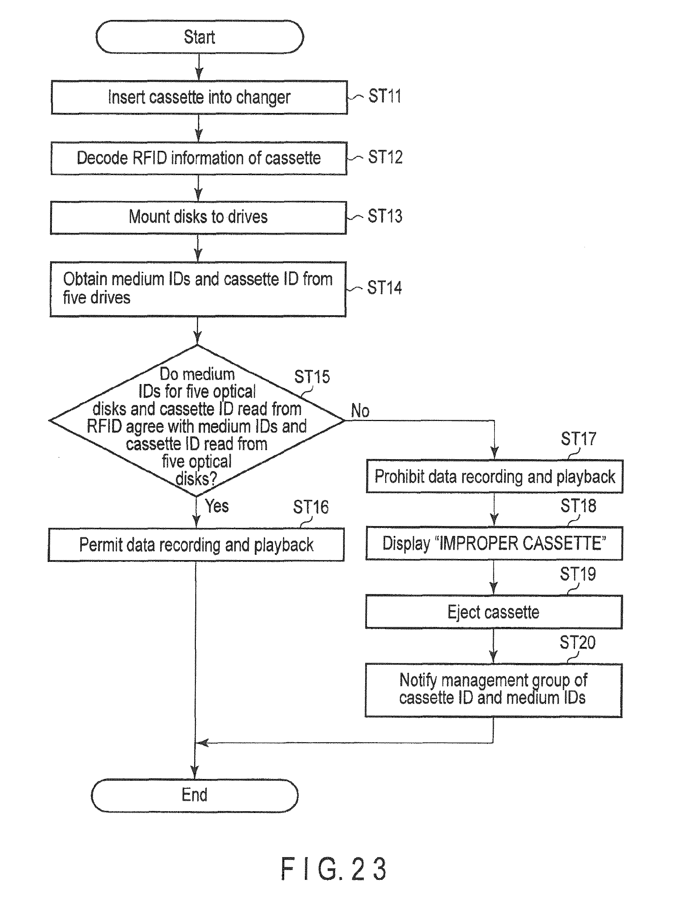

When it is determined by a method similar to the method illustrated in the flowchart of FIG. 22 that recording and playback are prohibited, the changer may notify the management server 300 of the cassette management center, for example, through the Internet, of information of the cassette ID1 and the five medium ID1 to medium ID5, which have been determined as improper (ST20 of FIG. 23).

In the case of using a read-only RFID, since the information in a read-only RFID is not rewritable after shipment, it can be proved by the above method that the cassette is a proper cassette.

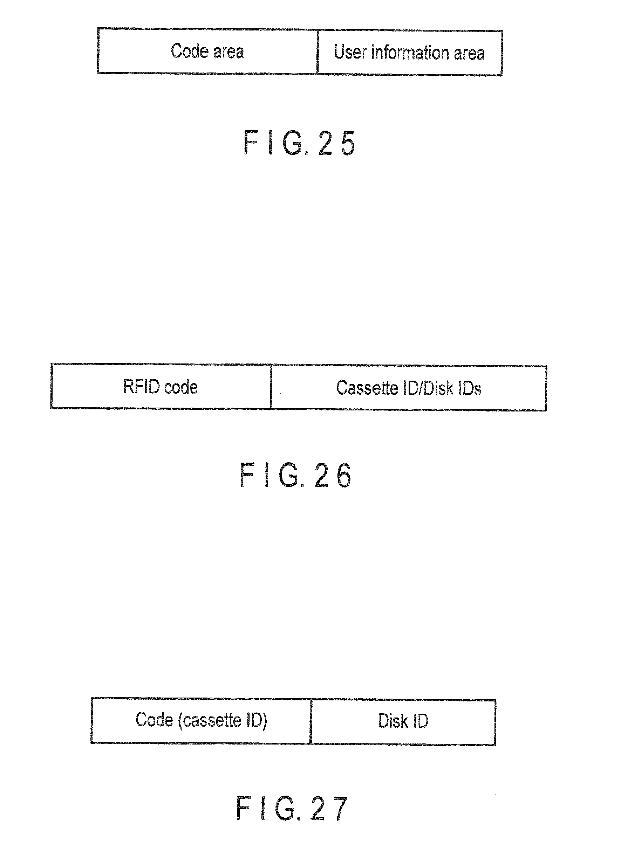

FIG. 25 and FIG. 33 are diagrams illustrating an example of the format of the RFID. The RFID includes a code area which is assigned when the RFID is manufactured and is not rewritable by the user, and a user information area which can be rewritten by the user. For example, as illustrated in FIG. 26, an RFID in which the code area of the RFID includes an RFID code and the user information area includes the cassette ID and disk IDs is referred to as "rewritable RFID". As another example, as illustrated in FIG. 27, an RFID in which the code area includes the cassette ID that is the same as the RFID code and the user information area includes the disk IDs is referred to as "read-only RFID".

As described above, according to the information processing system of the embodiment, the user can use the cassette without anxiety. For example, when a cassette containing disks other than the original disks is set on the changer, the information processing system can determine that the cassette is an improper cassette. Thereby, the information processing system can prohibit information playback for the improper cassette.

The information processing system can also notify the management server 300 of the management center of improper cassette information (cassette ID and medium IDs). The management server 300 can register the medium IDs included in the improper cassette information in an improper cassette/disk list, and exclude optical disks of medium IDs registered in the improper cassette/disk list from a proper list (management list).

Since the RFID can identify the cassette, the RFID can be used for shelf management of retrieving a cassette to be taken by using the RFID, when the cassette is taken out of the changer and stored in a shelf.

In the case where the disks are non-rewritable disks, such as DVD-R, DVD+R, and BD-R, even when data is erased by a tool included in the OS (Operating System) used in a PC (Personal Computer), for example, Explorer of Windows (Registered Trademark), it can be easily recognized that the data was rewritten, since data on the disk is physically left. Thus, it is possible for the above case to easily prove that the data is the original data, as well as the proper cassette as shipped.

The above explanation is based on the assumption that the RFID is a read-only RFID. The following is an explanation for the case of using a rewritable RFID.

The cassette ID being identification information peculiar to the cassette and medium IDs being identification information items of the optical disks contained in the cassette are encoded and recorded on a rewritable RFID. In addition, five optical disks OD1 to OD5 stores cassette ID1 in addition to medium ID1 to medium ID5 in shipping. Also in this case, the management server 300 of the cassette management center manages cassette IDs which are assigned to respective cassettes, to guarantee uniqueness of each cassette.

The following is explanation of how to use the cassette.

When the cassette is inserted into an insertion port of the changer, the changer places the cassette in a cassette setting position. The changer (RFID reader) reads an RFID (encoded cassette ID1 and encoded medium ID1 to medium ID5) of the cassette, and decodes the encoded cassette ID1 and the encoded medium ID1 to medium ID5. A decoding key is stored in the changer, and is not open to the public. Then, the changer takes the five optical disks OD1 to OD5 from the cassette, moves the optical disks to the five drives D1 to D5, and reads the medium ID1 to medium ID5 and the cassette ID1 recorded on each of the optical disks OD1 to OD5.

Next, when the RFID serving as the cassette information includes the medium ID1 to medium ID5 read from the five disks and the cassette ID1 read from the five optical disks, the host 200 (main control module 30) determines that the cassette is a proper cassette containing the disks which were put into the cassette in shipping.

Specifically, the host 200 (main control module 30) compares the medium ID1 to medium ID5 for the five disks read from the RFID with the medium ID1 to medium ID5 read from the five optical disks, and compares the cassette ID1 read from the RFID with the cassette ID1 read from the five disks. When the medium ID1 to medium ID5 for the five disks read from the RFID agree with the medium ID1 to medium ID5 read from the five optical disks, and the cassette ID1 read from the RFID agrees with the cassette ID1 read from the five disks, the host 200 determines that the cassette is a proper cassette containing the disks as shipped, and allows at least one of information playback from the optical disks OD1 to OD5 contained in the cassette and information recording on the optical disks OD1 to OD5.

When the RFID serving as the cassette information does not include the medium ID1 to medium ID5 read from the five disks or the cassette ID1 read from the five disks, the host 200 (main control module 30) determines that the cassette is an improper cassette.

Specifically, when the medium ID1 to medium ID5 for the five disks read from the RFID do not agree with the medium ID1 to medium ID5 read from the five optical disks or the cassette ID1 read from the RFID does not agree with the cassette ID1 read from the five disks, the host 200 (main control module 30) determines that the cassette is an improper cassette, and prohibits at least one of information playback from the optical disks OD1 to OD5 contained in the cassette and information recording on the optical disks OD1 to OD5.

The following is explanation of the case where the management server of the management center determines whether the cassette is a proper cassette or an improper cassette.

Cassette ID1 being identification information peculiar to the cassette is encoded and recorded on a rewritable RFID. The five optical disks OD1 to OD5 store medium ID1 to medium ID5 in shipping. The management server 300 stores a proper list (management list) including the cassette ID1 and the medium ID1 to medium ID5.

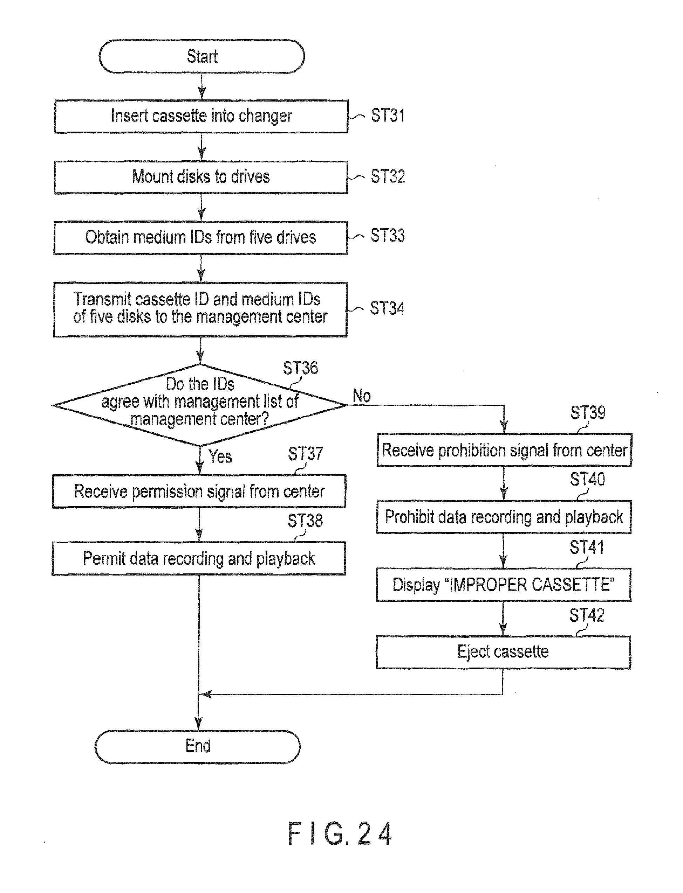

The determination process will now be explained with reference to the flowchart of FIG. 24.

When the cassette is inserted into an insertion port of the changer (system 100) (ST31), the changer places the cassette in a cassette setting position. The changer (RFID reader) reads an RFID (cassette ID1) of the cassette. Then, the changer takes the five optical disks OD1 to OD5 from the cassette, moves the optical disks to the five drives D1 to D5 (ST32), and reads the medium ID1 to medium ID5 recorded on each of the optical disks OD1 to OD5 (ST33).

Next, the host 200 transmits the encoded cassette ID1 read from the RFID and the medium ID1 to medium ID5 read from the five disks to the management server 300 (ST34).

The management server 300 receives the encoded cassette ID1 and the medium ID1 to medium ID5, decodes the received cassette ID1, and checks the decoded cassette ID1 and the medium ID1 to medium ID5 with the proper list. When the proper list includes the cassette ID1 and the medium ID1 to medium ID5 (when the proper list includes data correlating the cassette ID1 with the medium ID1 to medium ID5), the management server 300 determines that the cassette is a proper cassette.

Specifically, the management server 300 checks the received cassette ID and medium ID1 to medium ID5 with the cassette ID1 and medium ID1 to medium ID5 included in the proper list. When the received cassette ID and medium ID1 to medium ID5 agree with the cassette ID1 and medium ID1 to medium ID5 included in the proper list (ST36, YES), the management server 300 determines that the cassette is a proper cassette, and transmits proper cassette determination information to the host 200. When the received cassette ID do not agree with the cassette ID1 included in the proper list, or the received medium ID1 to medium ID5 do not agree with the medium ID1 to medium ID5 included in the proper list, the management server 300 determines that the cassette is an improper cassette, and transmits improper cassette determination information to the host 200.

When the host 200 receives the proper cassette determination information (ST37), the host 200 permits at least one of information playback from the optical disks OD1 to OD5 contained in the cassette and information recording on the optical disks OD1 to OD5. For example, the host 200 may permit only information playback, or both information playback and information recording (division recording of data on the five optical disks) (ST38).

When the host 200 receives the improper cassette determination information (ST39), the host 200 prohibits at least one of information playback from the optical disks OD1 to OD5 contained in the cassette and information recording on the optical disks OD1 to OD5. For example, the host 200 may prohibit only information recording, or both information playback and information recording (division recording of data on the five optical disks) (ST40).

The host 200 prohibits recording and playback for the disks and displays, on the display, a message that the disks are improper disks. The changer also displays a message that the disks are improper disks on the display (ST41), and ejects the cassette (ST42).

The following is explanation of the case of adopting rewritable optical disks.

Although rewritable optical disks are rewritable, the information processing system according to the embodiment deals with rewritable optical disks as direct read after write optical disks. When the information recorded once has become unnecessary, the information processing system formats the optical disks contained in the cassette all together, records format date-and-time information on the optical disks, and guarantees data on or after the format date and time as original data.

The structure of the cassette is the same as that illustrated in FIG. 20 and FIG. 21, although the optical disks contained in the cassette are rewritable disks.

The changer formats the optical disks contained in the cassette, when the cassette is used for the first time. When the changer formats the optical disks contained in the cassette based on a user's instruction, the format date-and-time information is encoded simultaneously with format of the optical disks, and recorded on the system management areas of the optical disks.

The changer records data on the rewritable optical disks, and erase data recorded on the optical disks, based on user's instructions. Recording and erasing are performed by substantially the same method as for direct read after write optical disks. Specifically, when data is rewritten, the changer records erase information with the data kept on the disk, and records the rewrite data on another free space. Thereby, rewritable disks can be processed in the same manner as direct read after write optical disks.

In addition, the changer initializes the disks, based on a format instruction from the user. New format date-and-time information is recorded on the disks, and data on or after the date and time is recognized as original data.

The host 200 transmits the format date-and-time information to the management server 300 of the management center, in addition to the cassette ID and the disk IDs. The management server determines whether the cassette is a proper cassette or not, and can recognize the time period in which data is guaranteed as original data.

By the above method, it is possible to provide storage media which enable safe use of the cassette as a proper and unique cassette, in only one of in the world not a copy or an improper cassette, at the time when the cassette has been inserted into the changer.

The management server can exclude a cassette suspected to be an improper cassette/disk from the proper product list.

Even rewritable optical disks include a non-rewritable area and a rewritable area. For example, the non-rewritable area stores the disk IDs, and the rewritable area stores the cassette ID. The cassette ID stored in the rewritable area may be encoded data to prevent use of an improper cassette/disk.

Usually, the optical disks contained in the cassette described above cannot be taken out by the user. However, a user who has a detailed knowledge of the structure of cassettes, or a user who intends to use an improper cassette/disk (intends to commit an injustice), may take the optical disks out of the cassette. When the user takes out the original optical disks from the cassette and inserts prepared other optical disks into the cassette, data of the original optical disks are replaced with data of the other optical disks. According to the embodiment, it is possible to determine that the cassette is an improper cassette, even if the optical disks are replaced like this.

C. For the purposes of this document, the following terms and definitions apply.

C.1 Terms and definitions

C.1.1 data

Date sent from the file system.

C.1.2 divided recording data

Data divided into 64 kbytes blocks.

C.1.3 formatting

An operation that prepares the disk to record user data (through creation of a system management area and the UDF management area) as well as to record UDF 1.5 format data information.

C.1.4 host

A computer (host) 200 connected to the parallel read/write system 100.

C.1.5 Info area

Data area for Info data and temporal parity.

C.1.6 Info data

Logical block address where VAT information and temporal parity information are written.

C.1.7 last disk

The disk that has the last divided recording data block includes the last logical block address data required by the file system.

C.1.8 last logical block address

The last logical block address required by the file system.

C.1.9 last recorded disk

The disk that has the last recorded logical cluster among 5 disks.

C.1.10 last recorded logical cluster address

Last logical cluster address at which data are recorded to media set (system 100/cassette 1).

C.1.11 logical block

Unit of allocation of a logical volume, note that, the logical block size is 2 kbytes, for example.

C.1.12 logical block address

An address relative to the beginning of a partition.

C.1.13 logical block address number

**[0241]** A logical block address expressed in decimal.

C.1.14 logical cluster

The smallest unit to be recorded by division among multiple disks, note that, the logical cluster size is 64 kbytes and consists of 32 logical blocks, for example.

C.1.15 logical cluster set

The set of identical logical cluster numbers among disks.

C.1.16 logical cluster set number

[0244]    The logical cluster set expressed in decimal.

C.1.17 media set

A combination of 5 disks which are named Disk1, Disk2, Disk3, Disk4 and Disk5.

C.1.18 packet

A unit that can be recorded in one operation and that is an integer number of logical clusters.

C.1.19 packet writing mode

Recording technology that allows users to create, modify, and delete files and directories on demand without the need to write to a whole disk.

C.1.20 parity disk

The disk that records parity data. The parity disk shall be Disk 5.

C.1.21 start disk

The disk that contains the first divided recorded data in a packet. The start disk includes the start logical block address data required by the file system.

C.1.22 start logical block address

The first logical block address required by the file system.

C.1.23 system management area

Data area in which necessary information for the parallel write/read system is recorded.

C.1.24 temporal parity

Parity to be recorded to the system management area if there is a disk to be unrecorded to the last logical cluster set in a packet. Temporal parity is used for parity disk types.

C.1.25 UDF management area

Data area in which user data sent from the file system are recorded. The file system can access this area.

C.1.26 user

A person or other entity (e.g., an application) that causes the invocation of the services provided by an implementation.

C.1.27 VAT

Virtual allocation table (VAT) provides a logical block address for each virtual address, note that, the Virtual Allocation Table (VAT) is used on sequentially written media to give the appearance of randomly writable media to the system. The existence of this partition is identified in the partition maps. The VAT shall only be recorded on sequentially written media. The VAT is a map that translates Virtual Addresses to logical addresses. It shall be recorded as a file identified by a File Entry ICB (VAT ICB) that allows great flexibility in building the table. The VAT ICB is the last sector recorded in any transaction. The VAT itself may be recorded at any location.

D Conventions and notations

Numbers in decimal notation are represented by the digits 0 to 9.
Numbers in hexadecimal notation are presented by the hexadecimal digits 0 to 9 and A to F in parentheses.
The setting of bits is denoted by ZERO and ONE.

E Recording area for non-parity disk type

E.1 General

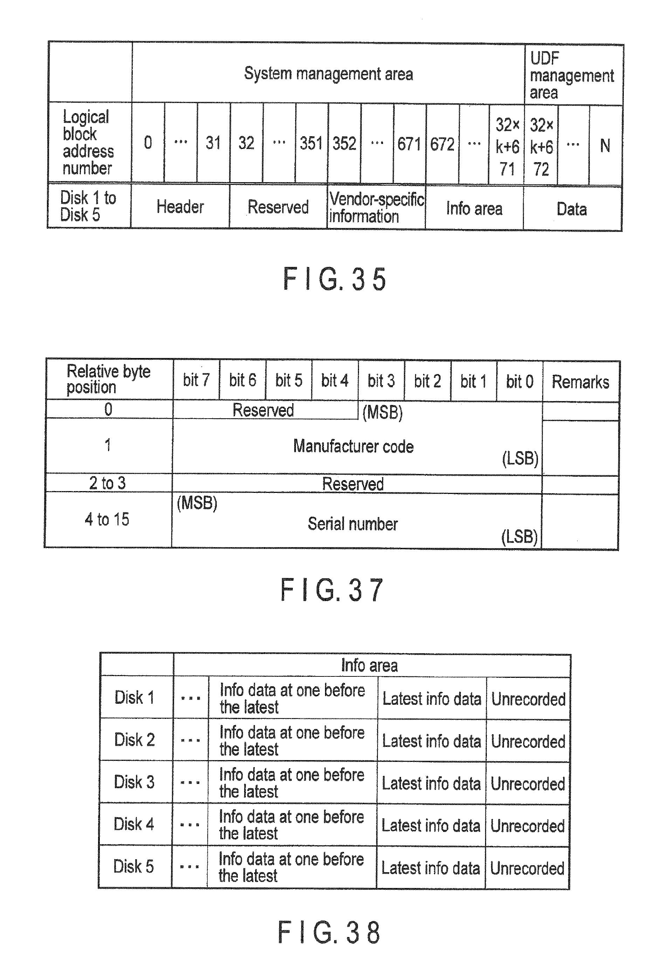

The recording area shall consist of system management area and UDF management area. The header, vendor-specific information, and parity information shall be recorded in the system management area in order to realize the parallel read/write method. Data sent from UDF file system shall be recorded in the UDF management area. The last logical block address of the UDF management area differs by the disk type used. The allocation of the recording area is specified in FIG. 35.
In FIG. 35, k is the logical cluster number of the Info area that the user selects, and N is the last logical block address. And k shall be more than or equal to 1.

E.2 System management area

E.2.1.1 General

The system management area is managed by the parallel read/write system. The system management area shall consist of a header, vendor-specific information, and the Info area. The size of the Info area is variable and selected by the user at formatting. The Info area size shall not be changed after formatting.

E.2.1.2 Header

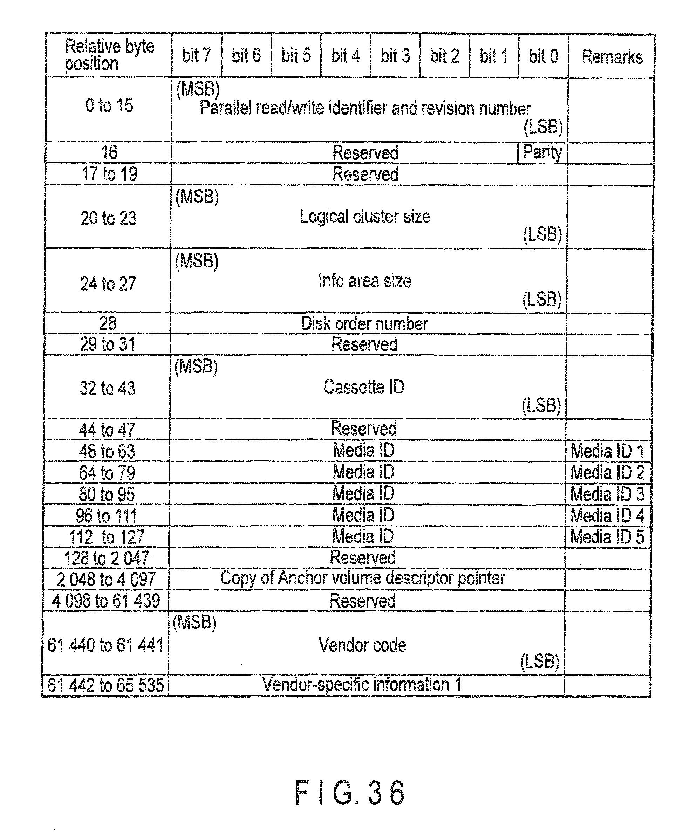

The header shall consist of a parallel read/write identifier, parity disk applied identifier, logical cluster size, disk order number, cassette ID, media ID, vendor code, and vendor-specific information. The header format shall be as shown in FIG. 36.
In FIG. 36,

Bytes 0 to 15: Parallel read/write identifier. These bytes shall specify the parallel read/write identifier and revision number and shall be filled with "R-format 1.0" in ASCII characters. Any other setting is prohibited in this Ecma Standard.
Byte 16: Parity disk applied identifier. This byte shall specify the identifier for whether the parity disk is applied. When the parity disk is applied, this byte shall be set to (01h). When parity disk is not applied, this byte shall be set to (00h).
Bytes 17 to 19: These bytes shall be reserved.
Bytes 20 to 23: Logical cluster size. These bytes shall specify the data size of the logical cluster and shall be set to (00 01 00 00h). Any other setting is prohibited in this Ecma Standard.
Bytes 24 to 27: Info area size. These bytes shall specify the info area size.
Byte 28: Disk order number. This byte shall specify the disk order number in the cassette expressed in hexadecimal.
Bytes 29 to 31: These bytes shall be reserved.
Bytes 32 to 43: Cassette ID. These bytes shall specify the cassette ID number.
Bytes 44 to 47: These bytes shall be reserved.
Bytes 48 to 63: Media ID for Disk1. These bytes shall specify the media ID for Disk1 as follows.
Bits 3 to 0 in byte 48 shall be bits 11 to 8 of the disk manufacturer code.
Bits 7 to 0 in byte 49 shall be bits 7 to 0 of the disk manufacturer code.

Bytes 50 to 51 shall be reserved and set to (00h).

Bytes 52 to 63 shall be the disk serial number.

Bytes 64 to 79: Media ID for Disk2. These bytes shall specify the media ID for Disk2 as follows.

Bits 3 to 0 in byte 64 shall be bits 11 to 8 of the disk manufacturer code.

Bits 7 to 0 in byte 65 shall be bits 7 to 0 of the disk manufacturer code.

Bytes 66 to 67 shall be reserved and set to (00h). Bytes 68 to 79 shall be the disk serial number.

Bytes 80 to 95: Media ID for Disk3. These bytes shall specify the media ID for Disk3 as follows.

Bits 3 to 0 in byte 80 shall be bits 11 to 8 of the disk manufacturer code.

Bits 7 to 0 in byte 81 shall be bits 7 to 0 of the disk manufacturer code.

Bytes 82 to 83 shall be reserved and set to (00h).

Bytes 84 to 95 shall be the disk serial number.

Bytes 96 to 111: Media ID for Disk4. These bytes shall specify the media ID for Disk4 as follows.

Bits 3 to 0 in byte 96 shall be bits 11 to 8 of the disk manufacturer code.

Bits 7 to 0 in byte 97 shall be bits 7 to 0 of the disk manufacturer code.

Bytes 98 to 99 shall be reserved and set to (00h).

Bytes 100 to 111 shall be the disk serial number.

Bytes 112 to 127: Media ID for Disk5. These bytes shall specify the media ID for Disk5 as follows.

Bits 3 to 0 in byte 112 shall be bits 11 to 8 of the disk manufacturer code.

Bits 7 to 0 in byte 113 shall be bits 7 to 0 of the disk manufacturer code.

Bytes 114 to 115 shall be reserved and set to (00h).

Bytes 116 to 127 shall be the disk serial number.

Bytes 128 to 2047: These bytes shall be reserved and set to (00h).

Bytes 2048 to 4097: Copy of Anchor volume descriptor pointer. The Anchor Volume Descriptor Pointer contains three things of interest:

1. Static structures that may be used to identify and verify integrity of the disc;
2. Location of the Main Volume Descriptor Sequence; and
3. Length of the Main Volume Descriptor Sequence.

Bytes 4098 to 61439: These bytes shall be reserved and set to (00h).

Bytes 61440 to 61441: Vendor code. These bytes shall specify the vendor code in ASCII characters, specified in ECMA-94.

Bytes 61442 to 65535: Vendor-specific information 1. These bytes are used for vendor-specific information.

The media ID structure shall be as shown in FIG. 37.

E.2.1.3 Info area

The Info area structure is different between the non-parity disk type and parity disk type. The size of Info area can be selected by the user and shall not be changed after formatting, see the Clause E.1.

The Info area structure shall be as shown in FIG. 38. The latest info data shall be recorded to Disk1 through Disk5 repeatedly. Info data shall consist of parallel read/write mode identifier, its revision number, and VAT logical block address.

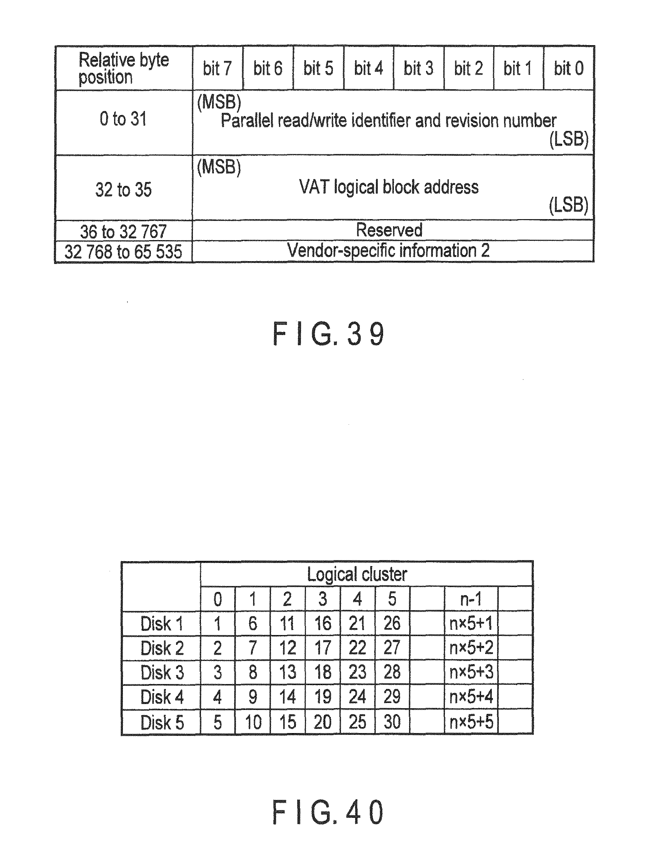

The Info data structure for the non-parity disk type shall be as shown in FIG. 39.

The Info data shall be recorded in units of logical clusters to each disk of 5 disks in each packet. The logical block address of VAT shall be recorded in order to reproduce the previously recorded data easily, even if the current data recording fails.

In FIG. 39,

Bytes 0 to 31: Parallel read/write identifier and revision number. These bytes shall contain "R-Format-Information Revl.0" in ASCII characters, specified in ECMA-94. Any other setting is prohibited in this Ecma Standard.

Bytes 32 to 35: VAT logical block address. These bytes shall contain the latest VAT logical block address in hexadecimal.

Bytes 36 to 32767: These bytes shall be reserved and filled with (00h).

Bytes 32768 to 65535: Vendor-specific information 2. These bytes are used for vendor-specific information.

E.3 UDF management area

The UDF management area shall be formatted for packet writing mode and shall be recorded so as to satisfy UDF 1.5. User data shall be recorded to each UDF management area on Disk1 through Disk5. The logical block address shall be from 32 x k + 672 to N. The recording order of the divided recording data shall be as shown below and as shown in FIG. 40.

In FIG. 40, each column is a logical cluster set:

1) Logical cluster 0 in the UDF management area on Disk1;
2) Logical cluster 0 in the UDF management area on Disk2;
3) Logical cluster 0 in the UDF management area on Disk3;
4) Logical cluster 0 in the UDF management area on Disk4;
5) Logical cluster 0 in the UDF management area on Disk5;
6) Logical cluster 1 in the UDF management area on Disk1;
7) Logical cluster 1 in the UDF management area on Disk2;
8) Logical cluster 1 in the UDF management area on Disk3;
9) Logical cluster 1 in the UDF management area on Disk4;
10) Logical cluster 1 in the UDF management area on Disk5; and
11) ....

F Recording area for parity disk type

F.1 General

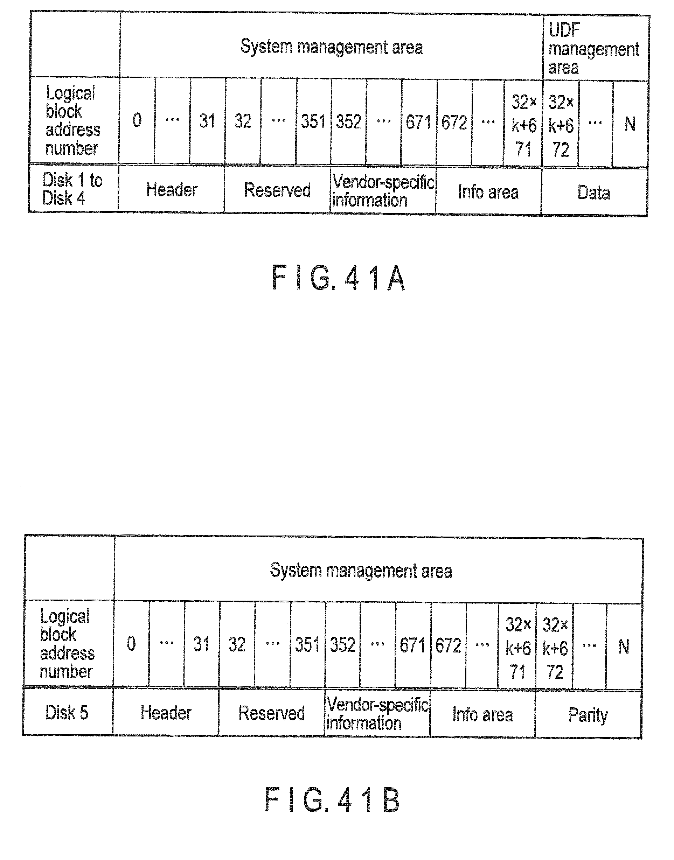

The recording area shall consist of the system management area and UDF management area. The header, vendor-specific information, and parity information shall be recorded in the system management area in order to realize the parallel read/write method. Data sent from the UDF file system shall be recorded in the UDF management area. The last logical block address of the UDF management area differs by disk type used. The allocation of recording area shall be as specified in FIGS. 41A and 41B.

In FIG. 41A as for Disk1 through Disk4, and in FIG. 41B as for Disk5.

In FIGS. 41A and 41B, k is the logical cluster number of Info area that user selects, and N is the last logical block address. And k shall be more than or equal to 1.

F.2 System management area

F.2.1 General

The system management area is managed by the parallel read/write system. The system management area shall consist of the header, vendor-specific information, info area, and parity data. The info area size is variable and selected by the user at formatting. The info area size shall not be changed after formatting.

F.2.2 Header

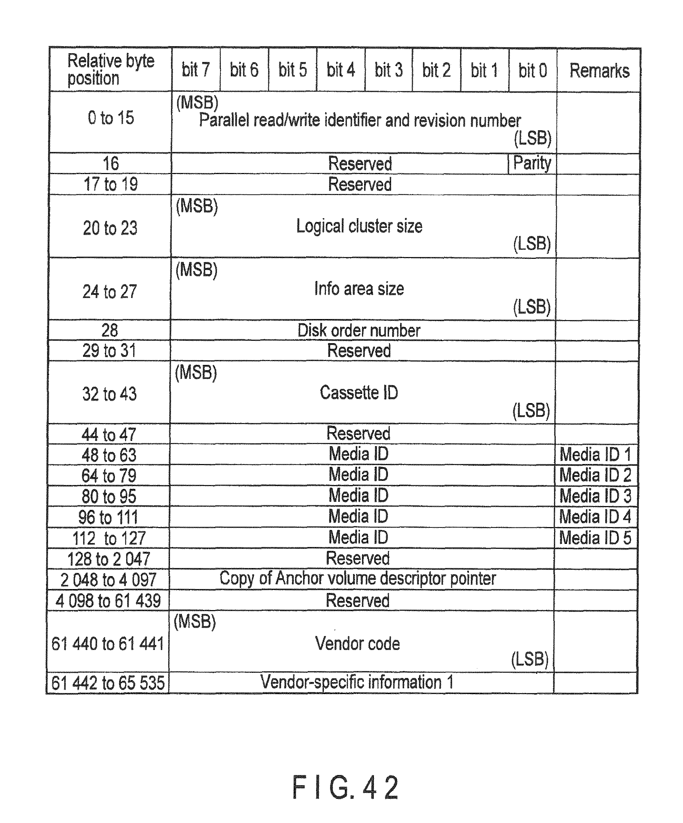

The parallel read/write identifier, parity disk applied identifier, logical cluster size, disk order number, cassette ID, media ID, vendor code and vendor-specific information 1 shall be recorded in the header. The header format shall be as shown in FIG. 42.

In FIG. 42,

Bytes 0 to 15: Parallel read/write identifier. These bytes shall specify the parallel read/write identifier and revision number, and shall be filled with "R-format 1.0" in ASCII characters. Any other setting is prohibited in this Ecma Standard.

Byte 16: Parity disk applied identifier. This byte shall specify the identifier for whether the parity disk is applied. When the parity disk is applied, this byte shall be set to (01h). When the parity disk is not applied, this byte shall be set to (00h).

Bytes 17 to 19: These bytes shall be reserved.

Bytes 20 to 23: Logical cluster size. These bytes shall specify the data size of logical clusters and shall be set to (00 01 00 00h). Any other setting is prohibited in this Ecma Standard.

Bytes 24 to 27: Info area size. These bytes shall specify the info area size.

Byte 28: Disk order number. This byte shall specify the disk order number in the cassette expressed in hexadecimal.

Bytes 29 to 31: These bytes shall be reserved.

Bytes 32 to 43: Cassette ID. These bytes shall specify the cassette ID number.

Bytes 44 to 47: These bytes shall be reserved.

Bytes 48 to 63: Media ID for Disk1. These bytes shall specify the media ID for Disk1 as follows.

Bits 3 to 0 in byte 48 shall be bits 11 to 8 of the disk manufacturer code.

Bits 7 to 0 in byte 49 shall be bits 7 to 0 of the disk manufacturer code.

Bytes 50 to 51 shall be reserved and set to (00h).

Bytes 52 to 63 shall be the disk serial number.

Bytes 64 to 79: Media ID for Disk2. These bytes shall specify the media ID for Disk2 as follows.

Bits 3 to 0 in byte 64 shall be bits 11 to 8 of the disk manufacturer code.

Bits 7 to 0 in byte 65 shall be bits 7 to 0 of the disk manufacturer code.

Bytes 66 to 67 shall be reserved and set to (00h).

Bytes 68 to 79 shall be the disk serial number.

Bytes 80 to 95: Media ID for Disk3. These bytes shall specify the media ID for Disk3 as follows.

Bits 3 to 0 in byte 80 shall be bits 11 to 8 of the disk manufacturer code.

Bits 7 to 0 in byte 81 shall be bits 7 to 0 of the disk manufacturer code.

Bytes 82 to 83 shall be reserved and set to (00h).

Bytes 84 to 95 shall be the disk serial number.

Bytes 96 to 111: Media ID for Disk4. These bytes shall specify the media ID for Disk4 as follows.

Bits 3 to 0 in byte 96 shall be bits 11 to 8 of the disk manufacturer code.

Bits 7 to 0 in byte 97 shall be bits 7 to 0 of the disk manufacturer code.

Bytes 98 to 99 shall be reserved and set to (00h).

Bytes 100 to 111 shall be the disk serial number.

Bytes 112 to 127: Media ID for Disk5. These bytes shall specify the media ID for Disk5 as follows.

Bits 3 to 0 in byte 112 shall be bits 11 to 8 of the disk manufacturer code.

Bits 7 to 0 in byte 113 shall be bits 7 to 0 of the disk manufacturer code.

Bytes 114 to 115 shall be reserved and set to (00h).

Bytes 116 to 127 shall be the disk serial number.

Bytes 128 to 2047: These bytes shall be reserved and set to (00h).

Bytes 2048 to 4097: Copy of Anchor volume descriptor pointer. The Anchor Volume Descriptor Pointer contains three things of interest:

1. Static structures that may be used to identify and verify integrity of the disc;
2. Location of the Main Volume Descriptor Sequence; and
3. Length of the Main Volume Descriptor Sequence.

Bytes 4098 to 61439: These bytes shall be reserved and set to (00h).

Bytes 61440 to 61441: Vendor code. These bytes shall specify vendor code in ASCII characters, specified in ECMA-94.

Bytes 61442 to 65535: vendor-specific information 1. These bytes are used for vendor-specific information.

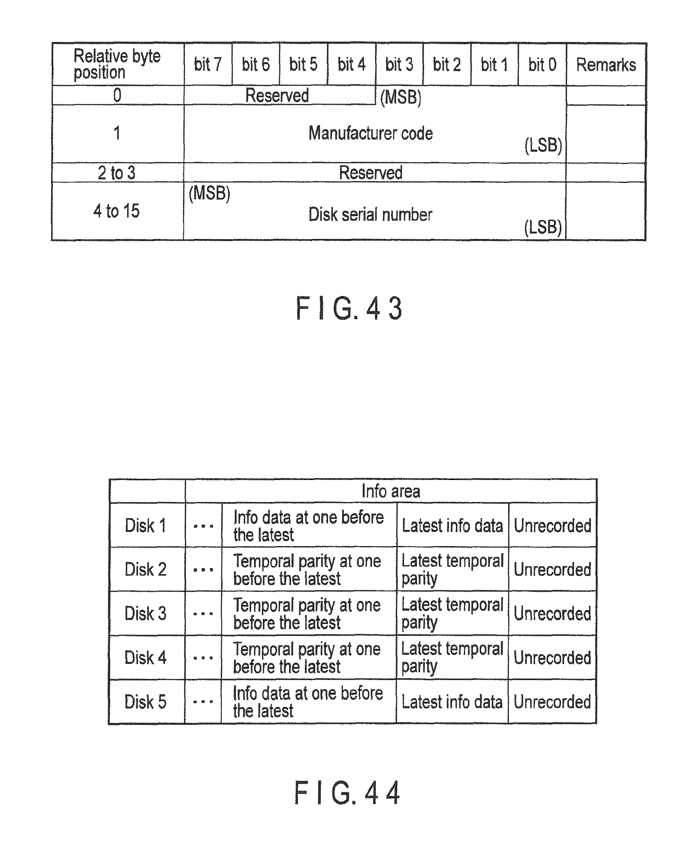

The media ID structure shall be as shown in FIG. 43.

F.2.3 Info area

F.2.3.1 General

The Info area structure is different between non-parity disk type and parity disk type.

F.2.3.2 Info area structure for parity disk type

The size of Info area can be selected by user and shall not be changed after formatting (see the Clause F.1).

The Info area structure shall be as shown in FIG. 44. The latest Info data shall be recorded to Disk1 and Disk5. Info data shall consist of the parallel read/write mode identifier, its revision number, and VAT logical block address.

F.2.3.3 Info data for parity disk type

Info data shall be recorded to the next logical cluster of the last recorded logical cluster at the Info area on Disk1 and Disk5 at each packet, as shown in FIG. 44.

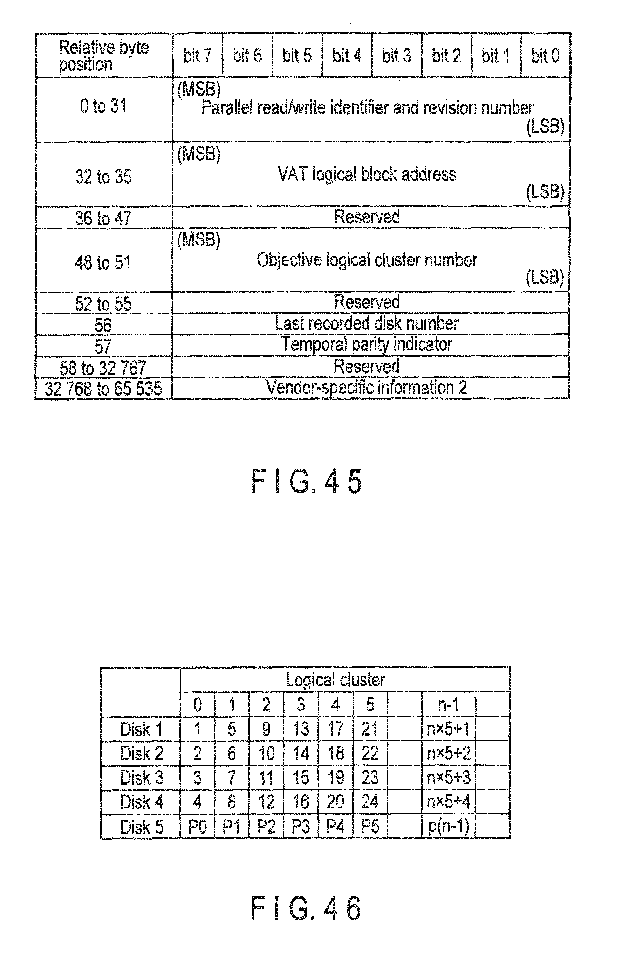

The Info data structure for the parity disk type shall be as shown in FIG. 45.

The logical block address of VAT shall be recorded in order to detect previously recorded data easily, even if the current data recording fails.

In FIG. 44,

Bytes 0 to 31: Parallel read/write identifier and revision number. These bytes shall contain "R-Format-Information Rev1.0" in ASCII characters, specified in ECMA-94. Anyother setting is prohibited in this Ecma Standard.

Bytes 32 to 35: VAT logical block address. These bytes shall contain the latest VAT logical block address in hexadecimal.

Bytes 36 to 47: These bytes shall be reserved and filled with (00h).

Bytes 48 to 51: Objective logical cluster number. These bytes shall contain the objective logical cluster number in hexadecimal.

Bytes 52 to 55: These bytes shall be reserved and filled with (00h).

Bytes 56: Last recorded disk number. This byte shall be the last recorded disk number in hexadecimal: (01h) to (04h).

Bytes 57: Temporal parity indicator. This byte shall be set as follows.

(00h): Temporal parity is invalid.

(FFh): Temporal parity is valid.

Any other setting is prohibited in this Ecma Standard, note that, a setting of (00h) means that the objective logical cluster number and the logical recorded disk number are invalid.

Bytes 58 to 32767: These bytes shall be reserved and filled with (00h).

Bytes 32768 to 65535: Vendor-specific information 2. These bytes are used for vendor-specific information.

F.3 UDF management area

The UDF management area shall be formatted for packet writing mode and shall be recorded so as to satisfy.

UDF 1.5. User data shall be recorded to each UDF management area on Disk1 through Disk4. The logical block address shall be from $32 \times k + 672$ to N. Parity for each logical cluster on Disk1 through Disk4 shall be recorded at the same logical cluster on Disk5.

The recording order of the divided recording data shall be as specified below:

1) Logical cluster 0 in the UDF management area on Disk1;
2) Logical cluster 0 in the UDF management area on Disk2;
3) Logical cluster 0 in the UDF management area on Disk3;
4) Logical cluster 0 in the UDF management area on Disk4;
5) Logical cluster 1 in the UDF management area on Disk1;
6) Logical cluster 1 in the UDF management area on Disk2;
7) Logical cluster 1 in the UDF management area on Disk3;
8) Logical cluster 1 in the UDF management area on Disk4;
9) ... .

In FIG. 46, each column is a logical cluster set.

F.4 Parity disk

When parity is applied, the parity disk shall be Disk5. Parity for each logical cluster on Disk1 through Disk4 shall be recorded at the same logical cluster on Disk5.

If the logical cluster on Disk4 is recorded, the parity shall be recorded to Disk5. The parity shall be generated according to the following formula.

```
bit × = (bit × of Disk1) XOR (bit × of Disk2) XOR
(bit × of Disk3) XOR (bit × of Disk4).
```

If the last logical cluster in a packet is not recorded on Disk4, temporal parity shall be recorded because the parity is not defined.

F.5 Temporal parity

When the last logical cluster in a packet is not recorded on Disk4, temporal parity shall be recorded to the next logical cluster of the last recorded logical cluster in the info areas on Disk2, Disk3, and Disk4.

The temporal parity shall be generated according to the following formulas.

When the last recorded disk is Disk3,

$$\texttt{bit × = (bit × of Disk1) XOR (bit × of Disk2) XOR (bit × of Disk3).}$$

When the last recorded disk is Disk2,

$$\texttt{bit × = (bit × of Disk1) XOR (bit × of Disk2).}$$

When the last recorded disk is Disk1,

$$\texttt{bit × = bit × of Disk1.}$$

If the last logical cluster in a packet is recorded on Disk4, the temporal parity areas on Disk2, Disk3, and Disk4 shall be filled with (00h).

G Signal quality of the recorded data

The signal quality of recorded data shall satisfy each physical format standard or specifications.

H. How to implement write/read operations

H.1 System structure

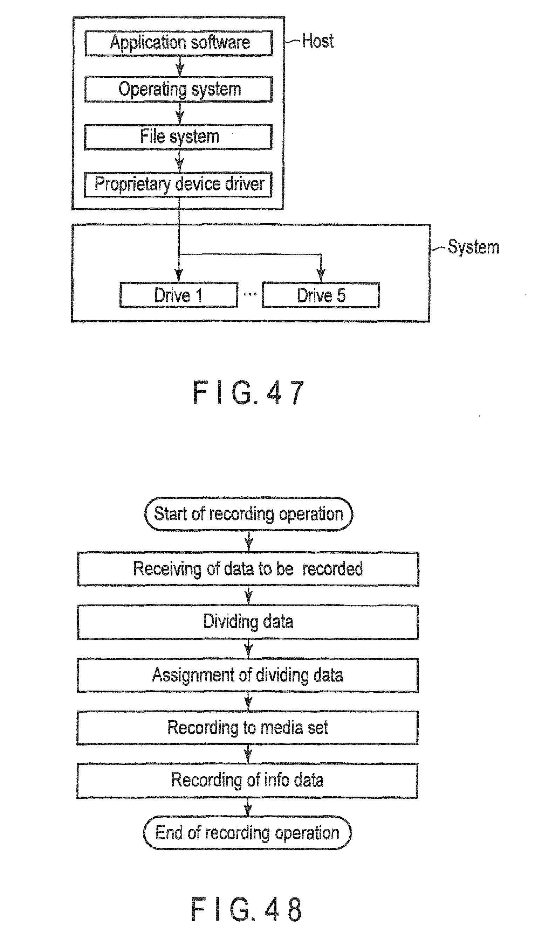

FIG. 47 shows a block diagram of the overall system configuration including the host 200 and the system 100. The host 100 consists of application software, an operation system, a file system and a proprietary device driver. The system 100 consists of system control firmware, Drive1, Drive2, Drive3, Drive4, and Drive5. The proprietary device driver enables the host to recognize five drives as a single drive. The proprietary device driver controls the five drives to record the data.

H.2 Non-parity disk type

H.2.1 Flow of data recording operations

FIG. 48 shows a flow chart for data recording operations.

When the media set is inserted into the system, the file system requests the remaining recordable data capacity and the last recorded logical block address from the proprietary device driver. The proprietary device driver acquires the remaining recordable data capacity of the 5 disks and the last recorded logical cluster set number and calculates the total remaining recordable data capacity and the last recorded logical block address. Then, the proprietary device driver returns the total remaining recordable data capacity and the last recorded logical block address to the file system.

In FIG. 48,

1) Receiving data to be recorded

The proprietary device driver receives data to be recorded from the file system of the host.

2) Dividing data

The proprietary device driver divides the data from the host and makes multiple divided recording data in order to record the data to each disk. The proprietary device driver divides the data into multiple divided recording data blocks. The divided recording data block size is 64 kbytes. Here, the total number of divided recording data block is n and the divided recording data blocks are D1-1, D1-2, ... , D1-n.

3) Assignment of dividing data

The file system requests the recordable logical block address from the proprietary device driver. The proprietary device driver acquires the recordable ogical clusters of 5 disks and calculates the last disk. Then, the proprietary device driver returns the recordable logical block address converted from the recordable logical clusters of the last disk of the 5 disks to the file system.

The file system sends the start recording logical block address to the proprietary device driver. The proprietary device driver calculates which logical cluster of 5 disks should be recorded to first; in other words, it determines the start disk and its start logical cluster.

The proprietary device driver assigns the multiple divided recording data blocks continuously to the start logical cluster and the start disk in the recordable area.

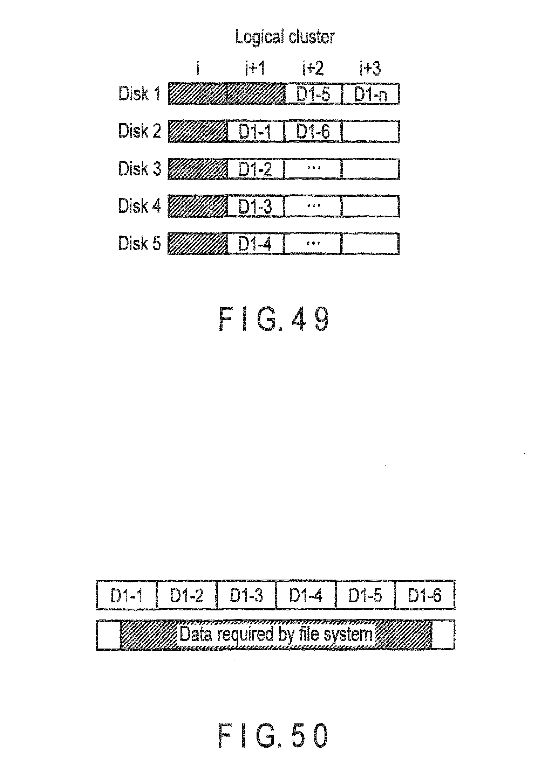

The hatched part in FIG. 49 shows an example of logical clusters with data already recorded. In FIG. 49, the last recorded logical cluster number is i+1, the last recorded disk is Disk1, and the top disk is Disk2. The recording data D1 are assigned from the logical cluster number i+1 on Disk2 to the logical cluster number i+3 on Disk1.

4) Recording to media set

The proprietary device driver orders recording of an assigned divided recording data block to each drive. According to this operation, each drive records the assigned divided recording data block to each disk. Parallel data recording is done as a result.

5) Recording of Info data

The proprietary device driver orders the parallel read/write identifier and VAT logical block address to be recorded in the Info area on each of the multiple disks when the proprietary device driver receives "disk unload" command or the user interruption.

H.2.2 Data reproduction

When a media set is loaded, the file system requests the remaining data capacity and the last recording address. The proprietary device driver calculates the total remaining data capacity and the last recording address using the remaining data capacity of the 5 disks and the last recording address. The proprietary device driver returns to the file system the remaining data capacity and the last recording address.

<Calculation of information for objective data>

When the file system requests data reproduction, the proprietary device driver calculates the following information for the objective data in the media set from the logical block address and its size required by the file system:

    1) Start reading logical cluster set number;
    2) Start reading disk number;
    3) Last reading logical cluster set number; and
    4) Last reading disk number.

<Data reproduction>

Data are reproduced according to the above address information. The data are recorded in units of logical clusters as shown in FIG. 49; therefore the proprietary device driver orders D1-1, D1-2, D1-3, D1-4, D1-5, and 01-6 to be read and connects the data as shown in FIG. 50.

The proprietary device driver sends data requested by the file system.

H.3 Parity disk type

H.3.1 Flow of data recording operations

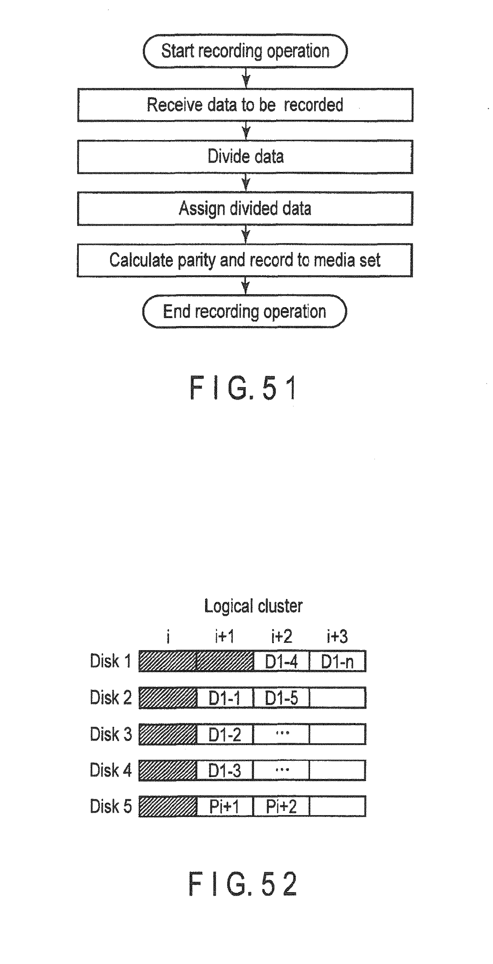

FIG. 51 shows the flow chart for data recording operations.

When the media set is inserted into the system, the file system requests the remaining recordable data capacity and the last recorded logical block address from the proprietary device driver. The proprietary device driver acquires remaining recordable data capacity of 4 disks except for the parity disk and the last recorded logical cluster set number, and calculates the total remaining recordable data capacity and the last recorded logical block address. Then, the proprietary device driver returns to the file system the total remaining recordable data capacity and the last recorded logical block address.

H.3.1.1 Receiving data to be recorded

The proprietary device driver receives data to be recorded from the file system of the host.

H.3.1.2 Dividing data

The proprietary device driver divides the data received from the file system and makes multiple divided recording data in order to record to each disk. The proprietary device driver divides the data among multiple divided recording data blocks. The divided recording data block size is 64 kbytes. Here the total number of divided recording data block is n and divided recording data blocks are D1-1, D1-2, ..., D1-n.

H.3.1.3 Assignment of dividing data

The file system requests the recordable logical block address from the proprietary device driver.

The proprietary device driver acquires the recordable logical clusters of 5 disks and calculates the last disk. Then the proprietary device driver returns to the file system the recordable logical block address converted from the recordable logical clusters of the last disk of the 5 disks.

The file system sends the start recording logical block address to the proprietary device driver. The proprietary device driver calculates which logical cluster of the 5 disks should be recorded at first; in other words, it determines the start disk and its start logical cluster.

The proprietary device driver assigns the multiple divided recording data blocks continuously to the start logic cluster number and the start disk in recordable area. The hatched part in FIG. 52 shows an example of logical clusters with data already recorded. In FIG. 52, the last recorded logical cluster number is i+1, the last recorded disk is Disk1, and the start disk is Disk2. The recording data D1 are assigned from the logical cluster number i+1 on Disk2 to the logical cluster number i+3 on Disk1.

H.3.1.4 Parity calculation and recording to media set

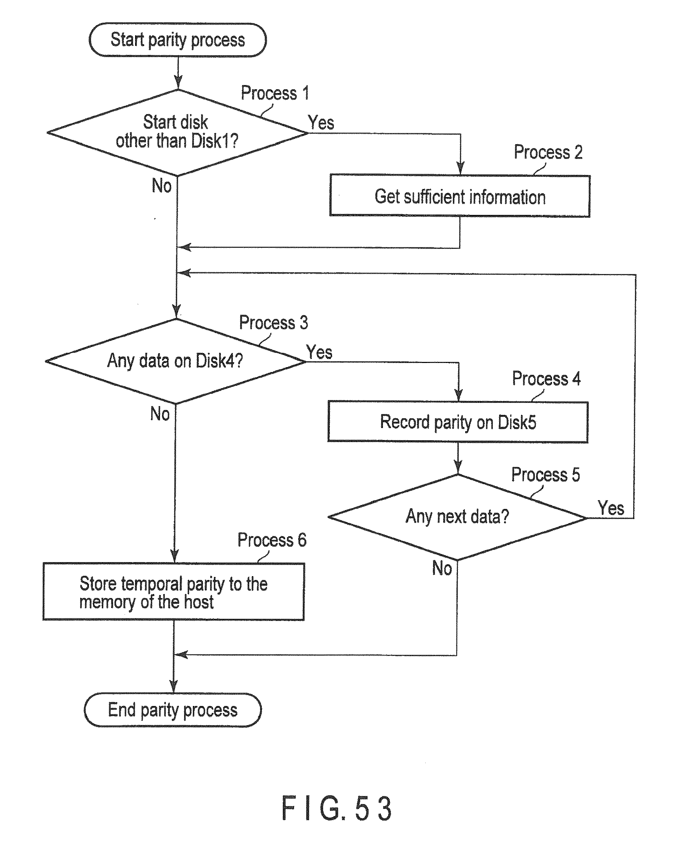

FIG. 53 shows the parity recording process.

Below is an explanation of the parity recording process for recording data from D2-1 to D2-n when the data are recorded with D1-n.

Process 1 and Process 2:

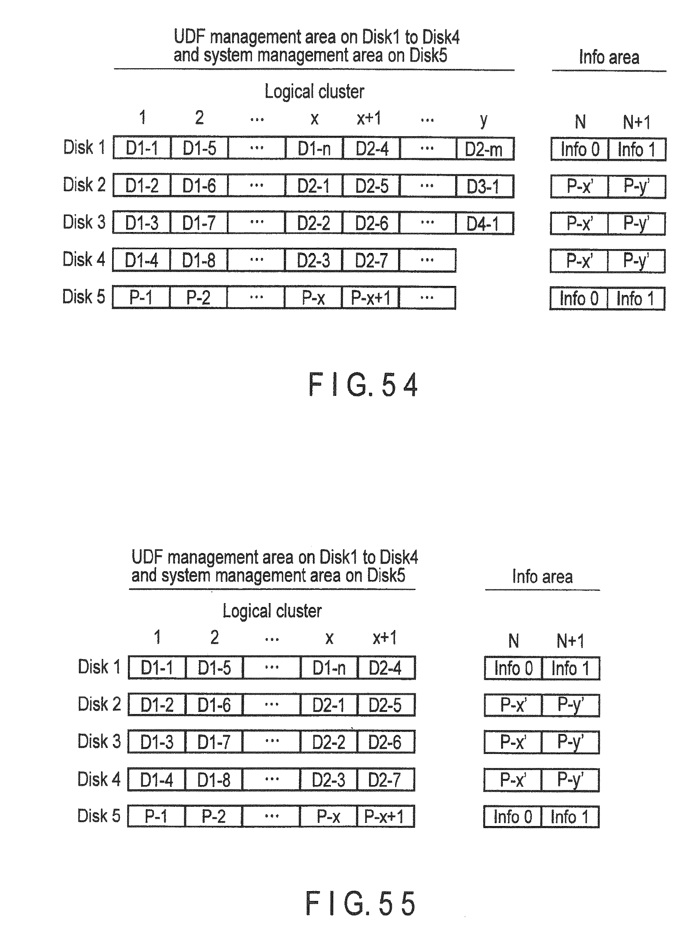

The aim is to determine whether the start disk is a disk other than 1. If the start disk is a disk other than, sufficient information is obtained (e.g., the logical cluster set number x in FIG. 54).

Process 3:

The aim is to check whether the objective cluster on Disk4 is already recorded.

Process 4:

If the objective cluster has already been recorded (e.g., the logical cluster $\times$ in FIG. 54), then the proprietary device driver orders parity to be recorded on Disk5.

Process 5:

If the next logical cluster exists (e.g., the logical cluster set number x+1 in FIG. 54), then go to process 3.
If the next logical cluster does not exist (e.g., the logical cluster set number x+1 in FIG. 55), then go to end parity process.

Process 6:

When the objective cluster on Disk4 is not recorded (e.g., the logical cluster y in FIG. 54), the proprietary device driver calculates the temporal parity and requests the host to store the temporal parity to the memory of the host.

H.3.1.5 Recording to the media set

The proprietary device driver orders recording of assigned divided recording data block to each drive. According to this operation, each drive records the assigned divided recording data block to each disk.

H.3.2 Data reproduction for parity disk type

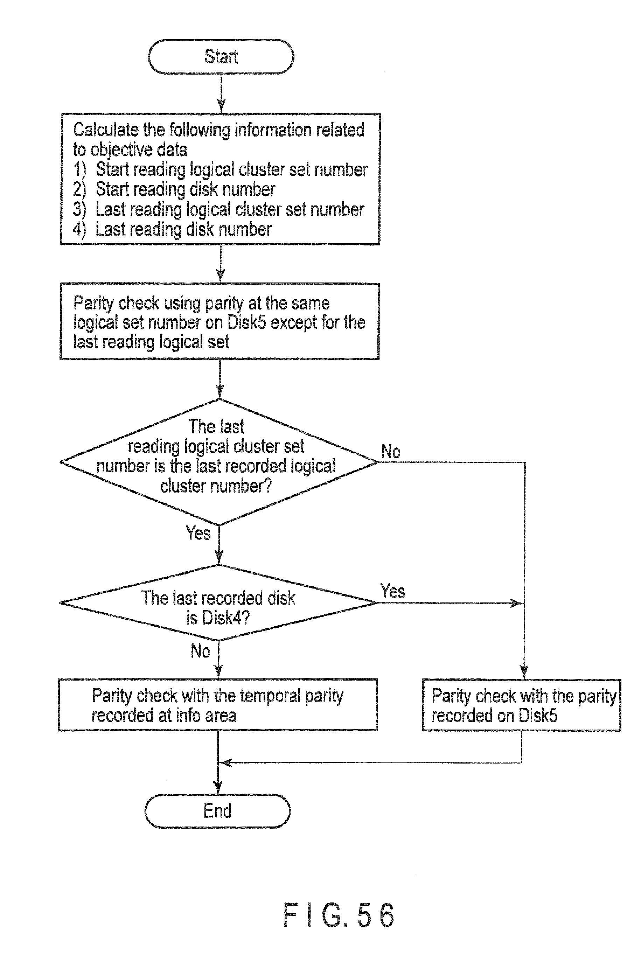

FIG. 56 shows the data reproduction process for the parity disk type.

H.3.2.1 Calculation of information for objective data

When the file system requests data reproduction, the proprietary device driver calculates the following information for the objective data in the media set from the logical block address and its size requested by the file system:

1) Start reading logical cluster set number;
2) Start reading disk number;
3) Last reading logical cluster set number; and
4) Last reading disk number.

H.3.2.2 Parity check for recorded data except for the last reading logical cluster set

The proprietary device driver checks parity using the parity recorded on Disk5 except for the last reading logical cluster set.

H.3.2.3 Parity check for recorded data for the last reading logical cluster set

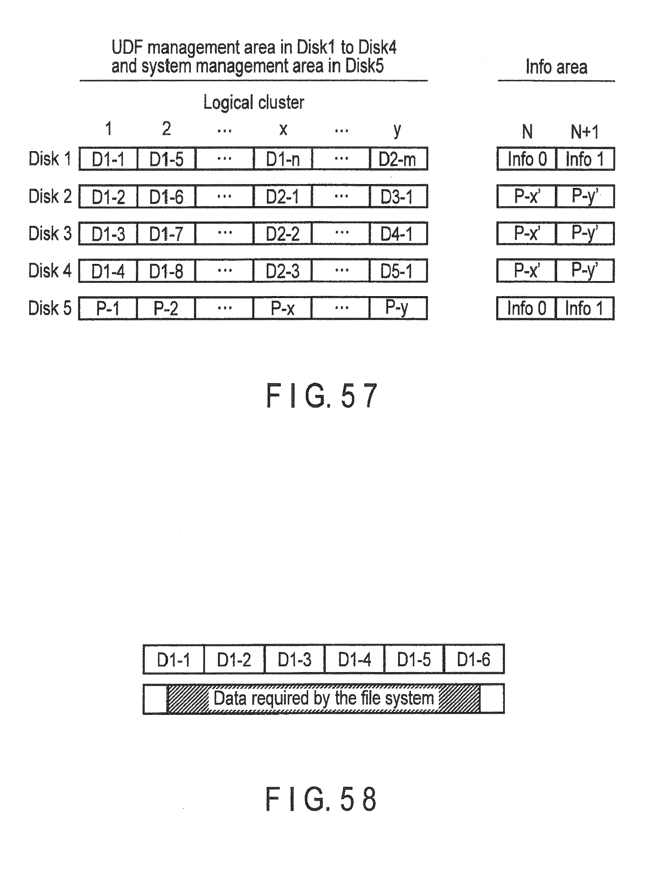

When the last reading logical cluster set number x is smaller than the last recorded logical cluster number in the media set, the proprietary device driver checks parity with the parity P-x (see FIG. 57).
If the last reading logical cluster set number y is the same as the last recorded logical cluster number in the media set and also if the last recorded disk is Disk4, the proprietary device driver checks parity with the parity recorded on Disk5 (see FIG. 57).
If the last reading logical cluster set number y is the same as the last recorded logical cluster number in the media set and also if the last recorded disk is not Disk4, the proprietary device driver checks parity with the temporal parity P-y' recorded in the info area (see FIG. 54).

H.3.2.4 Data reproduction

Data are reproduced according to the above address information described in H.3.2.1. The data are recorded in units of logical clusters, as shown in FIG. 52, therefore the proprietary device driver orders D1-1, D1-2, DI-3, D1-4, and D1-5 to be read and connects the data as shown in FIG. 58.
FIG. 58 shows the proprietary device driver sends the data requested by the file system.

H.4 Treatment of data recording fails

If the data recording fails such as the electric power source down, disconnecting of cables between the system and the host, occurred during the data recording, the optical disk drives usually can not recognize the disks even though the user turns the electric power or connects cables between the system and the host again.

Although the data recording fails occurred, the proprietary device driver can read the VAT logical block address recorded before the data recording fails and the VAT information. Therefore the system can reproduce the data recorded before the data recording fails.

Appendix <Annex B>:(informative)

Address conversion

The logical block address number X operated by the file system in decimal is converted to the disk number, the logical cluster set number on each disk, and the logical block address number on each disk in accordance with the following formulas.
Disk number:

$$\text{Int } (\text{mod}(X, 4 \times 32)/32) + 1.$$

Logical cluster set number on each disk:

$$\text{Int } (X/(4 \times 32)) + k + 21,$$

Logical block address number on each disk:

$$\text{mod } (X, 32) + \text{INT } (XI (32 \times 4)) \times 32 + 32 \times (k + 21).$$

Here, k is the logical cluster number of the info area that the user selects.
Address conversion from the logical block address number Y on each disk and the disk number Z to the logical block address number operated by the file system is done by using the following formulas Logical block address number operated by the file system:

$$\text{INT } (Y - 32 \times (k+21)) / 32) \times 32 \times 4 + (Z - 1) \times 32 + \text{mod}(Y, 32)$$

The following is a summary of the embodiment.

(1) Each of the five optical disks includes area storing medium IDs being identification information items peculiar to the respective optical disks and the cassette ID being identification information peculiar to the cassette. The cassette includes an RFID storing the medium IDs being identification information items peculiar to the five respective optical disks, and the cassette ID being identification information peculiar to the cassette. The information recorded on the RFID is not rewritable after shipping. When data is recorded or played back, the information processing system determines that the cassette is a proper cassette and permits recording and playback, when a set of the cassette ID and the medium IDs recorded on the RFID agree with the cassette ID and medium IDs stored in all the disks. The information processing system determines that the cassette is an improper cassette, and prohibits recording and playback, when they do not agree.

(2) Each of the optical disks includes area storing medium IDs being identification information items peculiar to the optical disks and the cassette ID being identification information peculiar to the cassette. The cassette includes an RFID storing the encoded medium IDs being identification information items peculiar to the optical disks, and the encoded cassette ID being identification information peculiar to the cassette. The information recorded on the RFID is rewritable after shipping. When data is recorded or played back, the information processing system decodes a set of the cassette ID and the medium IDs recorded on the RFID, and determines that the cassette is a proper cassette and permits recording and playback, when the set of the decoded cassette ID and the decoded medium agree with the cassette ID and medium IDs stored in all the disks. The information processing system determines that the cassette is an improper cassette, and prohibits recording and playback, when they do not agree.

(3) Each of the optical disks includes area storing medium IDs being identification information items peculiar to the optical disks. The cassette includes an RFID storing the encoded cassette ID being identification information peculiar to the cassette. The information recorded on the RFID is rewritable after shipping. When data is recorded or played back, the information processing system transmits the cassette ID recorded on the RFID and the medium IDs recorded on all the disks to the management server. The management server decodes the cassette ID, and stores a shipment management list (proper list). The management server checks the cassette ID and the medium IDs included in the proper list with the cassette ID and the medium IDs transmitted from the information processing system. When the IDs agree, the management server determines that the cassette is a proper cassette, and transmits permission information to permit recording and playback. When the IDs do not agree, the management server determines that the cassette is an improper cassette, and transmits prohibition information to prohibit recording and playback. The information processing system performs recording and playback when it receives permission information, and does not perform recording and playback when it receives prohibition information.

(4) In the above items (1) and (2), the information processing system notifies the management server of improper cassette determination, based on the improper cassette determination.

(5) In the above items (1), (2), (3), and (4), rewritable optical disks are used. The information processing system formats the optical disks contained in the cassette all together, encodes the format date-and-time information and records the information on the optical disks.

**Claims**

1. An information processing method executed on an information processing apparatus configured to process recording data, the method **characterized by** comprising:

dividing the recording data into a plurality of recording data blocks;
recording management information on corresponding first management regions in n storage media, the n storage media comprising a first storage medium to an nth storage medium, wherein n comprises an integer equal to or larger than 2; and
recording the recording data blocks on corresponding second management regions of the n storage media by a controller configured to control the information processing apparatus,
wherein the management information recorded on the n first management regions of the n storage media comprises medium peculiar information of the n storage media and cartridge peculiar information of a cartridge configured to store the n storage media.

2. The method of Claim 1, **characterized in that** the controller is further configured to control:

recording the management information on corresponding first management regions in n+1 storage media, the n+1 storage media comprising a first storage medium to an n+1 storage medium;
recording different recording data blocks in the recording data blocks on the respective second management regions of the n storage media, among corresponding second management regions of the n-1 storage media; and
recording parity data of the recording data blocks on a second management region of the (n+1)th storage medium;
wherein the management information recorded on the first management regions of the n+1 storage media comprises medium peculiar information of the n+1 storage media and cartridge peculiar information of a cartridge configured to store the n+1 storage medium.

3. The method of Claim 2, **characterized in that** the management information recorded on the first management regions of the n+1 storage media comprises information indicating whether the parity data is recorded or not.

4. The method of Claim 3, **characterized in that** the controller is further configured to record information indicating that the parity data has been recorded on the first management regions of the n+1 storage media.

5. The method of Claim 1, **characterized in that** the controller is further configured to control dividing the recording data into the recording data blocks, wherein each recording data block comprises 64 kB.

6. The method of Claim 1, **characterized in that** the controller is further configured to control generating parity data from n recording data blocks recorded on n corresponding clusters of the n storage media.

7. The method of Claim 4, **characterized in that** the controller is further configured to control, when x recording data blocks equal to or larger than 1 and less than n are recorded on a corresponding clusters of a storage media, x comprising an integer equal to or larger than 1:

generating a primary parity from the x recording data blocks;
recording the x recording data blocks; and
recording the primary parity.

8. The method of Claim 7, **characterized in that** the controller is further configured to control recording the primary parity on the first management region of at least one storage medium.

9. The method of Claim 8, **characterized in that** the controller is further configured to control recording position information indicating recording regions of the recording data blocks less than n, which serve as a source of generating the primary parity, on the first management region of at least one storage medium.

10. The method of Claim 9, **characterized in that** the controller is further configured to control recording the position information on the first management regions of the two storage media comprising the first storage medium and the n+1 storage medium, and recording the primary parity on the first management regions of the storage media other than the two storage media.

11. The method of Claim 10, **characterized in that** the controller configured to further control:

recording a set of the n recording data blocks on a set of corresponding n clusters of the n storage media, when the recording data blocks are recorded;
recording left x recording data blocks less than n on corresponding x clusters of the x storage media, when the x recording data blocks are left; and
generating the primary parity from the x recording data blocks, and recording the primary parity.

12. The method of Claim 8, **characterized in that** the controller configured to further control:

when recording data blocks less than n-x are recorded on n-x clusters in a state where left x recording data blocks are recorded on the x clusters among the corresponding n clusters of the n storage media and no recording data blocks are recorded on n-x clusters among the n clusters, the control module controls generating a primary parity from the left x recording data blocks and the recording data blocks less than n-x, and recording the primary parity.

13. The method of Claim 8, **characterized in that** the controller is further configured to control, when recording data blocks larger than n-x are recorded on n-x clusters, the control module controls recording n-x recording data blocks among the recording data blocks larger than n-x on n-x clusters, and recording left b recording data blocks on corresponding b clusters of b storage media, generating a primary parity from the b recording data blocks, and recording the primary parity, when the b left recording data blocks is less than n, b comprising an integer equal to or larger than 1.

14. The method of Claim 8, **characterized in that** the controller is further configured to control recording the medium peculiar information items of the n+1 storage media and the cartridge peculiar information of the cartridge containing the n+1 storage media on a first region of each of the first management regions, and recording the primary parity or the position information in a second region of each of the first management regions.

15. The method of Claim 9, **characterized in that** the controller is further configured to control recording information indicating the first storage medium in the first management region of the first storage medium among the n+1 storage media contained in the cartridge, recording information indicating the nth storage medium in the first management region of the nth storage medium, and recording information indicating the (n+1)th storage medium in the first management region of the (n+1)th storage medium.

16. The method of Claim 2, **characterized in that** the controller is further configured to control recording information indicating the first storage medium in the first management region of the first storage medium among the n+1 storage media contained in the cartridge, recording information indicating the nth storage medium in the first management region of the nth storage medium, and recording information indicating the (n+1)th storage medium in the first management region of the (n+1)th storage medium.

17. The method of Claim 8, **characterized in that** the controller is further configured to control recording information on a second region of the first management region, and the information indicates whether the primary parity is valid or invalid.

18. An information processing apparatus **characterized by** comprising:

an input module (10) configured to input recording data; and
a controller (30) configured to control:

dividing the recording data into a plurality of recording data blocks;
recording management information on corresponding first management regions in n storage media, the n storage media comprising a first storage medium to an nth storage medium, wherein n comprises an integer equal to or larger than 2; and
recording the recording data blocks on corresponding second management regions of the n storage media, wherein
the management information recorded on the n first management regions of the n storage media comprises medium peculiar information of the n storage media and cartridge peculiar information of a cartridge configured to store the n storage media.

In the case where non parity is applied

| | System management area | | UDF management area | Management area |
|---|---|---|---|---|
| Logical block address number | 0 ... 31 | 32 ... 351 | 352 ... N-32 | N-31 ... N |
| Disks 1, 2, 3, 4, and 5 | Header 1 | Vendor unique information | Data | Header 2 |

FIG. 1A

In the case where parity is applied

| | System management area | | | UDF management area | Management area |
|---|---|---|---|---|---|
| Logical block address number | 0 ... 31 | 32 ... 351 | 352 ... 32351 | 32352 ... N-32 | N-31 ... N |
| Disks 1, 2, 3, and 4 | Header | Vendor unique information | Info region | Data | Header 2 |
| Disks5 | Header | Vendor unique information | iInfo region | Parity | Header 2 |

FIG. 1B

In the case where non parity is applied

| | System management area | | | UDF management area | Management area |
|---|---|---|---|---|---|
| Logical block address number | 0 ... 31 | 32 ... 351 | 352 ... 383 | 384 ... N-32 | N-31 ... N |
| Disks 1, 2, 3, 4, and 5 | Header 1 | Vendor unique information | Header 2 | Data | Header 3 |

FIG. 1C

In the case where parity is applied

| Logical block address number | System management area | | | | | | | | | | | | UDF management area | | | Management area | | |
|---|---|---|---|---|---|---|---|---|---|---|---|---|---|---|---|---|---|---|
| | 0 | ... | 31 | 32 | ... | 351 | 352 | ... | 32351 | 32352 | ... | 32383 | 32384 | ... | N-32 | N-31 | ... | N |
| Disk1 to Disk4 | Header | | | Vendor unique information | | | Info area | | | Header | | | Data | | | Header 2 | | |
| Disk5 | Header | | | Vendor unique information | | | Info area | | | Header | | | Parity | | | Header 2 | | |

FIG. 1D

EP 2 763 024 A2

In the case where non parity is applied

| | System management area | | | | | | UDF management area | | |
|---|---|---|---|---|---|---|---|---|---|
| Logical block address number | 0 | ... | 31 | 32 | ... | 351 | 352 | ... | N-32 |
| Disks 1, 2, 3, 4, and 5 | Header 1 | | | Vendor unique information | | | Data | | |

FIG. 1E

In the case where parity is applied

| | System management area | | | | | | | | | UDF management area | | |
|---|---|---|---|---|---|---|---|---|---|---|---|---|
| Logical block address number | 0 | ... | 31 | 32 | ... | 32031 | 32032 | ... | 32351 | 32352 | ... | N-32 |
| Disks 1, 2, 3, and 4 | Header | | Info area | | Vendor unique information | | Data | | | | | |
| Disk 5 | | | | | | | Parity | | | | | |

FIG. 1F

| | System management area | | | | | | | | | UDF management area | | |
|---|---|---|---|---|---|---|---|---|---|---|---|---|
| Logical block address number | 0 | ... | 31 | 32 | ... | 64031 | 64032 | ... | 64351 | 64352 | ... | N |
| Disks 1, 2, 3, and 4 | Header | | Info area | | Vendor unique information | | Data | | | | | |
| Disk 5 | | | | | | | Parity | | | | | |

FIG. 1G

| | System management area | | | | | | | | UDF management area | | |
|---|---|---|---|---|---|---|---|---|---|---|---|
| Logical block address number | 0 | ... | 31 | 32 | ... | 128031 | 128032 | ... | 128351 | 128352 | ... | N |
| Disks 1, 2, 3, and 4 | Header | | | Info area | | | Vendor unique information | | | Data | | |
| Disk 5 | | | | | | | | | | Parity | | |

## F I G. 1 H

| | System management area | | | | | | | | UDF management area | | |
|---|---|---|---|---|---|---|---|---|---|---|---|
| Logical block address number | 0 | ... | 31 | 32 | ... | 163871 | 163872 | ... | 164191 | 164192 | ... | N |
| Disks 1, 2, 3, and 4 | Header | | | Info area | | | Vendor unique information | | | Data | | |
| Disk 5 | | | | | | | | | | Parity | | |

## F I G. 1 I

| | System management area | | | UDF management area | | |
|---|---|---|---|---|---|---|
| Logical block address number | 0 | ... | 31 | 32 | 33 | 34 | ... |
| Disks 1, 2, 3, and 4 | Header | | | Data | | | |
| Disk 5 | | | | | | | |

## F I G. 1 J

| | System management area | | | | | UDF management area | | | |
|---|---|---|---|---|---|---|---|---|---|
| Logical block address number | 0 | ... | 31 | 32 | ... 32031 | 32032 | 32033 | 32034 | ... |
| Disks 1, 2, 3, and 4 | Header | | | Info area | | Data | | | |
| Disk 5 | Header | | | Info area | | Parity | | | |

## FIG. 1K

| | System management area | | | | | UDF management area | | |
|---|---|---|---|---|---|---|---|---|
| Logical block address number | 0 | ... | 31 | 32 | ... 351 | 352 | ... | N |
| Disks 1, 2, 3, and 4 | Header 1 | | | Vendor unique information | | Data | | |

## FIG. 1L

Parity-applied

| Logical block address number | 0 | ... | 31 | 32 | ... | 32*(40*G+1)-1 | 32*(40*G+1) | ... | 32*(40*G+11)-1 | 32*(40*G+11) | ... | N |
|---|---|---|---|---|---|---|---|---|---|---|---|---|
| | System management area | | | | | | | | | UDF management area | | |
| Disks 1, 2, 3, and 4 | Header | | | Info area | | | Vendor unique information | | | Data | | |
| Disk 5 | | | | | | | | | | Parity | | |

FIG. 1M

42

| Relative byte position | Bit 7 | Bit 6 | Bit 5 | Bit 4 | Bit 3 | Bit 2 | Bit 1 | Bit 0 | Remarks |
|---|---|---|---|---|---|---|---|---|---|
| 0-15 | Identifier + Rev information | | | | | | | | |
| 16 | Reserved | | | | | | | Parity | |
| 17-19 | Reserved | | | | | | | | |
| 20-23 | Logical cluster size | | | | | | | | |
| | Reserved | | | | | | | | |
| 24-27 | Info region capacity | | | | | | | | |
| 28 | Disc number | | | | | | | | |
| 29-31 | Reserved | | | | | | | | |
| 32 | Cassette ID (11 byte) | | | | | | | | Cassette ID |
| : | : | | | | | | | | |
| 43 | Cassette ID (0 byte) | | | | | | | | |
| 44-47 | Reserved | | | | | | | | |
| 48 | Reserved | | | | Production code (bit 11...8) | | | | Medium ID1 |
| 49 | Production code (bit 7...0) | | | | | | | | |
| 50-51 | Reserved | | | | | | | | |
| 52 | Serial No. 11 byte | | | | | | | | |
| : | : | | | | | | | | |
| 63 | Serial No. 0 byte | | | | | | | | |
| 64 | Reserved | | | | Production code (bit 11...8) | | | | Medium ID2 |
| 65 | Production code (bit 7...0) | | | | | | | | |
| 50-51 | Reserved | | | | | | | | |
| 68 | Serial No. 11 byte | | | | | | | | |
| : | : | | | | | | | | |
| 79 | Serial No. 0 byte | | | | | | | | |
| 80 | Reserved | | | | Production code (bit 11...8) | | | | Medium ID3 |
| 81 | Production code (bit 7...0) | | | | | | | | |
| 50-51 | Reserved | | | | | | | | |
| 84 | Serial No. 11 byte | | | | | | | | |
| : | : | | | | | | | | |
| 95 | Serial No. 0 byteyte | | | | | | | | |
| 96 | Reserved | | | | Production code (bit 11...8) | | | | Medium ID4 |
| 97 | Production code (bit 7...0) | | | | | | | | |
| 50-51 | Reserved | | | | | | | | |
| 100 | Serial No. 11 byte | | | | | | | | |
| : | : | | | | | | | | |
| 111 | Serial No. 0 byte | | | | | | | | |
| 112 | Reserved | | | | Production code (bit 11...8) | | | | Medium ID5 |
| 113 | Production code (bit 7...0) | | | | | | | | |
| 50-51 | Reserved | | | | | | | | |
| 116 | Serial No. 11 byte | | | | | | | | |
| : | : | | | | | | | | |
| 127 | Serial No. 0 byte | | | | | | | | |
| 128-61439 | Reserved | | | | | | | | |
| 61440-61441 | Vendor code | | | | | | | | |
| 61442-65535 | Vendor unique data | | | | | | | | |

FIG. 2

Corresponding areas

| | Cluster | | | | | |
|---|---|---|---|---|---|---|
| Disk 1 | 1 | 6 | 11 | 16 | 21 | 26 |
| Disk 2 | 2 | 7 | 12 | 17 | 22 | 27 |
| Disk 3 | 3 | 8 | 13 | 18 | 23 | 28 |
| Disk 4 | 4 | 9 | 14 | 19 | 24 | 29 |
| Disk 5 | 5 | 10 | 15 | 20 | 25 | 30 |

In the case where non parity is applied

## F I G. 3 A

Corresponding areas

| | Cluster | | | | | |
|---|---|---|---|---|---|---|
| Disk 1 | 1 | 5 | 9 | 13 | 17 | 21 |
| Disk 2 | 2 | 6 | 10 | 14 | 18 | 22 |
| Disk 3 | 3 | 7 | 11 | 15 | 19 | 23 |
| Disk 4 | 4 | 8 | 12 | 16 | 20 | 24 |
| Disk 5 | P0 | P1 | P2 | P3 | P4 | P5 |

In the case where parity is applied

## F I G. 3 B

Position of recording Info data     Corresponding areas

| | Info area | |
|---|---|---|
| Disk 1 | Recorded | Info data |
| Disk 2 | Recorded | Temporal parity |
| Disk 3 | Recorded | Temporal parity |
| Disk 4 | Recorded | Temporal parity |
| Disk 5 | Recorded | Info data |

## F I G. 4

| Relative byte position | Bit 7 | Bit 6 | Bit 5 | Bit 4 | Bit 3 | Bit 2 | Bit 1 | Bit 0 |
|---|---|---|---|---|---|---|---|---|
| 0-31 | Identifier + Rev information | | | | | | | |
| 32-47 | Reserved | | | | | | | |
| 48 | Target logical cluster (bit 31...24) | | | | | | | |
| 49 | Target logical cluster (bit 23...16) | | | | | | | |
| 50 | Target logical cluster (bit 15...8) | | | | | | | |
| 51 | Target logical cluster (bit 7...0) | | | | | | | |
| 52-55 | Reserved | | | | | | | |
| 56 | Recorded last disc | | | | | | | |
| 57 | Temporal parity valid/invalid | | | | | | | |
| 58-65535 | Reserved | | | | | | | |

FIG. 5

Application
OS ⟩ Host
File System
Exclusive driver

Firm
Drive 1 ··· Drive 5 ⟩ System

FIG. 6

**EP 2 763 024 A2**

F I G. 7

F I G. 8

46

UDF management area

Logical cluster

|  | i | i+1 | i+2 | i+3 |
|---|---|---|---|---|
| Disk 1 | | | D1-5 | |
| Disk 2 | | D1-1 | D1-6 | |
| Disk 3 | | D1-2 | | |
| Disk 4 | | D1-3 | | |
| Disk 5 | | D1-4 | | |

Corresponding areas

FIG. 9

Data composition  | D1-1 | D1-2 | D1-3 | D1-4 | D1-5 | D1-6 |

Playback data transmitted to the host

FIG. 10

Start record processing

Receive recording data — A.3.1.1

Prepare divided data items — A.3.1.2

Assign divided data items to recording areas — A.3.1.3

Calculate parity — A.3.1.4

Record divided data items on media set — A.3.1.5

End record processing

FIG. 11

FIG. 12

FIG. 13

```
                    ┌─────────────────────┐
                    │    Receive eject    │
                    └─────────────────────┘
                              │
                              ▼
                         ╱─────────╲            A.3.1.6.a
                    ╱─────────────────────╲
                 ╱      Last disk of          ╲      No
                ⟨  recorded last logical cluster ⟩─────────────┐
                 ╲        is Disk 4          ╱                  │      A.3.1.6.b
                    ╲─────────────────────╱                    │
                         ╲─────────╱                           ▼
                        Yes  │                    ┌──────────────────────────┐
                             │                    │   Record Temporal parity │
                             │                    └──────────────────────────┘
                             │                           │
                             │◄──────────────────────────┘
                             ▼
            ┌──────────────────────────────────────┐
            │ Management information in Info area   │──A.3.1.6.c
            └──────────────────────────────────────┘
                             │
                             ▼
            ┌──────────────────────────────────────┐
            │          Eject media set             │──A.3.1.7
            └──────────────────────────────────────┘
                             │
                             ▼
                    ┌─────────────────────┐
                    │        Eject        │
                    └─────────────────────┘
```

# F I G. 1 4

Read request

Calculate following information
for target data
1. Start logical address
2. Start disk
3. End logical address
4. End disk

~A.3.2.1

Perform parity check by using parity
located in the same logical address
of Disk 5 other than the end logical
address

~A.3.2.2

A.3.2.3.a

End Logical
address = Recorded last
logical address

No

Yes

A.3.2.3.b

Recorded last disk
= Disk 4

Yes

A.3.2.3.e

Check is possible with data of
end logical address and parity

No

A.3.2.3.c

Is parity in Info area
usable?

No

Yes    A.3.2.3.d    A.3.2.3.f

Perform parity check with parity
of Info area of latest Rev

Not perform parity check
for end logical address

End

FIG. 15

UDF management area          Info area

Logical cluster

|  | 0 | 1 | ⋯ | x | ⋯ | y |  |  | N | N+1 | ⋯ | N+i |
|---|---|---|---|---|---|---|---|---|---|---|---|---|
| Disk 1 | D1-1 | D1-5 | ⋯ | D1-n | ⋯ | D2-m |  | Disk 1 | Info 0 | Info 1 |  |  |
| Disk 2 | D1-2 | D1-6 | ⋯ | D2-1 | ⋯ | D3-1 |  | Disk 2 | P-x' | P-y' |  |  |
| Disk 3 | D1-3 | D1-7 | ⋯ | D2-2 | ⋯ | D4-1 |  | Disk 3 | P-x' | P-y' |  |  |
| Disk 4 | D1-4 | D1-8 | ⋯ | D2-3 | ⋯ | D5-1 |  | Disk 4 | P-x' | P-y' |  |  |
| Disk 5 | P-0 | P-1 | ⋯ | P-x | ⋯ | P-y |  | Disk 5 | Info 0 | Info 1 |  |  |

FIG. 16

| | Management area | | UDF management area | | | | |
|---|---|---|---|---|---|---|---|
| Logical block address number | 0 | 31 | 32 | 33 | 34 | 35 | |
| Disks 1, 2, 3, 4, and 5 | Header | | Data | | | | |

FIG. 17A

| | Management area | | | UDF management area | | | | |
|---|---|---|---|---|---|---|---|---|
| Logical block address number | 0 | 31 | 32 | 32031 | 32032 | 32033 | 32034 | 32035 |
| Disks 1, 2, 3, and 4 | Header | | Info area | | Data | | | |
| Disk 5 | Header | | Info area | | Parity | | | |

FIG. 17B

| | Management area | | | | UDF management area | | |
|---|---|---|---|---|---|---|---|
| Logical block address number | 0 | 31 | 32 | 32031 | 32032 | 32033 | |
| Disks 1, 2, 3, 4, and 5 | Header | | Change | | Data | | |

FIG. 18A

| | Management area | | | | | | UDF management area | | | |
|---|---|---|---|---|---|---|---|---|---|---|
| Logical block address number | 0 | 31 | 32 | 32031 | 32032 | 64031 | 64032 | 64033 | 64034 | |
| Disks 1, 2, 3, and 4 | Header | | Change | | Info area | | Data | | | |
| Disk 5 | Header | | Change | | Info area | | Parity | | | |

F I G. 1 8 B

EP 2 763 024 A2

| Relative byte position | Bit 7 | Bit 6 | Bit 5 | Bit 4 | Bit 3 | Bit 2 | Bit 1 | Bit 0 | Remarks |
|---|---|---|---|---|---|---|---|---|---|
| 0-15 | Identifier + Rev information | | | | | | | | |
| 16 | Reserved | | | | | | | Parity | |
| 20-23 | Logical cluster size | | | | | | | | |
| 27-31 | Info area capacity | | | | | | | | |
| 33 | Disk number | | | | | | | | |
| 51 | Cassette ID (12 byte) | | | | | | | | Cassette ID |
| ⋮ | ⋮ | | | | | | | | |
| 63 | Cassette ID (0 byte) | | | | | | | | |
| 64 | Reserved | | | | Production code (bit 11...8) | | | | Mediuml D1 |
| 65 | Production code (bit 7...0) | | | | | | | | |
| 66 | Serial No. 12 byte | | | | | | | | |
| ⋮ | ⋮ | | | | | | | | |
| 79 | Serial No. 0 byte | | | | | | | | |
| 80 | Reserved | | | | Production code (bit 11...8) | | | | Medium ID2 |
| 81 | Production code (bit 7...0) | | | | | | | | |
| 82 | Serial No. 12 byte | | | | | | | | |
| ⋮ | ⋮ | | | | | | | | |
| 95 | Serial No. 0 byte | | | | | | | | |
| 96 | Reserved | | | | Production code (bit 11...8) | | | | Medium ID3 |
| 97 | Production code (bit 7...0) | | | | | | | | |
| 98 | Serial No. 12 byte | | | | | | | | |
| ⋮ | ⋮ | | | | | | | | |
| 111 | Serial No. 0 byte | | | | | | | | |
| 112 | Reserved | | | | Production code (bit 11...8) | | | | Medium ID4 |
| 113 | Production code (bit 7...0) | | | | | | | | |
| 114 | Serial No. 12 byte | | | | | | | | |
| ⋮ | ⋮ | | | | | | | | |
| 127 | Serial No. 0 byte | | | | | | | | |
| 128 | Reserved | | | | Production code (bit 11...8) | | | | Medium ID5 |
| 129 | Production code (bit 7...0) | | | | | | | | |
| 130 | Serial No. 12 byte | | | | | | | | |
| ⋮ | ⋮ | | | | | | | | |
| 143 | Serial No. 0 byte | | | | | | | | |
| 512-527 | Information recorded by vendor without agreement | | | | | | | | |
| ⋮ | Reserved | | | | | | | | |
| 1000 | Defective address (1) | | | | | | | | |
| 1001 | Defective address (2) | | | | | | | | |
| ⋮ | ⋮ | | | | | | | | |
| 1999 | Defective address (1000) | | | | | | | | |
| 65535 | Reserved | | | | | | | | |

FIG. 19

FIG.20

FIG.21

```
                    ┌─────────────────────┐
                    │        Start        │
                    └─────────────────────┘
                               │
                               ▼
          ┌──────────────────────────────────────┐
          │      Insert cassette into changer     │──── ST11
          └──────────────────────────────────────┘
                               │
                               ▼
          ┌──────────────────────────────────────┐
          │    Obtain RFID information of cassette │──── ST12
          └──────────────────────────────────────┘
                               │
                               ▼
          ┌──────────────────────────────────────┐
          │         Mount disks to drives          │──── ST13
          └──────────────────────────────────────┘
                               │
                               ▼
          ┌──────────────────────────────────────┐
          │  Obtain medium IDs and cassette ID from │──── ST14
          │  five drives                           │
          └──────────────────────────────────────┘
                               │
                               ▼
```

Do medium IDs for five optical disks and cassette ID read from RFID agree with medium IDs and cassette ID read from five optical disks?   ST15

No → Prohibit data recording and playback   ST17

→ Display "IMPROPER CASSETTE"   ST18

→ Eject cassette   ST19

Yes → Permit data recording and playback   ST16

End

FIG.22

Start

Insert cassette into changer — ST11

Decode RFID information of cassette — ST12

Mount disks to drives — ST13

Obtain medium IDs and cassette ID from five drives — ST14

ST15
Do medium IDs for five optical disks and cassette ID read from RFID agree with medium IDs and cassette ID read from five optical disks?

No

ST17
Prohibit data recording and playback

ST18
Display "IMPROPER CASSETTE"

ST19
Eject cassette

ST20
Notify management group of cassette ID and medium IDs

Yes     ST16
Permit data recording and playback

End

FIG. 23

Start

Insert cassette into changer — ST31

Mount disks to drives — ST32

Obtain medium IDs from five drives — ST33

Transmit cassette ID and medium IDs
of five disks to the management center — ST34

ST36
Do the IDs agree with management list of management center? — No

Yes — ST37

Receive permission signal from center

ST38

Permit data recording and playback

ST39
Receive prohibition signal from center

ST40
Prohibit data recording and playback

ST41
Display "IMPROPER CASSETTE"

ST42
Eject cassette

End

F I G. 2 4

| Code area | User information area |
|-----------|---------------------|

# FIG.25

| RFID code | Cassette ID/Disk IDs |
|-----------|---------------------|

# FIG.26

| Code (cassette ID) | Disk ID |
|--------------------|---------|

# FIG.27

FIG.28

F I G. 29

OD1 | 1 | Data 1-1 (File 1-1) | Data 2-1 (File 2-1) | Data 3-1 (File 3-1)

OD 2 | 1 | Data 1-2 (File 1-2) | Data 2-2 (File 2-2) | Data 3-2 (File 3-2)

OD 3 | 0 | Data 1-3 (File 1-3) | Data 2-3 (File 2-3) | Data 3-3 (File 3-3)

OD 4 | 1 | Data 1-4 (File 1-4) | Data 2-4 (File 2-4) | Data 3-4 (File 3-4)

Divided information data files

OD 5 | 1 | Data 1-5 (File 1-5) | Data 2-5 (File 2-5) | Data 3-5 (File 3-5)

Parity data files

Four bits of information data items and parity bit obtained from them

FIG. 30

| Relative byte position | Bit 7 | Bit 6 | Bit 5 | Bit 4 | Bit 3 | Bit 2 | Bit 1 | Bit 0 | Remarks |
|---|---|---|---|---|---|---|---|---|---|
| 0 | (MSB) | | | | | | | | |
| : | | | Identifier + Rev information | | | | | | |
| 15 | | | | | | | | (LSB) | |
| 16 | | | | Reserved | | | | Parity | |
| 17 | | | | Reserved | | | | | |
| 18 | | | | Reserved | | | | | |
| 19 | | | | Reserved | | | | | |
| 20 | (MSB) | | | | | | | | |
| 21 | | | | Logical cluster size | | | | | |
| 22 | | | | | | | | | |
| 23 | | | | | | | | (LSB) | |
| 24 | (MSB) | | | | | | | | |
| 25 | | | | Info area capacity | | | | | |
| 26 | | | | | | | | | |
| 27 | | | | | | | | (LSB) | |
| 28 | | | | Disk Number | | | | | |
| 29 | | | | Reserved | | | | | |
| 30 | | | | Reserved | | | | | |
| 31 | | | | Reserved | | | | | |
| 32 | (MSB) | | | | | | | | Cassette ID |
| : | | | | Cassette ID | | | | | |
| 43 | | | | | | | | (LSB) | |
| 44-47 | | | | Reserved | | | | | |
| 48-63 | | | | Medium ID | | | | | Medium ID1 |
| 64-79 | | | | Medium ID | | | | | Medium ID2 |
| 80-95 | | | | Medium ID | | | | | Medium ID3 |
| 96-111 | | | | Medium ID | | | | | Medium ID4 |
| 112-127 | | | | Medium ID | | | | | Medium ID5 |
| 128-61439 | | | | Reserved | | | | | |
| 61440 | (MSB) | | | Vendor code | | | | | |
| 61441 | | | | | | | | (LSB) | |
| 61442-65535 | | | | Vendor unique data | | | | | |

# F I G. 3 1

| Relative byte position | Bit 7 | Bit 6 | Bit 5 | Bit 4 | Bit 3 | Bit 2 | Bit 1 | Bit 0 | Remarks |
|---|---|---|---|---|---|---|---|---|---|
| 0 | (MSB) | | | | | | | | |
| : | | | Identifier + Rev information | | | | | | |
| 31 | | | | | | | | (LSB) | |
| 32-47 | Reserved | | | | | | | | |
| 48 | (MSB) | | | | | | | | |
| : | | | Target logical cluster | | | | | | |
| 51 | | | | | | | | (LSB) | |
| 52-55 | Reserved | | | | | | | | |
| 56 | Recorded last disc | | | | | | | | |
| 57 | Temporal parity valid/invalid | | | | | | | | |
| 58-65535 | Reserved | | | | | | | | |

F I G. 3 2

| Relative byte position | Bit 7 | Bit 6 | Bit 5 | Bit 4 | Bit 3 | Bit 2 | Bit 1 | Bit 0 | Remarks |
|---|---|---|---|---|---|---|---|---|---|
| 0 | (MSB) | | | | | | | | Cassette ID |
| : | | | Cassette ID | | | | | | |
| 11 | | | | | | | | (LSB) | |
| 12-15 | Reserved | | | | | | | | |
| 16-31 | Medium ID | | | | | | | | Medium ID1 |
| 32-47 | Medium ID | | | | | | | | Medium ID2 |
| 48-63 | Medium ID | | | | | | | | Medium ID3 |
| 64-79 | Medium ID | | | | | | | | Medium ID4 |
| 80-95 | Medium ID | | | | | | | | Medium ID5 |
| 96 | Medium type | | | | | | | | |
| 97 | Reserved | | | | | | | | |
| 98 | (MSB) | | | | | | | | |
| 99 | | | Vendor code | | | | | (LSB) | |
| 100 | (MSB) | | | | | | | | |
| 101 | | | Production date (year) | | | | | (LSB) | Production date |
| 102 | Production date (month) | | | | | | | | |
| 103 | Production date (day) | | | | | | | | |
| 104-111 | Reserved | | | | | | | | |

F I G. 3 3

| Relative byte position | Bit 7 | Bit 6 | Bit 5 | Bit 4 | Bit 3 | Bit 2 | Bit 1 | Bit 0 | Remarks |
|---|---|---|---|---|---|---|---|---|---|
| 0 | Reserved | | | | (MSB) | | | | |
| 1 | Production code | | | | | | | (LSB) | |
| 2 | Reserved | | | | | | | | |
| 3 | Reserved | | | | | | | | |
| 4 | (MSB) | | | | | | | | |
| : | Serial No. | | | | | | | | |
| 15 | | | | | | | | (LSB) | |

F I G. 3 4

| | System management area | | | | | | | | | | UDF management area | | |
|---|---|---|---|---|---|---|---|---|---|---|---|---|---|
| Logical block address number | 0 | ... 31 | 32 | ... 351 | 352 | ... 671 | 672 | ... | 32× k+6 71 | 32× k+6 72 | ... | N |
| Disk 1 to Disk 5 | Header | | Reserved | | Vendor-specific information | | Info area | | | Data | | | |

F I G. 3 5

| Relative byte position | bit 7 | bit 6 | bit 5 | bit 4 | bit 3 | bit 2 | bit 1 | bit 0 | Remarks |
|---|---|---|---|---|---|---|---|---|---|
| 0 | Reserved | | | | (MSB) | | | | |
| 1 | Manufacturer code | | | | | | | (LSB) | |
| 2 to 3 | Reserved | | | | | | | | |
| 4 to 15 | (MSB) Serial number | | | | | | | (LSB) | |

F I G. 3 7

| | | Info area | | |
|---|---|---|---|---|
| Disk 1 | ... | Info data at one before the latest | Latest info data | Unrecorded |
| Disk 2 | ... | Info data at one before the latest | Latest info data | Unrecorded |
| Disk 3 | ... | Info data at one before the latest | Latest info data | Unrecorded |
| Disk 4 | ... | Info data at one before the latest | Latest info data | Unrecorded |
| Disk 5 | ... | Info data at one before the latest | Latest info data | Unrecorded |

F I G. 3 8

| Relative byte position | bit 7 | bit 6 | bit 5 | bit 4 | bit 3 | bit 2 | bit 1 | bit 0 | Remarks |
|---|---|---|---|---|---|---|---|---|---|
| 0 to 15 | (MSB) Parallel read/write identifier and revision number (LSB) | | | | | | | | |
| 16 | Reserved | | | | | | | Parity | |
| 17 to 19 | Reserved | | | | | | | | |
| 20 to 23 | (MSB) Logical cluster size (LSB) | | | | | | | | |
| 24 to 27 | (MSB) Info area size (LSB) | | | | | | | | |
| 28 | Disk order number | | | | | | | | |
| 29 to 31 | Reserved | | | | | | | | |
| 32 to 43 | (MSB) Cassette ID (LSB) | | | | | | | | |
| 44 to 47 | Reserved | | | | | | | | |
| 48 to 63 | Media ID | | | | | | | | Media ID 1 |
| 64 to 79 | Media ID | | | | | | | | Media ID 2 |
| 80 to 95 | Media ID | | | | | | | | Media ID 3 |
| 96 to 111 | Media ID | | | | | | | | Media ID 4 |
| 112 to 127 | Media ID | | | | | | | | Media ID 5 |
| 128 to 2 047 | Reserved | | | | | | | | |
| 2 048 to 4 097 | Copy of Anchor volume descriptor pointer | | | | | | | | |
| 4 098 to 61 439 | Reserved | | | | | | | | |
| 61 440 to 61 441 | (MSB) Vendor code (LSB) | | | | | | | | |
| 61 442 to 65 535 | Vendor-specific information 1 | | | | | | | | |

# FIG.36

| Relative byte position | bit 7 | bit 6 | bit 5 | bit 4 | bit 3 | bit 2 | bit 1 | bit 0 |
|---|---|---|---|---|---|---|---|---|
| 0 to 31 | (MSB)<br>Parallel read/write identifier and revision number<br>(LSB) | | | | | | | |
| 32 to 35 | (MSB)<br>VAT logical block address<br>(LSB) | | | | | | | |
| 36 to 32 767 | Reserved | | | | | | | |
| 32 768 to 65 535 | Vendor-specific information 2 | | | | | | | |

# FIG. 39

| | Logical cluster | | | | | | | | |
|---|---|---|---|---|---|---|---|---|---|
| | 0 | 1 | 2 | 3 | 4 | 5 | | n-1 | |
| Disk 1 | 1 | 6 | 11 | 16 | 21 | 26 | | n×5+1 | |
| Disk 2 | 2 | 7 | 12 | 17 | 22 | 27 | | n×5+2 | |
| Disk 3 | 3 | 8 | 13 | 18 | 23 | 28 | | n×5+3 | |
| Disk 4 | 4 | 9 | 14 | 19 | 24 | 29 | | n×5+4 | |
| Disk 5 | 5 | 10 | 15 | 20 | 25 | 30 | | n×5+5 | |

# FIG. 40

| | System management area | | | | | | | | | | UDF management area | | |
|---|---|---|---|---|---|---|---|---|---|---|---|---|---|
| Logical block address number | 0 | ... | 31 | 32 | ... | 351 | 352 | ... | 671 | 672 | ... | 32×k+671 | 32×k+672 | ... | N |
| Disk 1 to Disk 4 | Header | | | Reserved | | | Vendor-specific information | | Info area | | | Data | | |

FIG. 41A

| | System management area | | | | | | | | | | | | |
|---|---|---|---|---|---|---|---|---|---|---|---|---|---|
| Logical block address number | 0 | ... | 31 | 32 | ... | 351 | 352 | ... | 671 | 672 | ... | 32×k+671 | 32×k+672 | ... | N |
| Disk 5 | Header | | | Reserved | | | Vendor-specific information | | Info area | | | Parity | | |

FIG. 41B

| Relative byte position | bit 7 | bit 6 | bit 5 | bit 4 | bit 3 | bit 2 | bit 1 | bit 0 | Remarks |
|---|---|---|---|---|---|---|---|---|---|
| 0 to 15 | (MSB) Parallel read/write identifier and revision number (LSB) | | | | | | | | |
| 16 | Reserved | | | | | | | Parity | |
| 17 to 19 | Reserved | | | | | | | | |
| 20 to 23 | (MSB) Logical cluster size (LSB) | | | | | | | | |
| 24 to 27 | (MSB) Info area size (LSB) | | | | | | | | |
| 28 | Disk order number | | | | | | | | |
| 29 to 31 | Reserved | | | | | | | | |
| 32 to 43 | (MSB) Cassette ID (LSB) | | | | | | | | |
| 44 to 47 | Reserved | | | | | | | | |
| 48 to 63 | Media ID | | | | | | | | Media ID 1 |
| 64 to 79 | Media ID | | | | | | | | Media ID 2 |
| 80 to 95 | Media ID | | | | | | | | Media ID 3 |
| 96 to 111 | Media ID | | | | | | | | Media ID 4 |
| 112 to 127 | Media ID | | | | | | | | Media ID 5 |
| 128 to 2 047 | Reserved | | | | | | | | |
| 2 048 to 4 097 | Copy of Anchor volume descriptor pointer | | | | | | | | |
| 4 098 to 61 439 | Reserved | | | | | | | | |
| 61 440 to 61 441 | (MSB) Vendor code (LSB) | | | | | | | | |
| 61 442 to 65 535 | Vendor-specific information 1 | | | | | | | | |

FIG. 42

| Relative byte position | bit 7 | bit 6 | bit 5 | bit 4 | bit 3 | bit 2 | bit 1 | bit 0 | Remarks |
|---|---|---|---|---|---|---|---|---|---|
| 0 | Reserved | | | | (MSB) | | | | |
| 1 | Manufacturer code | | | | | | | (LSB) | |
| 2 to 3 | Reserved | | | | | | | | |
| 4 to 15 | (MSB) Disk serial number | | | | | | | (LSB) | |

# F I G. 4 3

| | | Info area | | |
|---|---|---|---|---|
| Disk 1 | . . . | Info data at one before the latest | Latest info data | Unrecorded |
| Disk 2 | . . . | Temporal parity at one before the latest | Latest temporal parity | Unrecorded |
| Disk 3 | . . . | Temporal parity at one before the latest | Latest temporal parity | Unrecorded |
| Disk 4 | . . . | Temporal parity at one before the latest | Latest temporal parity | Unrecorded |
| Disk 5 | . . . | Info data at one before the latest | Latest info data | Unrecorded |

# F I G. 4 4

| Relative byte position | bit 7 | bit 6 | bit 5 | bit 4 | bit 3 | bit 2 | bit 1 | bit 0 |
|---|---|---|---|---|---|---|---|---|
| 0 to 31 | (MSB) Parallel read/write identifier and revision number (LSB) | | | | | | | |
| 32 to 35 | (MSB) VAT logical block address (LSB) | | | | | | | |
| 36 to 47 | Reserved | | | | | | | |
| 48 to 51 | (MSB) Objective logical cluster number (LSB) | | | | | | | |
| 52 to 55 | Reserved | | | | | | | |
| 56 | Last recorded disk number | | | | | | | |
| 57 | Temporal parity indicator | | | | | | | |
| 58 to 32 767 | Reserved | | | | | | | |
| 32 768 to 65 535 | Vendor-specific information 2 | | | | | | | |

# FIG.45

| | Logical cluster | | | | | | | | |
|---|---|---|---|---|---|---|---|---|---|
| | 0 | 1 | 2 | 3 | 4 | 5 | | n-1 | |
| Disk 1 | 1 | 5 | 9 | 13 | 17 | 21 | | n×5+1 | |
| Disk 2 | 2 | 6 | 10 | 14 | 18 | 22 | | n×5+2 | |
| Disk 3 | 3 | 7 | 11 | 15 | 19 | 23 | | n×5+3 | |
| Disk 4 | 4 | 8 | 12 | 16 | 20 | 24 | | n×5+4 | |
| Disk 5 | P0 | P1 | P2 | P3 | P4 | P5 | | p(n-1) | |

# FIG.46

```
┌─────────────────────────────────────────┐
│  ┌───────────────────────────────┐       │──Host
│  │     Application software      │       │
│  └───────────────────────────────┘       │
│                  ↓                        │
│  ┌───────────────────────────────┐       │
│  │       Operating system        │       │
│  └───────────────────────────────┘       │
│                  ↓                        │
│  ┌───────────────────────────────┐       │
│  │         File system           │       │
│  └───────────────────────────────┘       │
│                  ↓                        │
│  ┌───────────────────────────────┐       │
│  │   Proprietary device driver   │       │
│  └───────────────────────────────┘       │
└─────────────────────────────────────────┘
                   │
┌──────────────────┼───────────────────────┐──System
│                  │            ┌────────┐  │
│                  │            ↓        │  │
│         ┌────────────┐     ┌────────────┐ │
│         │  Drive 1   │ ··· │  Drive 5   │ │
│         └────────────┘     └────────────┘ │
└──────────────────────────────────────────┘
```

# FIG. 47

```
        ╭──────────────────────────────╮
        │  Start of recording operation │
        ╰──────────────────────────────╯
                       ↓
    ┌──────────────────────────────────────┐
    │     Receiving of data to be recorded  │
    └──────────────────────────────────────┘
                       ↓
    ┌──────────────────────────────────────┐
    │            Dividing data              │
    └──────────────────────────────────────┘
                       ↓
    ┌──────────────────────────────────────┐
    │      Assignment of dividing data      │
    └──────────────────────────────────────┘
                       ↓
    ┌──────────────────────────────────────┐
    │        Recording to media set         │
    └──────────────────────────────────────┘
                       ↓
    ┌──────────────────────────────────────┐
    │         Recording of info data        │
    └──────────────────────────────────────┘
                       ↓
        ╭──────────────────────────────╮
        │   End of recording operation  │
        ╰──────────────────────────────╯
```

# FIG. 48

73

Logical cluster

| | i | i+1 | i+2 | i+3 |
|---|---|---|---|---|
| Disk 1 | ///// | ///// | D1-5 | D1-n |
| Disk 2 | ///// | D1-1 | D1-6 | |
| Disk 3 | ///// | D1-2 | ··· | |
| Disk 4 | ///// | D1-3 | ··· | |
| Disk 5 | ///// | D1-4 | ··· | |

# FIG. 4 9

| D1-1 | D1-2 | D1-3 | D1-4 | D1-5 | D1-6 |
|---|---|---|---|---|---|

| | Data required by file system | |
|---|---|---|

# FIG. 5 0

FIG. 51

FIG. 52

Start parity process

Process 1
Start disk other than Disk1?

Yes

No

Process 2
Get sufficient information

Process 3
Any data on Disk4?

Yes

No

Process 4
Record parity on Disk5

Process 5
Any next data?

Yes

No

Process 6
Store temporal parity to the memory of the host

End parity process

FIG. 53

FIG.54

FIG.55

```
                              ┌──────────────┐
                              │    Start     │
                              └──────┬───────┘
                                     │
                                     ▼
┌────────────────────────────────────────────────────┐
│ Calculate the following information related         │
│ to objective data                                   │
│ 1)  Start reading logical cluster set number        │
│ 2)  Start reading disk number                       │
│ 3)  Last reading logical cluster set number         │
│ 4)  Last reading disk number                        │
└────────────────────┬───────────────────────────────┘
                     │
                     ▼
┌────────────────────────────────────────────────────┐
│ Parity check using parity at the same              │
│ logical set number on Disk5 except for the         │
│ last reading logical set                           │
└────────────────────┬───────────────────────────────┘
                     │
                     ▼
               The last
         reading logical cluster set              No
        number is the last recorded logical  ─────────────┐
              cluster number?                               │
                     │ Yes                                  │
                     ▼                                      │
           The last recorded disk         Yes              │
                is Disk4?           ──────────────────┐    │
                     │ No                             │    │
                     ▼                                ▼    ▼
┌──────────────────────────────────┐   ┌─────────────────────────┐
│ Parity check with the temporal   │   │ Parity check with the   │
│ parity recorded at info area     │   │ parity recorded on Disk5 │
└────────────────┬─────────────────┘   └────────────┬────────────┘
                 │◄───────────────────────────────────┘
                 ▼
          ┌──────────────┐
          │     End      │
          └──────────────┘
```

# FIG. 56

UDF management area in Disk1 to Disk4
and system management area in Disk5

Info area

Logical cluster

|  | 1 | 2 | ... | x | ... | y |
|--------|------|------|-----|------|-----|------|
| Disk 1 | D1-1 | D1-5 | ... | D1-n | ... | D2-m |
| Disk 2 | D1-2 | D1-6 | ... | D2-1 | ... | D3-1 |
| Disk 3 | D1-3 | D1-7 | ... | D2-2 | ... | D4-1 |
| Disk 4 | D1-4 | D1-8 | ... | D2-3 | ... | D5-1 |
| Disk 5 | P-1 | P-2 | ... | P-x | ... | P-y |

|  | N | N+1 |
|--------|--------|--------|
| Disk 1 | Info 0 | Info 1 |
| Disk 2 | P-x' | P-y' |
| Disk 3 | P-x' | P-y' |
| Disk 4 | P-x' | P-y' |
| Disk 5 | Info 0 | Info 1 |

FIG. 57

| D1-1 | D1-2 | D1-3 | D1-4 | D1-5 | D1-6 |
|------|------|------|------|------|------|

Data required by the file system

FIG. 58

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Information Interchange. June 1997